# EUROPEAN PATENT APPLICATION

(11) **EP 4 834 719 A1**
(43) Date of publication of application: **04.11.2026**
(21) Application number: 24912244.1
(22) Date of filing: 04.12.2024
(51) Int. Cl.: B62D 21/14, B62D 7/09, B62D 7/10

(54) **WORK VEHICLE**

(30) Priority: 28.12.2023 JP 2023223359
(71) Applicant: KUBOTA CORPORATION, Osaka-shi, Osaka 530-0011 (JP)
(72) Inventor: SAKANO, Tomoyoshi, Sakai-shi, Osaka 590-0908 (JP); SOEJIMA, Masaru, Sakai-shi, Osaka 590-0908 (JP); HIBINO, Tsuyoshi, Sakai-shi, Osaka 590-0908 (JP); TAKEDA, Kazuya, Sakai-shi, Osaka 590-0908 (JP); KAWABATA, Masahiro, Sakai-shi, Osaka 590-0908 (JP)
(74) Representative: Cabinet Beau de Loménie
(86) International application number: PCT/JP2024/042821
(87) International publication number: WO 2025/142354

(57) **Abstract**

A working vehicle (1) includes a vehicle body (2), wheels including a left wheel (left front wheel 3LF, left rear wheel 3LB) provided leftward of the vehicle body and a right wheel (right front wheel 3RF, right rear wheel 3R) provided rightward of the vehicle body, a steering system (60) to change orientations of the wheels, and a distance changing system (80) to increase a distance between the left wheel and the right wheel when steering is performed by the steering system.

## Description

### Technical Field

The present invention relates to working vehicles to perform work such as agricultural work.

### Background Art

A working vehicle (tractor) disclosed in Patent Literature 1 is known. The working vehicle disclosed in Patent Literature 1 includes a steering device to steer a left front wheel and a right front wheel, left and right brakes to brake a left rear wheel and a right rear wheel, and a controller configured to actuate the left and right brakes independently using an actuator.

### Citation List

### Patent Literature

PTL 1: Japanese Unexamined Patent Application Publication No. 2020-043837

### Summary of Invention

### Technical Problem

In the above-described working vehicle, when the steering angle of the front wheels is equal to or more than a predetermined angle, the controller causes the actuator to actuate the brake for the rear wheel that is on the inside of a turn to cause the machine body to make a sharp turn. However, since the front wheels are arranged in the vicinity of the vehicle body, it is difficult to increase the steering angle of the front wheels.

The present invention was made in view of the above-described issue, and an object of the present invention is to provide a working vehicle capable of increasing a steering angle.

### Solution to Problem

A working vehicle according to an example embodiment of the present invention includes a vehicle body, wheels including a left wheel provided leftward of the vehicle body and a right wheel provided rightward of the vehicle body, a steering system to change orientations of the wheels, and a distance changing system to increase a distance between the left wheel and the right wheel when steering is performed by the steering system.

The left wheel may include a left front wheel and a left rear wheel. The right wheel may include a right front wheel and a right rear wheel. The steering system may be configured to change orientations of the left front wheel and the right front wheel when performing the steering. The distance changing system may be configured to increase a distance between the left front wheel and the right front wheel when the steering is performed by the steering system.

The left wheel may include a left front wheel and a left rear wheel. The right wheel may include a right front wheel and a right rear wheel. The steering system may be configured to change orientations of the left rear wheel and the right rear wheel when performing the steering. The distance changing system may be configured to increase a distance between the left rear wheel and the right rear wheel when the steering is performed by the steering system.

The steering system may be configured to change the orientations of the left front wheel and the right front wheel and the orientations of the left rear wheel and the right rear wheel when performing the steering. The distance changing system may be configured to, when the steering is performed by the steering system, increase the distance between the left front wheel and the right front wheel and the distance between the left rear wheel and the right rear wheel.

The steering system may be configured to, when the vehicle body travels, change orientations of the left wheel and the right wheel such that a front portion of each of the left and right wheels in a direction of travel moves away from the vehicle body. The distance changing system may be configured to increase the distance using a reaction force from a ground that results from changes in the orientations of the left wheel and the right wheel changed by the steering system.

The distance changing system may include at least one actuator to move the left wheel and the right wheel in a vehicle body width direction, and may be configured to increase the distance using the reaction force and a force of the at least one actuator.

The working vehicle may include a power supply apparatus to generate power to rotate the wheels. The wheels may include steered wheels to be changed in orientation by the steering system when the vehicle body turns and non-steered wheels not to be changed in orientation by the steering system when the vehicle body turns. The working vehicle may be configured such that, when the vehicle body turns, the orientations of the steered wheels are changed by the steering system and one of left and right wheels of the non-steered wheels that is located in a direction of a turn and the other of the non-steered wheels that is located not in the direction of the turn are caused to rotate in opposite directions to each other by the power supply apparatus.

The working vehicle may be configured such that, when the vehicle body turns, (i) the one of the non-steered wheels that is located in the direction of the turn and (ii) the other of the non-steered wheels that is located not in the direction of the turn and the steered wheels, are caused to rotate in opposite directions to each other by the power supply apparatus.

The working vehicle may be configured such that, when the vehicle body turns, left and right wheels which are the steered wheels are steered in opposite directions to each other by the steering system, and the one of the non-steered wheels that is located in the direction of the turn and the other of the non-steered wheels that is located not in the direction of the turn are caused to rotate in opposite directions to each other by the power supply apparatus.

The working vehicle may be configured such that, when the vehicle body turns, the left and right wheels which are the steered wheels are steered in opposite directions to each other by the steering system such that a side surface of each of the left and right wheels faces toward a turning center of the vehicle body.

The working vehicle may be configured such that, when the vehicle body turns, the left wheel and the right wheel are caused to rotate in opposite directions to each other by the power supply apparatus.

### Advantageous Effects of Invention

With a working vehicle according to the present invention, when performing steering to change the orientation of wheels, it is possible to increase the steering angle.

### Brief Description of Drawings

[FIG. 1] FIG. 1 is a perspective view illustrating an example embodiment of a working vehicle.
[FIG. 2] FIG. 2 is a left side view illustrating an example embodiment of a working vehicle.
[FIG. 3] FIG. 3 is a right side view illustrating an example embodiment of a working vehicle.
[FIG. 4] FIG. 4 is a front view illustrating an example embodiment of a working vehicle.
[FIG. 5] FIG. 5 is a back view illustrating an example embodiment of a working vehicle.
[FIG. 6] FIG. 6 is a plan view illustrating an example embodiment of a working vehicle.
[FIG. 7] FIG. 7 is a block diagram illustrating an example of a general configuration of a working vehicle.
[FIG. 8] FIG. 8 is a perspective view of a frame structural body.
[FIG. 9] FIG. 9 is an exploded perspective view of side frames (left frame, right frame).
[FIG. 10] FIG. 10 is a perspective view illustrating a upper frame (lateral frame) and side frames separated from each other.
[FIG. 11] FIG. 11 illustrates a first drive assembly (including a steering mechanism) as viewed from the right rear.
[FIG. 12] FIG. 12 is a plan view illustrating a steering mechanism (left steering mechanism) and a wheel (left front wheel).
[FIG. 13] FIG. 13 is a plan view illustrating a state in which a rod of a cylinder of a steering mechanism (left steering mechanism) extends.
[FIG. 14] FIG. 14 is a plan view illustrating a state in which a rod of a cylinder of a steering mechanism (left steering mechanism) retracts.
[FIG. 15] FIG. 15 is a plan view schematically illustrating a working vehicle in a state in which a rod of a left cylinder and a rod of a right cylinder retract.
[FIG. 16] FIG. 16 is a plan view illustrating a working vehicle in a state in which a rod of a left cylinder and a rod of a right cylinder extend.
[FIG. 17] FIG. 17 is a plan view schematically illustrating a working vehicle including a distance changing mechanism including a first changing mechanism, a second changing mechanism, a third changing mechanism, and a fourth changing mechanism.
[FIG. 18] FIG. 18 illustrates a first example of a steering-time inter-wheel-distance-increasing operation.
[FIG. 19] FIG. 19 illustrates a second example of a steering-time inter-wheel-distance-increasing operation.
[FIG. 20] FIG. 20 illustrates a third example of a steering-time inter-wheel-distance-increasing operation (in the case of a working vehicle including a distance changing mechanism illustrated in FIG. 17).
[FIG. 21] FIG. 21 illustrates a third example of a steering-time inter-wheel-distance-increasing operation (in the case of a working vehicle including a distance changing mechanism illustrated in FIG. 15).
[FIG. 22] FIG. 22 is a plan view schematically illustrating a working vehicle including a distance changing mechanism including a configuration to perform a first variation of a steering-time inter-wheel-distance-increasing operation.
[FIG. 23] FIG. 23 is a cross-sectional view schematically illustrating an example of a configuration of an extension-retraction mechanism.
[FIG. 24] FIG. 24 illustrates a steering-time inter-wheel-distance-increasing operation performed by a working vehicle including a configuration illustrated in FIG. 22.
[FIG. 25] FIG. 25 is a plan view schematically illustrating a working vehicle including a distance changing mechanism including another configuration to perform a first variation.
[FIG. 26] FIG. 26 illustrates a steering-time inter-wheel-distance-increasing operation performed by a working vehicle including a configuration illustrated in FIG. 25.
[FIG. 27] FIG. 27 is a plan view schematically illustrating a working vehicle including a distance changing mechanism including a configuration to perform a second variation of a steering-time inter-wheel-distance-increasing operation.
[FIG. 28] FIG. 28 illustrates a steering-time inter-wheel-distance-increasing operation performed by a working vehicle including a configuration illustrated in FIG. 27.
[FIG. 29] FIG. 29 is a plan view schematically illustrating a working vehicle including a distance changing mechanism including another configuration to perform a second variation.
[FIG. 30] FIG. 30 illustrates a steering-time inter-wheel-distance-increasing operation performed by a working vehicle including a configuration illustrated in FIG. 29.
[FIG. 31] FIG. 31 illustrates a first specific example of a steering-time inter-wheel-distance-increasing operation.
[FIG. 32] FIG. 32 illustrates a first specific example of a steering-time inter-wheel-distance-increasing operation.
[FIG. 33] FIG. 33 illustrates a first specific example of a steering-time inter-wheel-distance-increasing operation.
[FIG. 34] FIG. 34 illustrates a first specific example of a steering-time inter-wheel-distance-increasing operation.
[FIG. 35] FIG. 35 illustrates a second specific example of a steering-time inter-wheel-distance-increasing operation.
[FIG. 36] FIG. 36 illustrates a second specific example of a steering-time inter-wheel-distance-increasing operation.
[FIG. 37] FIG. 37 illustrates a second specific example of a steering-time inter-wheel-distance-increasing operation.
[FIG. 38] FIG. 38 illustrates a second specific example of a steering-time inter-wheel-distance-increasing operation.
[FIG. 39] FIG. 39 illustrates another method to reduce a distance between a left wheel and a right wheel in a second specific example.
[FIG. 40] FIG. 40 is a plan view schematically illustrating a state in which a working vehicle detects the width of a second ridge while traveling along a first ridge.
[FIG. 41] FIG. 41 illustrates a variation of a first example of a steering-time inter-wheel-distance-increasing operation.
[FIG. 42] FIG. 42 illustrates a variation of a second example of a steering-time inter-wheel-distance-increasing operation.
[FIG. 43] FIG. 43 illustrates a variation of a third example of a steering-time inter-wheel-distance-increasing operation.
[FIG. 44] FIG. 44 is a plan view schematically illustrating a known turning operation of a working vehicle.
[FIG. 45] FIG. 45 is a plan view schematically illustrating a first example of a turning operation.
[FIG. 46] FIG. 46 is a plan view schematically illustrating a second example of a turning operation.

### Description of Embodiments

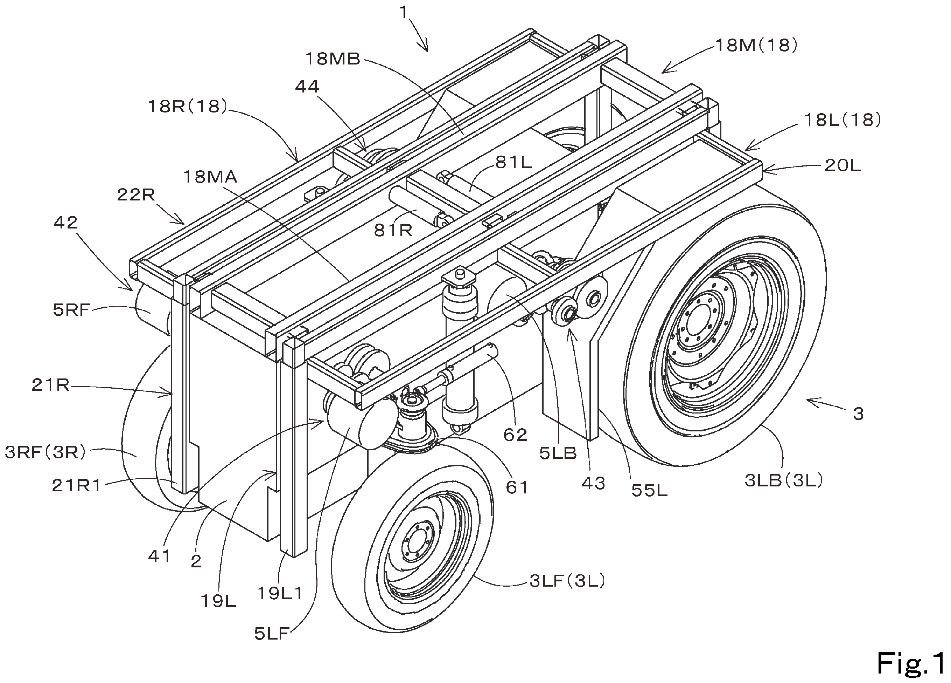

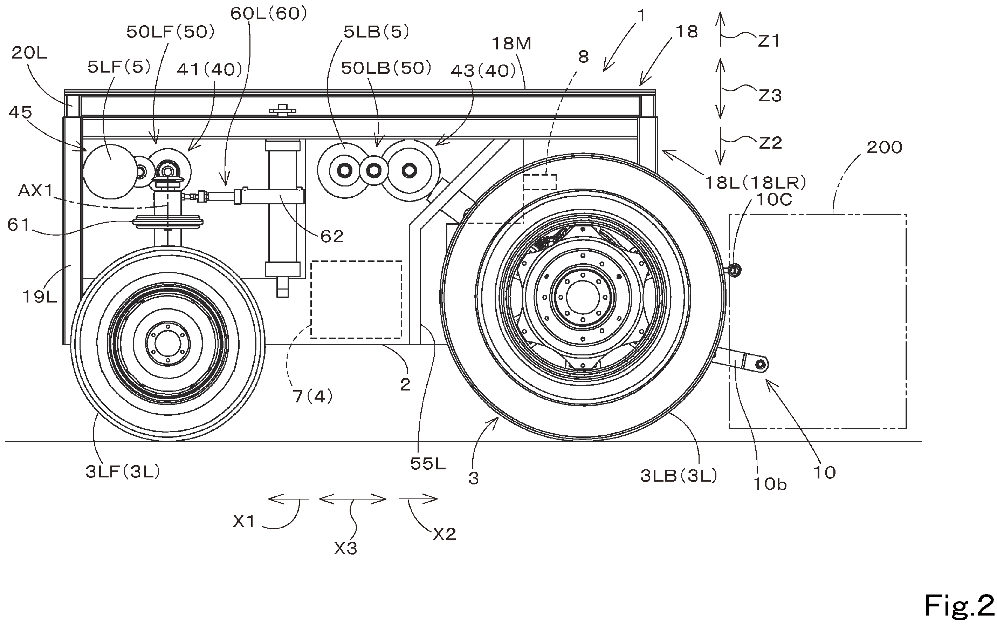

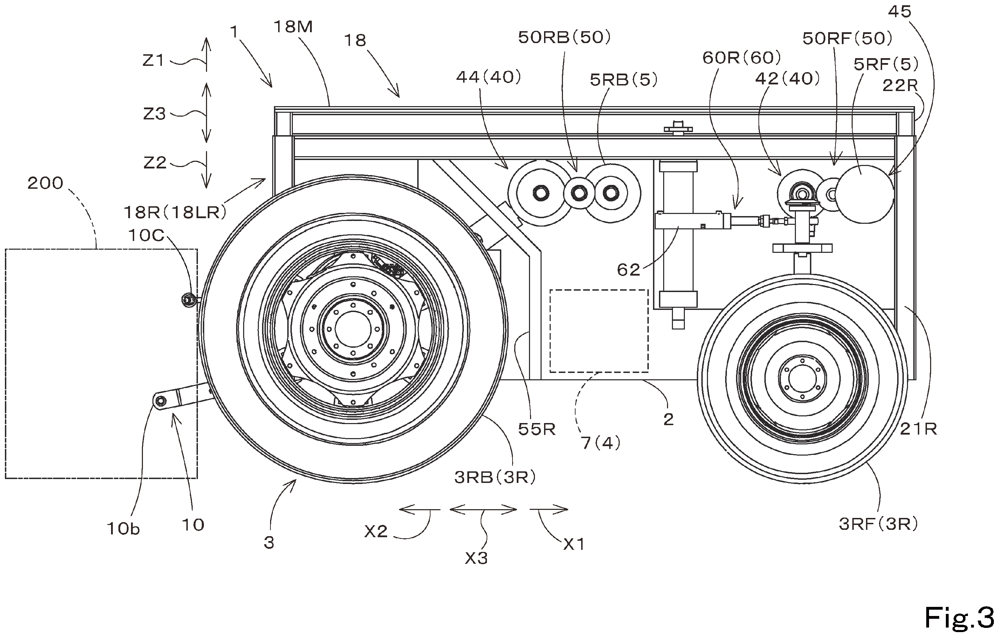

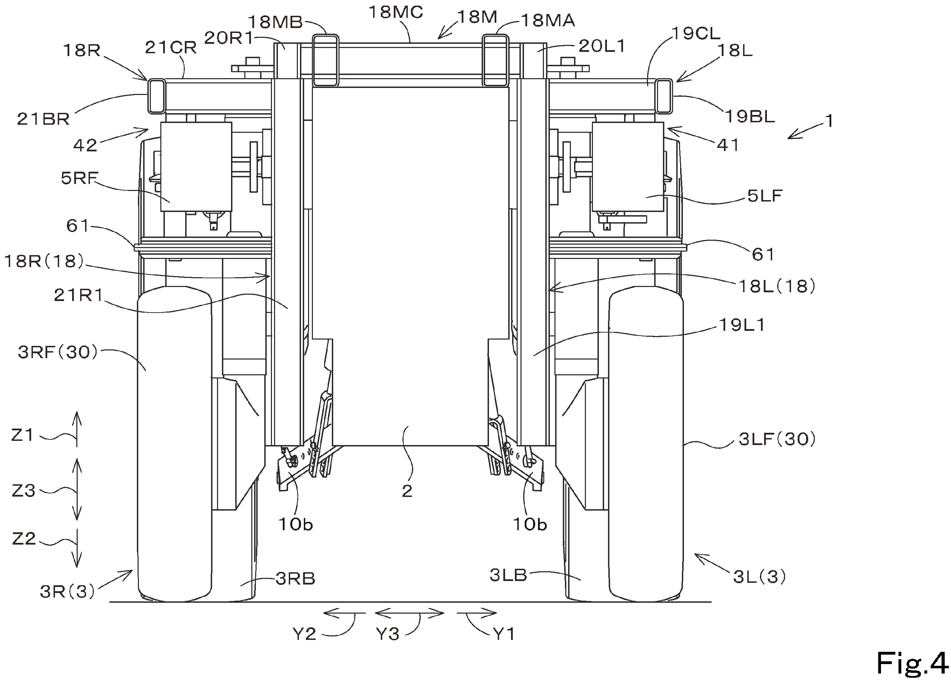

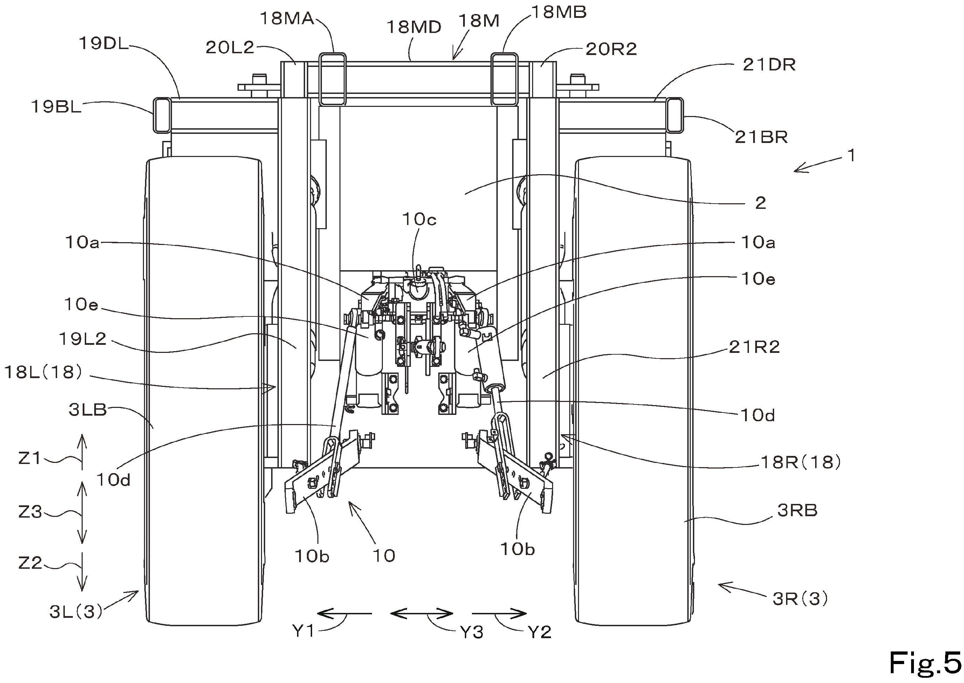

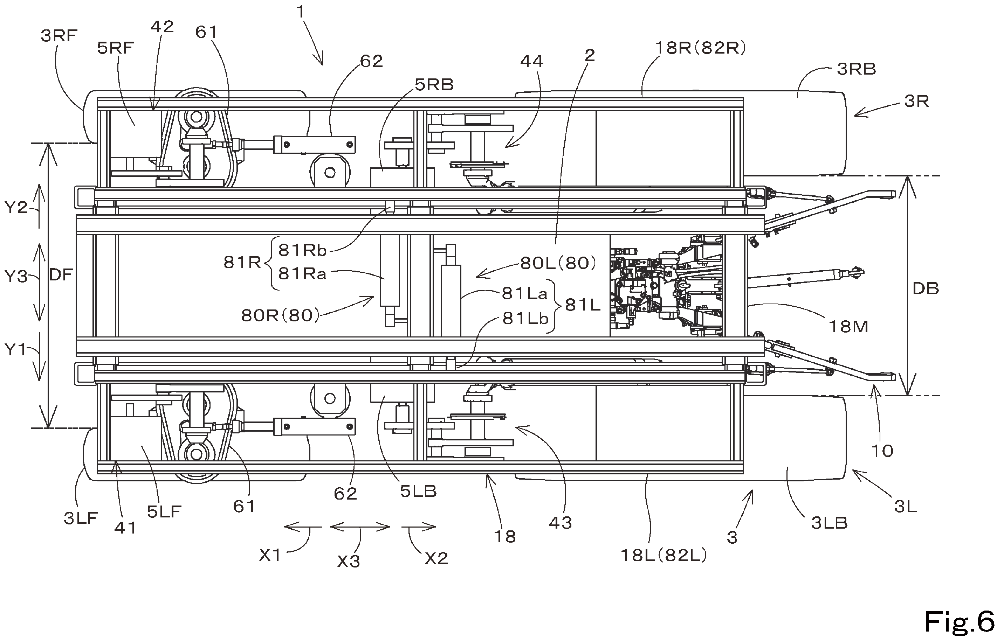

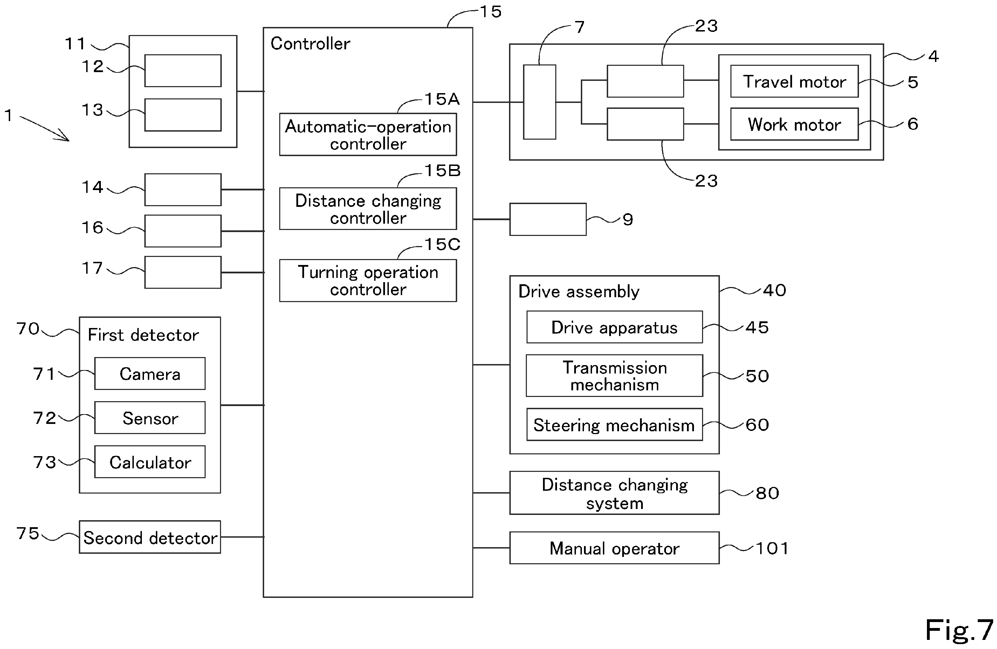

The following describes preferred example embodiments of a working vehicle 1 according to the present invention. FIGS. 1 to 7 illustrate an example embodiment of the working vehicle 1. FIG. 1 is a perspective view illustrating the working vehicle 1. FIG. 2 is a left side view of the working vehicle 1. FIG. 3 is a right side view of the working vehicle 1. FIG. 4 is a front view of the working vehicle 1. FIG. 5 is a back view of the working vehicle 1. FIG. 6 is a plan view of the working vehicle 1. FIG. 7 is a block diagram illustrating a general configuration of the working vehicle 1.

In the following description, a direction pointed by an arrow X1 in the drawings is referred to as a forward direction, a direction pointed by an arrow X2 is referred to as a rearward direction, a direction pointed by an arrow Y1 is referred to as a leftward direction, a direction pointed by an arrow Y2 is referred to as a rightward direction, a direction pointed by an arrow Z1 is referred to as an upward direction, and a direction pointed by an arrow Z2 is referred to as a downward direction. A direction indicated by an arrow X3 is referred to as a front-rear direction, a direction indicated by an arrow Y3 is referred to as a left-right direction, and a direction indicated by an arrow Z3 is referred to as an up-down direction.

Although examples of work performed by the working vehicle 1 include work relating to agriculture, work relating to industries (civil engineering, construction, etc.), and work relating to transportation, the work is not limited to such examples. In preferred example embodiments of the present invention, the work performed by the working vehicle 1 is work relating to agriculture (agricultural work). The following describes a case, as an example, where the work performed by the working vehicle 1 is agricultural work. In this case, the working vehicle 1 is an agricultural working vehicle.

As illustrated in FIGS. 1 to 6, the working vehicle 1 includes a vehicle body 2, and a traveling device 3 to support the vehicle body 2 such that the vehicle body 2 is allowed to travel. In the present example embodiment, the vehicle body 2 is in the form of a rectangular parallelepiped or a substantially rectangular parallelepiped including an interior space. However, the shape of the vehicle body 2 is not limited to a rectangular parallelepiped or a substantially rectangular parallelepiped. The vehicle body 2 houses various devices and/or apparatuses in the interior space thereof.

As illustrated in FIGS. 2 and 3, the vehicle body 2 includes (houses), in the interior space thereof, a power supply apparatus 4 to drive the traveling device 3. The power supply apparatus 4 generates power to drive the traveling device 3, and the power is supplied to the traveling device 3. Specifically, the power supply apparatus 4 generates power to rotate wheels of the traveling device 3, and the wheels of the traveling device 3 are rotated by the power. As illustrated in FIG. 7, the power supply apparatus 4 includes motor(s) 5 and battery(batteries) 7. In the present example embodiment, the vehicle body 2 is provided with (houses) the battery 7 as the power supply apparatus 4.

The motor 5 is a travel motor to generate power to drive the traveling device 3. The motor 5 is an electric motor driven by electricity. The motor 5 has an inverter 23 connected thereto (see FIG. 7). The inverter 23 controls rotation of the motor 5 based on a control signal from a controller 15 (described later). The battery 7 stores electricity to be supplied to the motor 5. However, the power supply apparatus 4 may include an engine instead of the motor 5. The power supply apparatus 4 may include a fuel cell.

As illustrated in FIG. 7, the working vehicle 1 includes a motor 6 which is a work motor in addition to the motor 5 which is the travel motor. The work motor generates power to drive device(s) and/or apparatus(es) other than the traveling device 3. The motor 6 is an electric motor driven by electricity supplied from the battery 7. The rotation of the motor 6 can be controlled by an inverter 23. In the following description, the motor 5 may be referred to as a "travel motor 5", and the motor 6 may be referred to as a "work motor 6".

The motor(s) (travel motor 5, work motor 6) can be provided in or on the vehicle body 2. The travel motor 5 and the work motor 6 are configured to be driven independently of each other. The work motor 6 is configured to drive a hydraulic pump to actuate hydraulic cylinder(s) (described later). The work motor 6 is also configured to drive an external output shaft 8.

The work motor 6 may be a hydraulic motor. The hydraulic motor is driven by hydraulic fluid supplied from the hydraulic pump. In this case, for example, the travel motor 5 drives the hydraulic pump, hydraulic fluid supplied from the hydraulic pump drives the hydraulic motor (work motor 6), and the driven hydraulic motor drives the external output shaft 8. The working vehicle 1 may include, in addition to the work motor 6 which is an electric motor, a work motor 6 which is a hydraulic motor.

As described above, the battery 7, which is a portion of the power supply apparatus 4, is housed in the vehicle body 2 (see FIGS. 2 and 3). Although not illustrated in drawings, the vehicle body 2 further houses a cooling system (radiator, fan, water pump, compressor, etc.) to cool the power supply apparatus 4 (motor 5, motor 6, battery 7, etc.), and a hydraulic system (control valve, etc.) to actuate hydraulic cylinder(s) (described later) (cylinder 62, left cylinder 81L, right cylinder 81R), etc. based on a control signal from the controller 15.

As illustrated in FIG. 2, the external output shaft 8 projects rearward from a rear portion of the vehicle body 2. The external output shaft 8 is an output shaft through which power of the work motor 6 is taken out of the vehicle body 2. The external output shaft 8 is, for example, a PTO shaft. The power taken out through the external output shaft 8 is input into a working device (implement) 200 to perform work. With this, the working device 200 is driven to perform work.

Although examples of the working device 200 include devices to perform work relating to agriculture (agricultural work), devices to perform work relating to civil engineering, devices to perform work relating to construction, and devices to perform work relating to transportation, the working device 200 is not limited to such working devices. In the following example embodiments, the working device 200 is a device to perform agricultural work.

Examples of the working device 200 to perform agricultural work include spreaders to spread materials such as fertilizers and chemical agents, seeders to sow seeds, tillers to till the soil, plows to plow the soil, weeders for weeding, earthing-up devices for earthing up. However, provided that the working device 200 is a device to perform agricultural work, the working device 200 is not limited to a particular kind. In the case where the working device 200 is an electric working device, the working device 200 may be driven by electricity taken out of the vehicle body 2 from the battery 7 via electric power line(s), instead of being driven by power taken out through the external output shaft 8.

The vehicle body 2 is configured to be caused to travel by the traveling device 3 being driven. As illustrated in FIGS. 4, 5 and the like, the traveling device 3 includes a left traveling device 3L provided leftward of the vehicle body 2, and a right traveling device 3R provided rightward of the vehicle body 2. The vehicle body 2 is between the left traveling device 3L and the right traveling device 3R. As illustrated in FIG. 2, the left traveling device 3L includes a left front wheel 3LF and a left rear wheel 3LB. As illustrated in FIG.3, the right traveling device 3R includes a right front wheel 3RF and a right rear wheel 3RB.

In the following description, the left front wheel 3LF and the left rear wheel 3LB are collectively referred to as "left wheel(s)". The right front wheel 3RF and the right rear wheel 3RB are collectively referred to as "right wheel(s)". The left wheel(s) indicate(s) the left front wheel 3LF and/or the left rear wheel 3LB (one or both of the left front wheel 3LF and the left rear wheel 3LB). The right wheel(s) indicate(s) the right front wheel 3RF and/or the right rear wheel 3RB (one or both of the right front wheel 3RF and the right rear wheel 3RB). The left front wheel 3LF, the right front wheel 3RF, the left rear wheel 3LB and the right rear wheel 3RB may be collectively referred to as "wheel(s) 30".

The wheels 30 (left front wheel 3LF, right front wheel 3RF, left rear wheel 3LB, right rear wheel 3RB) are positioned at sides of the vehicle body 2. The left front wheel 3LF and the left rear wheel 3LB are located leftward of the vehicle body 2. The right front wheel 3RF and the right rear wheel 3RB are located rightward of the vehicle body 2.

In the case of the working vehicle 1 of the present example embodiment, the size (diameter and width) of each rear wheel (left rear wheel 3LB, right rear wheel 3RB) is larger than the size (diameter and width) of each front wheel (left front wheel 3LF, right front wheel 3RF). However, the size of each rear wheel (left rear wheel 3LB, right rear wheel 3RB) and the size of each front wheel (left front wheel 3LF, right front wheel 3RF) may be equal to each other, or the size of each front wheel may be larger than the size of each rear wheel.

In the present example embodiment, the traveling device 3 is a wheeled traveling device in which the front wheels (left front wheel 3LF, right front wheel 3RF) and the rear wheels (left rear wheel 3LB, right rear wheel 3RB) each include a tire. However, the traveling device 3 may be a crawler traveling device in which the left traveling device 3L and the right traveling device 3R are crawler tracks. The traveling device 3 may be a traveling device in which one of the front wheels or the rear wheels are wheels and the other of the front wheels or the rear wheels are crawler tracks.

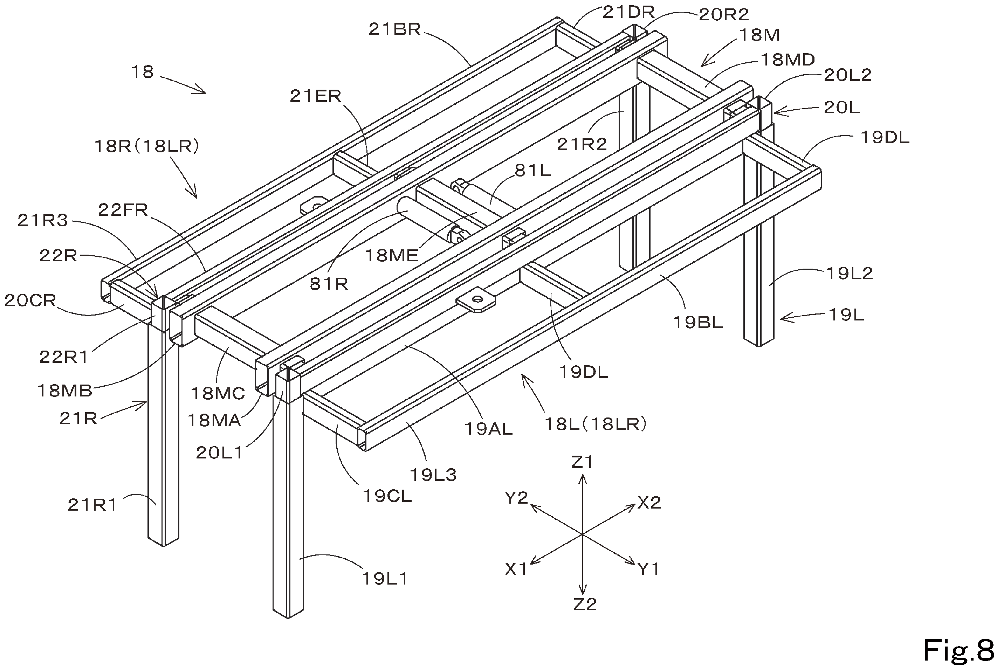

As illustrated in FIGS. 1 to 3, the working vehicle 1 includes a fender 55L to cover an upper front portion of the left rear wheel 3LB, and a fender 55R to cover an upper front portion of the right rear wheel 3RB. The fender 55L is attached to a first connector 19L3 of a frame structural body 18 (described later) (see FIG. 8). The fender 55R is attached to a first connector 21R3 of the frame structural body 18 (described later) (see FIG. 8). Although not illustrated in the drawings, the working vehicle 1 may include fender(s) to cover the front wheel(s) (left front wheel 3LF, right front wheel 3RF).

As illustrated in FIG. 7, the working vehicle 1 includes a transmission 9. The transmission 9 is configured to switch a propulsive force of the traveling device 3 by changing speed stages. The transmission 9 is configured to switch between forward travel and rearward travel of the traveling device 3. The transmission 9 may include a transmission clutch to switch between a four-wheel-drive state (4WD) in which four wheels (left front wheel 3LF, right front wheel 3RF, left rear wheel 3LB, right rear wheel 3RB) are driven, and a two-wheel-drive state (2WD) in which the rear wheels (left rear wheel 3LB, right rear wheel 3RB) or the front wheels (left front wheel 3LF, right front wheel 3RF) are driven.

As illustrated in FIGS, 2, 3, 5, and 6, the working vehicle 1 includes a mount 10 to which the working device 200 to perform the above-described work is to be attached. The working device 200 is detachably attached to the mount 10. The mount 10 is provided at the rear portion of the vehicle body 2. FIG. 5 illustrates the mount 10 as viewed from the rear. However, the mount 10 may be provided at a front portion or a side portion (left portion or right portion) of the vehicle body 2.

The mount 10 includes a three-point-linkage mechanism. Specifically, as illustrated in FIG. 5, the mount 10 includes lift arm(s) 10a, lower link(s) 10b, a top link 10c, lift rod(s) 10d, and lift cylinder(s) 10e. The front end portion of each lift arm 10a is supported on an upper rear portion of the vehicle body 2 such that the lift arm 10a is swingable upward and downward. The lift arms 10a swing (ascend or descend) in response to driving of the lift cylinders 10e. Each lift cylinder 10e includes a hydraulic cylinder. Each lift cylinder 10e is connected to a hydraulic pump (not illustrated) via a control valve (not illustrated).

The hydraulic pump is driven by the work motor 6. The control valve is, for example, a solenoid valve in which opening and closing of a fluid path, etc., are controlled by the controller 15. The flow of hydraulic fluid delivered by the hydraulic pump is controlled by the control valve, making it possible to extend and retract the lift cylinders 10e.

The front end portion of each lower link 10b is supported on a lower rear portion of the vehicle body 2 such that the lower link 10b is swingable upward and downward. The front end portion of the top link 10c is supported, at a position higher than the lower links 10b, on a rear portion of the vehicle body 2 such that the top link 10c is swingable upward and downward. Each lift rod 10d couples the corresponding lift arm 10a and the corresponding lower link 10b. The working device 200 is coupled to the rear portions of the lower links 10b and the rear portion of the top link 10c. When the lift cylinders 10e are driven (when the lift cylinders 10e are extended or retracted), the lift arms 10a move up or down, and the lower links 10b coupled to the lift arms 10a via the lift rods 10d move up or down. With this, the working device 200 swings upward or downward (moves up or down) about a front portion of the lower links 10b.

The working device 200 attached to the mount 10, as the working vehicle 1 travels, moves by being towed by the working vehicle 1. It is noted that the mount 10 may have attached thereto a carriage or the like to carry agricultural crops, etc., instead of the working device 200. The mount 10 may be located at a portion (e.g., a front portion or a side portion) other than the rear portion of the vehicle body 2. The working device 200 may be placed on an upper portion of the working vehicle 1 instead of being attached to the mount 10. In this case, the working device 200, as the working vehicle 1 travels, moves in the state in which the working device 200 is on the working vehicle 1.

As illustrated in FIG. 7, the working vehicle 1 includes a position detector 11. The position detector 11 is configured to detect the position of the vehicle body 2 (measured position information including latitude and longitude) using a satellite positioning system (positioning satellites) such as D-GPS, GPS, GLONASS, BeiDou, Galileo, and/or Quasi-Zenith Satellite System. That is, the position detector 11 receives satellite signals (positions of positioning satellites, sending time, correction information, etc.) transmitted from the positioning satellites, and detects the position of vehicle body 2 (e.g., latitude, longitude) based on the satellite signals.

The position detector 11 includes a receiver 12 and an inertial measurement unit (IMU) 13. The receiver 12 is a device including antenna(s) and/or the like and configured to receive satellite signals transmitted from positioning satellites, and is attached to the vehicle body 2. The inertial measurement unit 13 includes an acceleration sensor to detect acceleration, a gyroscope sensor to detect angular velocity, and/or the like. The inertial measurement unit 13 is attached to the vehicle body 2. The inertial measurement unit 13 is configured to detect the roll angle, pitch angle, yaw angle and the like of the vehicle body 2. It is noted that the yaw angle may be detected by providing a plurality of position detectors 11.

As illustrated in FIG.7, the working vehicle 1 includes a communicator 14. The communicator 14 includes a communication circuit to perform communication via in-vehicle network(s), and a wireless communication circuit to perform wireless communication. The wireless communication circuit is configured to wirelessly communicate with external device(s) directly or indirectly via Wi-Fi (Wireless Fidelity, registered trademark) of IEEE802.11 series, which is a telecommunication standard, Bluetooth (registered trademark) Low Energy (BLE), Low Power, Wide Area (LPWA), Low-Power Wide-Area Network (LPWAN) and/or the like. For another example, the communicator 14 may include a communication circuit configured to wirelessly communicate with external device(s) via, for example, a mobile phone network or data network, etc. The external device is, for example, a personal computer, a smartphone, a tablet computer, a PDA, a server, or the like. The external device may include, for example, a manual operator 101 (described later).

As illustrated in FIG. 7, the working vehicle 1 includes a controller 15. The controller 15 performs various controls relating to the working vehicle 1. The controller 15 includes a calculator (CPU and/or the like) and a storage unit (RAM, ROM, and/or the like). The storage unit may include an external memory provided outside the controller 15. The controller 15 is connected to various devices and/or mechanisms illustrated in FIG. 7 via an in-vehicle LAN (in-vehicle network) such as a controller area network (CAN) or a communication line.

The controller 15 is configured or programmed to, by the calculator executing various control programs stored in the storage unit, control operations of various devices and/or mechanisms communicably connected to the controller 15. The functions of controllers (described later) (automatic-operation controller 15A, distance change controller 15B, turning operation controller 15C) of the controller 15 are achieved by the calculator executing predetermined control programs stored in the storage unit.

As illustrated in FIG. 7, the controller 15 includes an automatic-operation controller 15A. The automatic-operation controller 15A controls the automatic operation of the working vehicle 1. The automatic-operation controller 15A is configured to perform a line automatic-operation control and an autonomous automatic-operation control. In the line automatic-operation control, the automatic-operation controller 15A controls operations of a steering system 60 (described later), the transmission 9, the motor 5, and the like such that the working vehicle 1 (vehicle body 2) moves along a predetermined planned travel line.

In the autonomous automatic-operation control, the automatic-operation controller 15A, based on a result of sensing performed by the position detector 11 and/or the like on the surrounding area of (result of detection of objects in the surrounding area of) the working vehicle 1 (vehicle body 2), makes settings of the travel direction (steering direction), vehicle speed (speed) and the like of the vehicle body 2, and controls operations of the steering system 60, the transmission 9, the motor 5, and the like such that the set steering and vehicle speed are achieved.

It is noted that the line automatic-operation control and the autonomous automatic-operation control may be switched by a switch or the like. The automatic-operation controller 15A may be configured or programmed to perform either the line automatic-operation control or the autonomous automatic-operation control. It is noted that a configuration of the automatic-operation controller 15A is not limited to the above-described configuration.

Since the controller 15 includes the automatic-operation controller 15A, the working vehicle 1 is able to perform automatic travel without a human operator therein (perform unmanned travel). Therefore, the working vehicle 1 of the example embodiment illustrated in the drawings does not include an operator's seat for the human operator. However, the working vehicle 1 may be a vehicle to perform the automatic travel with a human operator therein. Alternatively, the working vehicle 1 may be a vehicle which is caused to travel by operation of a human operator therein. In the case where the working vehicle 1 is a ride-on vehicle for a human operator, the vehicle body 2 is provided with an operator's seat.

As illustrated in FIG. 7, the working vehicle 1 includes a lighting apparatus 16. The lighting apparatus 16 is provided in or on the vehicle body 2. The lighting apparatus 16 includes at least a headlight to illuminate an area forward of the vehicle body 2. The lighting apparatus 16 may include, in addition to the headlight, a plurality of work lights to illuminate the surrounding area of the vehicle body 2. Each of the working lights is configured to, for example, illuminate the side (left side, right side) of the vehicle body 2, or an area rearward of the vehicle body 2. The lighting apparatus 16 may include a status indicator light, a left light, a right light, a brake lamp, and/or the like.

As illustrated in FIG. 7, the working vehicle 1 includes a notifier 17. The notifier 17 provides a notification about danger (proximity of the vehicle body 2 or the like) to people around the vehicle body 2 via sound, light and/or the like. The notifier 17 includes a speaker, a warning light and/or the like.

As illustrated in FIG. 1 and the like, the working vehicle 1 includes a frame structural body 18 provided around the vehicle body 2 and attached to the vehicle body 2. As illustrated in FIG. 8 and the like, the frame structural body 18 includes a left frame 18L, a right frame 18R, and a lateral frame 18M. As illustrated in FIGS. 1, 4, and the like, the left frame 18L is located leftward of the vehicle body 2. The left frame 18L extends in the up-down direction along the vehicle body 2. The left frame 18L also extends in the front-rear direction along the vehicle body 2. The right frame 18R is located rightward of the vehicle body 2. The right frame 18R extends in the up-down direction along the vehicle body 2. The right frame 18R also extends in the front-rear direction along the vehicle body 2.

The left frame 18L connects the left front wheel 3LF and the left rear wheel 3LB. The right frame 18R connects the right front wheel 3RF and the right rear wheel 3RB. The left frame 18L and the right frame 18R are located at the sides of the vehicle body 2. Thus, the left frame 18L and the right frame 18R may be collectively referred to as "side frames 18LR".

The lateral frame 18M couples the left frame 18L and the right frame 18R. Specifically, the lateral frame 18M couples the upper portion of the left frame 18L and the upper portion of the right frame 18R. The lateral frame 18M is a frame (upper frame) located above the vehicle body.

As illustrated in FIG. 4, the vehicle body 2 is between the left frame 18L and the right frame 18R in a front view. In other words, the vehicle body 2 is located at a position sandwiched between the left frame 18L and the right frame 18R. The vehicle body 2 is below the lateral frame 18M. Thus, the vehicle body 2 is located at a position surrounded by the left frame 18L, the right frame 18R, and the lateral frame 18M in a front view.

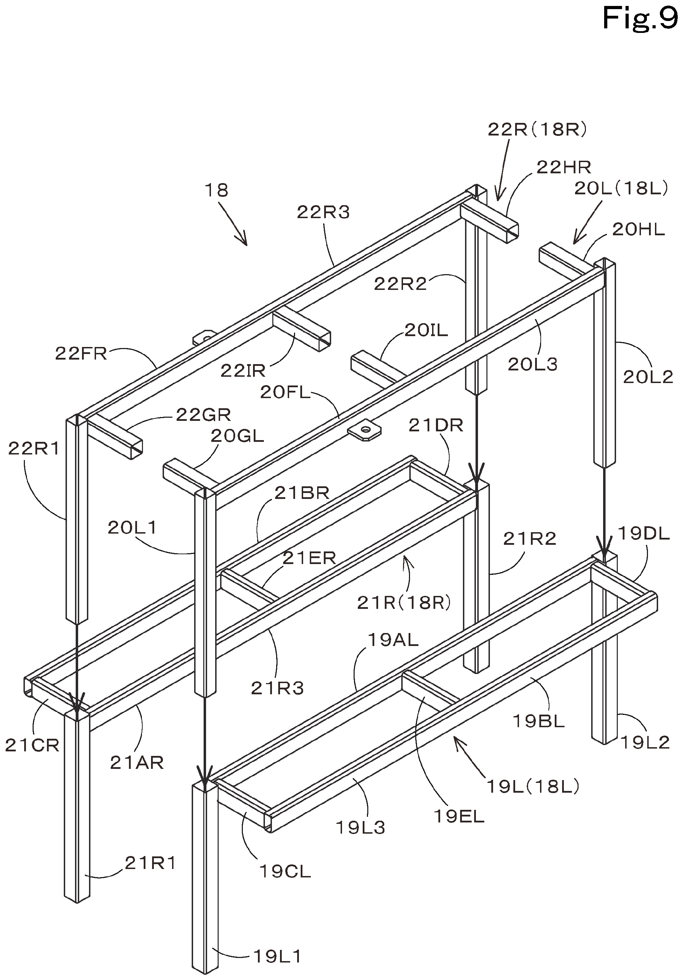

As illustrated in FIG. 9 and the like, the left frame 18L includes a first left frame 19L and a second left frame 20L. The first left frame 19L includes a first front pillar 19L1, a first rear pillar 19L2, and a first connector 19L3. The first front pillar 19L1 and the first rear pillar 19L2 are arranged at an interval in the front-rear direction, and extend in the up-down direction in parallel to each other. As illustrated in FIGS. 1 and 4, the first front pillar 19L1 is located leftward of the front portion of the vehicle body 2. As illustrated in FIG. 5, the first rear pillar 19L2 is located leftward of the rear portion of the vehicle body 2. The first front pillar 19L1 and the first rear pillar 19L2 are each in the form of a tube (rectangular tube).

As illustrated in FIG. 9, the first connector 19L3 connects the first front pillar 19L1 and the first rear pillar 19L2. The first connector 19L3 includes a frame member 19AL, a frame member 19BL, a frame member 19CL, a frame member 19DL, and a frame member 19EL. The frame member 19AL extends in the front-rear direction, and connects an upper portion of the first front pillar 19L1 and an upper portion of the first rear pillar 19L2. The frame member 19BL is located leftward of the frame member 19AL and extends in the front-rear direction. The frame member 19CL connects a front portion of the frame member 19AL and a front portion of the frame member 19BL. The frame member 19DL connects a rear portion of the frame member 19AL and a rear portion of the frame member 19BL. The frame member 19EL connects an intermediate portion of the frame member 19AL in the front-rear direction and an intermediate portion of the frame member 19BL in the front-rear direction.

As illustrated in FIG. 9, the second left frame 20L includes a second front pillar 20L1, a second rear pillar 20L2, and a second connector 20L3. The second front pillar 20L1 and the second rear pillar 20L2 are arranged at an interval in the front-rear direction, and extend in the up-down direction in parallel to each other. The second connector 20L3 connects the second front pillar 20L1 and the second rear pillar 20L2. The second connector 20L3 includes a frame member 20FL, a frame member 20GL, a frame member 20HL, and a frame member 20IL. The frame member 20FL extends in the front-rear direction, and connects an upper portion of the second front pillar 20L1 and an upper portion of the second rear pillar 20L2. The frame member 20GL extends rightward from a front portion of a right surface of the frame member 20FL. The frame member 20HL extends rightward from a rear portion of the right surface of the frame member 20FL. The frame member 20IL extends rightward from an intermediate portion of the right surface of the frame member 20FL in the front-rear direction.

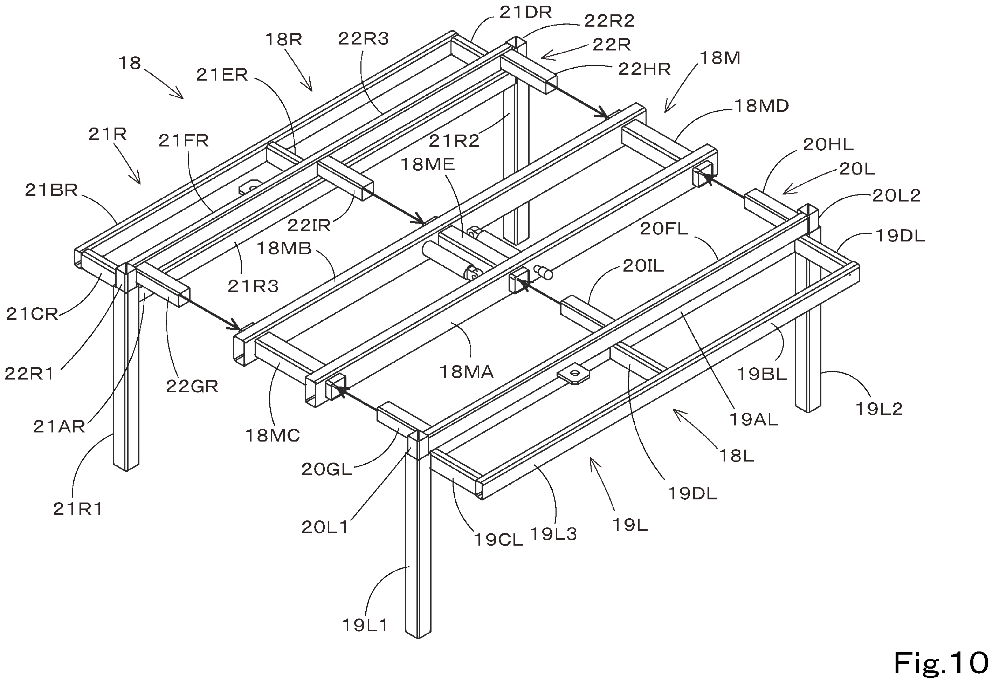

As indicated by downward arrows in FIG. 9, the second front pillar 20L1 is inserted into the interior of the tubular first front pillar 19L1 from above. The second rear pillar 20L2 is inserted into the interior of the tubular first rear pillar 19L2 from above. With this, the first left frame 19L and the second left frame 20L are combined (see FIG. 10). The second front pillar 20L1 is allowed to move in the up-down direction along the first front pillar 19L1. The second rear pillar 20L2 is allowed to move in the up-down direction along the first rear pillar 19L2. With this, the second left frame 20L is allowed to move in the up-down direction with respect to the first left frame 19L.

As illustrated in FIG. 9, the right frame 18R includes a first right frame 21R and a second right frame 22R. The first right frame 21R includes a first front pillar 21R1, a first rear pillar 21R2, and a first connector 21R3. The first front pillar 21R1 and the first rear pillar 21R2 are arranged at an interval in the front-rear direction, and extend in the up-down direction in parallel to each other. As illustrated in FIGS. 1 and 4, the first front pillar 21R1 is located rightward of the front portion of the vehicle body 2. As illustrated in FIG. 5, the first rear pillar 21R2 is located rightward of the rear portion of the vehicle body 2. The first front pillar 21R1 and the first rear pillar 21R2 are each in the form of a tube (rectangular tube).

The first connector 21R3 connects the first front pillar 21R1 and the first rear pillar 21R2. The first connector 21R3 includes a frame member 21AR, a frame member 21BR, a frame member 21CR, a frame member 21DR, and a frame member 21ER. The frame member 21AR extends in the front-rear direction, and connects au upper portion of the first front pillar 21R1 and an upper portion of the first rear pillar 21R2. The frame member 21BR is located rightward of the frame member 21AR and extends in the front-rear direction. The frame member 21CR connects a front portion of the frame member 21AR and a front portion of the frame member 21BR. The frame member 21DR connects a rear portion of the frame member 21AR and a rear portion of the frame member 21BR. The frame member 21ER connects an intermediate portion of the frame member 21AR in the front-rear direction and an intermediate portion of the frame member 21BR in the front-rear direction.

The second right frame 22R includes a second front pillar 22R1, a second rear pillar 22R2, and a second connector 22R3. The second front pillar 22R1 and the second rear pillar 22R2 are arranged at an interval in the front-rear direction, and extend in the up-down direction in parallel to each other. The second connector 22R3 connects the second front pillar 22R1 and the second rear pillar 22R2. The second connector 22R3 includes a frame member 22FR, a frame member 22GR, a frame member 22HR, and a frame member 22IR. The frame member 22FR extends in the front-rear direction, and connects an upper portion of the second front pillar 22R1 and an upper portion of the second rear pillar 22R2. The frame member 22GR extends leftward from a front portion of a left surface of the frame member 22FR. The frame member 22HR extends leftward from a rear portion of the left surface of the frame member 22FR. The frame member 22IR extends leftward from an intermediate portion of the left surface of the frame member 22FR in the front-rear direction.

As indicated by downward arrows in FIG. 9, the second front pillar 22R1 is inserted into the interior of the tubular first front pillar 21R1 from above. The second rear pillar 22R2 is inserted into the interior of the tubular first rear pillar 21R2 from above. With this, the first right frame 21R and the second right frame 22R are combined (see FIG. 10). The second front pillar 22R1 is allowed to move in the up-down direction along the first front pillar 21R1. The second rear pillar 22R2 is allowed to move in the up-down direction along the first rear pillar 21R2. With this, the second right frame 22R is allowed to move in the up-down direction with respect to the first right frame 21R.

As illustrated in FIG. 10, the lateral frame 18M includes a frame member 18MA, a frame member 18MB, a frame member 18MC, a frame member 18MD, and a frame member 18ME. The frame member 18MA is located at a left portion of the lateral frame 18M, and extends in the front-rear direction. The frame member 18MB is located at a right portion of the lateral frame 18M, and extends in the front-rear direction. The frame member 18MA and the frame member 18MB are arranged at an interval in the left-right direction in parallel to each other.

The frame member 18MC, the frame member 18MD, and the frame member 18ME extend in the left-right direction in parallel to each other. The frame member 18MC connects a front portion of the frame member 18MA and a front portion of the frame member 18MB. The frame member 18MD connects a rear portion of the frame member 18MA and a rear portion of the frame member 18MB. The frame member 18ME connects an intermediate portion of the frame member 18MA in the front-rear direction and an intermediate portion of the frame member 18MB in the front-rear direction.

The frame member 18MC, the frame member 18MD, and the frame member 18ME are each in the form of a tube (rectangular tube). As indicated by arrows in FIG. 10, the frame member 20GL is inserted into the frame member 18MC from the left, and the frame member 22GR is inserted into the frame member 18MC from the right. The frame member 20HL is inserted into the frame member 18MD from the left, and the frame member 22HR is inserted into the frame member 18MD from the right. The frame member 20IL is inserted into the frame member 18ME from the left, and the frame member 22IR is inserted into the frame member 18ME from the right. With this, the lateral frame 18M, the second left frame 20L, and the second right frame 22R are combined.

The frame member 20GL inserted into the frame member 18MC from the left is allowed to move in the left-right direction along the frame member 18MC. The frame member 20HL inserted into the frame member 18MD from the left is allowed to move in the left-right direction along the frame member 18MD. The frame member 20IL inserted into the frame member 18ME from the left is allowed to move in the left-right direction along the frame member 18ME. With this, the left frame 18L is allowed to move in the left-right direction with respect to the lateral frame 18M at a position leftward of the lateral frame 18M.

The frame member 22GR inserted into the frame member 18MC from the right is allowed to move in the left-right direction along the frame member 18MC. The frame member 22HR inserted into the frame member 18MD from the right is allowed to move in the left-right direction along the frame member 18MD. The frame member 22IR inserted into the frame member 18ME from the right is allowed to move in the left-right direction along the frame member 18ME. With this, the right frame 18R is allowed to move in the left-right direction with respect to the lateral frame 18M at a position rightward of the lateral frame 18M.

As described above, the left frame 18L and the right frame 18R are allowed to move in the left-right direction with respect to the lateral frame 18M. Since the vehicle body 2 is fixed to the lateral frame 18M, the left frame 18L and the right frame 18R are allowed to move in the left-right direction with respect to the vehicle body 2. Specifically, the left frame 18L is allowed to move in a direction (leftward) away from the vehicle body 2 and a direction (rightward) approaching the vehicle body 2. The right frame 18R is allowed to move in a direction (rightward) away from the vehicle body 2 and a direction (leftward) approaching the vehicle body 2.

Since the left traveling device 3L is attached to the left frame 18L (first left frame 19L), the left traveling device 3L is also allowed to move in the left-right direction as the left frame 19L moves in the left-right direction. Since the right traveling device 3R is attached to the right frame 18R (first right frame 21R), the right traveling device 3R is also allowed to move in the left-right direction as the right frame 18R moves in the left-right direction.

As illustrated in FIG. 7, the working vehicle 1 includes drive assemblies 40 to drive wheels (left front wheel 3LF, right front wheel 3RF, left rear wheel 3LB, right rear wheel 3RB). Each drive assembly 40 includes a drive apparatus 45 to generate power, a transmission mechanism 50 to transmit the power generated by the drive apparatus 45 to a wheel 30, and a steering mechanism 60 of the steering system 60 to change the orientation of the wheel (left front wheel 3LF, right front wheel 3RF).

Although, in the present example embodiment, the steering system 60 is configured to change the orientation of front wheels (left front wheel 3LF, right front wheel 3RF), the steering system 60 may be configured to change the orientation of rear wheels (left rear wheel 3LB, right rear wheel 3RB). The steering system 60 may be configured to change both the orientation of the front wheels and the orientation of the rear wheels. The steering system 60 may be configured to change the orientation of the left front wheel 3LF, the orientation of the right front wheel 3RF, the orientation of the left rear wheel 3LB, and the orientation of the right rear wheel 3RB independently of each other. The same configuration may be used for the steering mechanisms 60 to change the orientation of front wheels and the steering mechanisms 60 to change the orientation of rear wheels.

As illustrated in FIGS. 2 and 3, the drive assemblies 40 include a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB. The first drive assembly 41, the second drive assembly 42, the third drive assembly 43, and the fourth drive assembly 44 each include a drive apparatus 45 (described later) and a transmission mechanism 50 (described later). The first drive assembly 41 and the second drive assembly 42 each include a steering mechanism 60 of the steering system 60 (described later). Each of the drive assemblies is attached to the frame structural body 18.

In the present example embodiment, each drive apparatus 45 is a motor. Specifically, the drive apparatus 45 is the above-described travel motor 5. That is, the motor of the drive apparatus 45 is the same as the motor included in the above-described power supply apparatus 4. As described below, the motors 5 of the drive apparatuses 45 of the drive assemblies 40 include a motor 5LF, a motor 5RF, a motor 5LB, and a motor 5RB.

As illustrated in FIG. 2, the first drive assembly 41 includes the motor 5LF, and a transmission mechanism 50LF to transmit power of the motor 5LF to the left front wheel 3LF. The transmission mechanism 50LF includes a gear mechanism including a plurality of gears, etc. The first drive assembly 41 is configured such that, when the motor 5LF is driven, the power of the motor 5LF is transmitted to the left front wheel 3LF via the transmission mechanism 50LF.

As illustrated in FIG. 3, the second drive assembly 42 includes the motor 5RF, and a transmission mechanism 50RF to transmit power of the motor 5RF to the right front wheel 3RF. The transmission mechanism 50RF includes a gear mechanism and including a plurality of gears, etc. The second drive assembly 42 is configured such that, when the motor 5RF is driven, the power of the motor 5RF is transmitted to the right front wheel 3RF via the transmission mechanism 50RF.

As illustrated in FIG. 2, the third drive assembly 43 includes the motor 5LB, and a transmission mechanism 50LB to transmit power of the motor 5LB to the left rear wheel 3LB. The transmission mechanism 50LB includes a gear mechanism including a plurality of gears, etc. The third drive assembly 43 is configured such that, when the motor 5LB is driven, the power of the motor 5LB is transmitted to the left rear wheel 3LB via the transmission mechanism 50LB.

As illustrated in FIG. 3, the fourth drive assembly 44 includes the motor 5RB, and a transmission mechanism 50RB to transmit power of the motor 5RB to the right rear wheel 3RB. The transmission mechanism 50RB includes a gear mechanism including a plurality of gears, etc. The fourth drive assembly 44 is configured such that, when the motor 5RB is driven, the power of the motor 5RB is transmitted to the right rear wheel 3RB via the transmission mechanism 50RB.

As illustrated in FIG. 7, each drive assembly 40 includes a steering mechanism 60 of the steering system 60 to change the orientation of a wheel 30. In the case of the present example embodiment, the steering system 60 is configured to change the orientation of front wheels (left front wheel 3LF, right front wheel 3RF) of the wheels 30. As illustrated in FIGS. 2 and 3, the steering system 60 includes a left steering mechanism 60L to change the orientation of the left front wheel 3LF, and a right steering mechanism 60R to change the orientation of the right front wheel 3RF.

As illustrated in FIG. 2, the first drive assembly 41 includes the left steering mechanism 60L. As illustrated in FIG. 3, the second drive assembly 42 includes the right steering mechanism 60R. The configuration of the left steering mechanism 60L and the configuration of the right steering mechanism 60R are the same, except that the configuration of the left steering mechanism 60L and the configuration of the right steering mechanism 60R are symmetrical about the center of the vehicle body 2 in a width direction (in the left-right direction). Therefore, in the following description, the configuration of the left steering mechanism 60L will be described as the configuration of each steering mechanism 60, and the description of the configuration of the right steering mechanism 60R is omitted here.

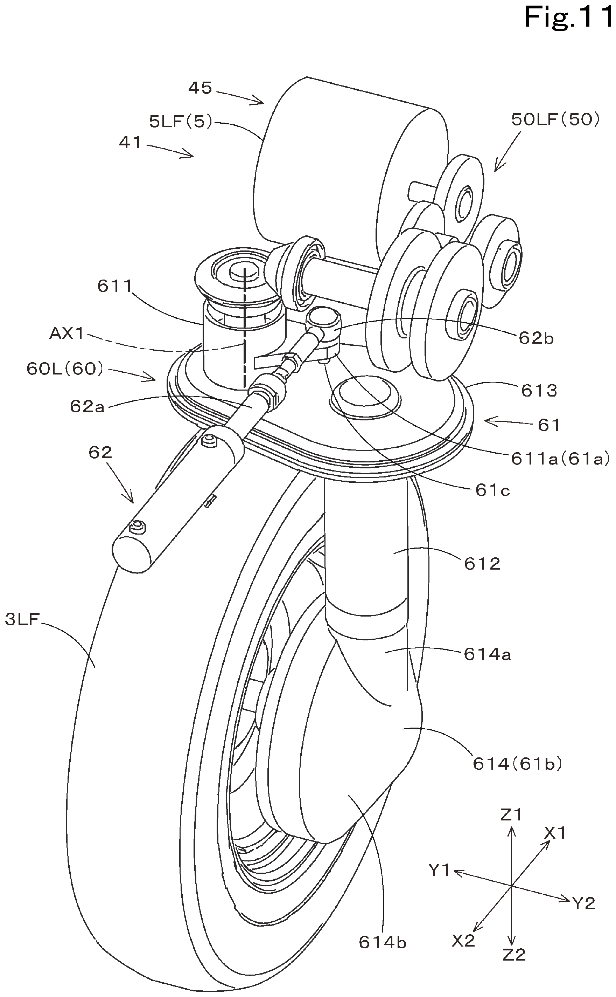

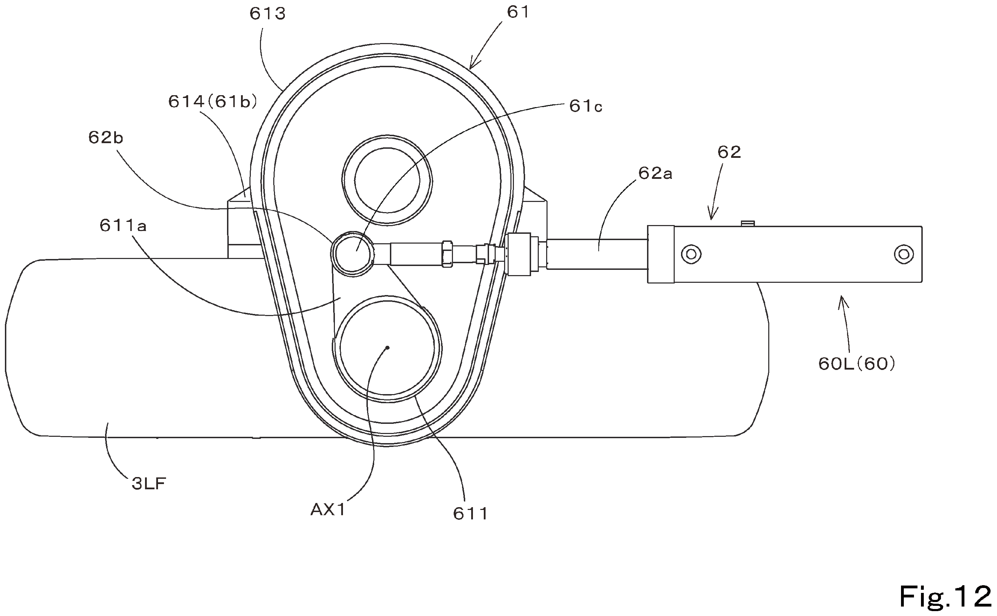

As illustrated in FIGS. 2 and 11, the steering mechanism 60 (left steering mechanism 60L) includes a turn body 61 to turn about an axis AX1 extending in the up-down direction when the wheel (left front wheel 3LF) is steered. The axis AX1 of the turn body 61 is above the wheel (left front wheel 3LF). The axis AX1 of the turn body 61 is located at a position overlapping the wheel (left front wheel 3LF) in plan view (see FIG. 12). The turn body 61 includes a first portion 611, a second portion 612, a third portion 613, and a fourth portion 614. The first portion611, the second portion 612, the third portion 613, and the fourth portion 614 are combined to define a single turn body 61.

The first portion 611 is in the form of a tube (cylinder) in which a central shaft extends in the up-down direction. The axis of the central shaft of the first portion 611 (central shaft of the cylinder) coincides with the above-described axis AX1. Thus, the central shaft of the first portion 611 is above the left front wheel 3LF. The turn body 61 turns about the axis of the central shaft of the first portion 611 (i.e., turns about the axis AX1) when the left front wheel 3LF is steered. A projection portion 611a projecting in a radial direction of the first portion 611 (a horizontal direction away from the central shaft of the first portion 611) is provided on an outer peripheral surface of the first portion 611.

The second portion 612 is in the form of a tube (cylinder) in which a central shaft extends in the up-down direction. The second portion 612 is located inward (rightward) of the wheel (left front wheel 3LF).

The third portion 613 connects a lower end portion of the first portion 611 and an upper end portion of the second portion 612. The third portion 613 is located higher than the left front wheel 3LF. The third portion 613 is in the form of an ellipse or a substantially ellipse in plan view.

The fourth portion 614 is connected to a lower end portion of the second portion 612. The fourth portion 614 includes a tubular portion 614a connected to the lower end portion of the second portion 612, and a conical portion 614b provided at a lower end of the tubular portion 614a. The fourth portion 614 is located inward (rightward) of the left front wheel 3LF.

The conical portion 614b of the fourth portion 614 is connected to the left front wheel 3LF. With this, when the fourth portion 614 turns about the axis AX1 as the turn body 61 turns about the axis AX1, the left front wheel 3LF also turns about the axis AX1. That is, as the turn body 61 turns about the axis AX1, the left front wheel 3LF also turns about the axis AX1. It is noted that the fourth portion 614 does not rotate together with the rotation of the left front wheel 3LF when the working vehicle 1 travels.

As illustrated in FIGS. 11 and 12, the steering mechanism 60 includes a cylinder 62 including a rod 62a to extend and retract in a direction perpendicular to the axis AX1 (front-rear direction). The cylinder 62 includes a hydraulic cylinder. The turn body 61 includes a first connector 61a to which the rod 62a is to be connected, and a second connector 61b to be connected to the wheel (left front wheel 3LF).

The first connector 61a includes the above-described projection portion 611a. A shaft body 61c passes through the projection portion 611a of the first connector 61a in the up-down direction. An end member 62b attached to an end of the rod 62a is fitted in an upper portion of the shaft body 61c. The end member 62b is configured to turn about the central axis of the shaft body 61c.

The second connector 61b includes the above-described fourth portion 614. The second connector 61b is located at the lower portion of the turn body 61 and is connected to an inner side (right side) of the wheel (left front wheel 3LF). The second connector 61b is connected, for example, via a bearing and/or the like such that the second connector 61b does not rotate together with the rotation of the wheel (left front wheel 3LF) when the working vehicle 1 travels.

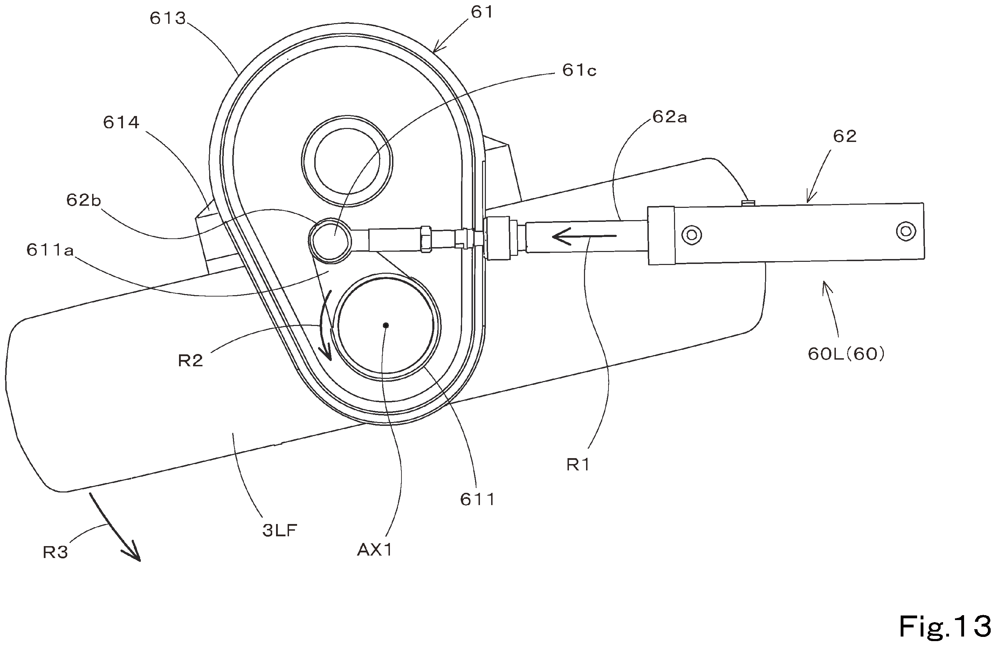

The cylinder 62 extends or retracts the rod 62a to turn the turn body 61 about the axis AX1, to turn the left front wheel 3LF about the axis AX1. First, the case where the rod 62a extends will be described. As illustrated in FIG. 13, when the rod 62a extends (see arrow R1), the first portion 611 turns about the axis AX1 together with the projection portion 611a (see arrow R2). When the first portion 611 turns about the axis AX1, the second portion 612, the third portion 613, and the fourth portion 614, which are combined with the first portion 611, also turn about the axis AX1. When the fourth portion 614 turns about the axis AX1, the left front wheel 3LF connected to the fourth portion 614 also turns about the axis AX1 (see arrow R3). With this, the left front wheel 3LF changes the orientation thereof such that the front portion of the left front wheel 3LF is oriented outward (leftward).

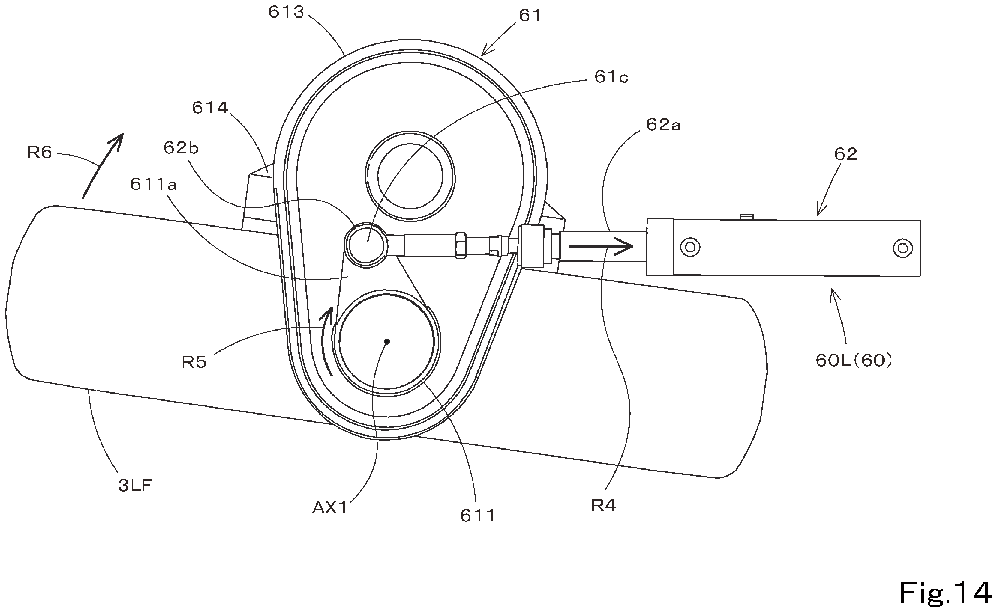

Next is a description of the case where the rod 62a retracts. As illustrated in FIG. 14, when the rod 62a retracts (see arrow R4), the first portion 611 turns about the axis AX1 together with the projection portion 611a. The turning direction in this case is the opposite direction to the turning direction in the case where the rod 62a extends. When the first portion 611 turns about the axis AX1, the second portion 612, the third portion 613, and the fourth portion 614, which are combined with the first portion 611, also turn about the axis AX1. When the fourth portion 614 turn about the axis AX1, the left front wheel 3LF connected to the fourth portion 614 also turns about the axis AX1 (see arrow R6). With this, the left front wheel 3LF changes the orientation thereof such that the front portion of the left front wheel 3LF is oriented inward (rightward).

As described above, the left steering mechanism 60L drives the cylinder 62 to extend or retract the rod 62a, to turn the left front wheel 3LF about the axis AX1. Similarly, the right steering mechanism 60R drives the cylinder 62 to extend or retract the rod 62a, to turn the right front wheel 3RF about the axis AX1. Thus, by driving the steering system 60 to change the orientation of the left front wheel 3LF and the right front wheel 3RF, it is possible to change the direction in which the working vehicle 1 travels.

As apparent from the above description, the axis AX1 which is the turning axis of a wheel (left front wheel 3LF, right front wheel 3RF) functions as a steering axis about which the wheel (left front wheel 3LF, right front wheel 3RF) is steered. It is noted here that, as described above, the axis AX1 which is the steering axis is above the wheel (front wheel). In the case where the steering system 60 is configured to steer rear wheels (left rear wheel 3LB, right rear wheel 3RB), the steering axis of each rear wheel is above the rear wheel. With this, compared to the case where the steering axis is inward of the wheel, the wheel (front wheel, rear wheel) approaches the vehicle body 2 to a lesser extent when the wheel is steered.

It is noted that the configuration of the steering system (steering mechanisms) 60 is not limited to the above-described configuration. For example, a commonly-used steering system (steering mechanisms) of a tractor using knuckle arms or the like can be used. As a different example embodiment of the drive apparatus 45, the motor of the drive apparatus 45 may be an in-wheel motor. In this case, the left front wheel 3LF, the right front wheel 3RF, the left rear wheel 3LB, and the right rear wheel 3RB may be driven by in-wheel motors, or one or more of the left front wheel 3LF, the right front wheel 3RF, the left rear wheel 3LB, and the right rear wheel 3RB (e.g., the left front wheel 3LF and the right front wheel 3RF, or the left rear wheel 3LB and the right rear wheel 3RB) may be driven by in-wheel motors.

As illustrated in FIG. 7, the working vehicle 1 includes a first detector 70. The first detector 70 detects the condition of the surrounding area of the vehicle body 2. The first detector 70 detects, as the condition of the surrounding area of the vehicle body 2, road information that is information relating to a road travelable by the traveling device 3. Specifically, the first detector 70 detects the road information which is a value relating to the road travelable by the traveling device 3. The first detector 70 detects, for example, the width of a travel road, as the road information. The width of the travel road detected by the detector 70 is the width of an object which is to be straddled (located) between the left traveling device 3L and the right traveling device 3R while the working vehicle 1 travels. The first detector 70 detects, as the width of the travel road, for example, the width of a ridge on the ground, the width of an obstruction present on the ground that obstructs the travel, or the like. Examples of the obstruction to obstruct the travel include grooves or holes in the ground, crops planted in the ground, and obstacles present on the ground (e.g., stones and artificial structures).

As illustrated in FIG. 7, the first detector 70 includes camera(s) (imager(s)) 71, sensor(s) 72, and a calculator 73. In the case of the present example embodiment, although the first detector 70 includes the camera 71 and the sensor 72, the first detector 70 may include either the camera 71 or the sensor 72.

The camera 71 includes a charge coupled devices (CCD) camera including a CCD image sensor, a complementary metal oxide semiconductor (CMOS) camera including a CMOS sensor, and/or the like. The camera 71 is provided in or on the vehicle body 2 to capture an image of the surrounding area of the vehicle body 2. The camera(s) 71 only needs to be able to capture image(s) of area(s) in one or more directions, at least including the direction in which the vehicle body 2 travels, among the forward, rearward, leftward, and rightward directions with respect to the vehicle body 2. Preferably, the cameras 71 are positioned to capture images of areas forward, rearward, and sideward (leftward, rightward) of the vehicle body 2. The camera(s) 71 may be positioned to capture image(s) of area(s) in direction(s) (e.g., forward and rightward direction, forward and leftward direction, forward and downward direction, rearward and downward direction) other than the forward, rearward, and sideward (leftward, rightward) directions with respect to the vehicle body 2.

The camera 71 captures an image of the surrounding area of the vehicle body 2, and generates an image signal. The calculator 73 includes a computer including a signal processing circuit to process the generated image signal, and/or the like. The signal processing circuit detects, based on the image signal output from the camera 71, the status of an object (presence or absence of an object, the position of an object, the type of an object, the size of an object, and/or the like). Examples of the object include the above-described ridge, obstacle, and the like.

The sensor 72 is an optical sensor, and includes, for example, a light detection and ranging (LiDAR) sensor. The sensor 72 may be a sonic sensor. Although it is preferable that the sensor 72 include both an optical sensor and a sonic sensor, the sensor 72 may include either one of them The sonic sensor includes, for example, an airborne ultrasonic sensor such as sonar.

The above-described sensor 72 is provided in or on the vehicle body 2, and detects objects in the surrounding area of the vehicle body 2. The sensor 72 only needs to detect objects in one or more directions at least including the direction of travel of the vehicle body 2, among the forward, rearward, leftward, and rightward directions of the vehicle body 2. Preferably, the sensor(s) 72 is/are positioned to detect objects in forward, rearward, and sideward (leftward, rightward) directions with respect to the vehicle body 2. The sensor(s) 72 may be positioned to detect objects in a direction other than the forward, rearward, and sideward (leftward, rightward) directions of the vehicle body 2 (e.g., forward and rightward direction, forward and leftward direction, forward and downward direction, rearward and downward direction).

As illustrated in FIG. 7, the working vehicle 1 includes second detector(s) 75. The second detector 75 detects the distance between left and right wheels. The second detector 75 may include, for example, the above-described optical sensor and/or the sonic sensor.

The distance between the left and right wheels detected by the second detector 75 is the distance between the inner surface of the left wheel(s) and the inner surface of the right wheel(s). Specifically, the distance is a smaller one of the distance between the inner surface of the left front wheel 3LF and the inner surface of the right front wheel 3RF and the distance between the inner surface of the left rear wheel 3LB and the inner surface of the right rear wheel 3RB.

As illustrated in FIG. 6, for example, in the case where the distance DB between the inner surface of the left rear wheel 3LB and the inner surface of the right rear wheel 3RB is smaller than the distance DF between the inner surface of the left front wheel 3LF and the inner surface of the right front wheel 3RF (DB < DF), the second detector 75 detects the distance DB between the inner surface of the left rear wheel 3LB and the inner surface of the right rear wheel 3RB as the distance between the left and right wheels. In the case where the distance DF between the inner surface of the left front wheel 3LF and the inner surface of the right front wheel 3RF is equal to the distance DB between the inner surface of the left rear wheel 3LB and the inner surface of the right rear wheel 3RB (DB = DF), the second detector 75 detects the distance DF or the distance DB as the distance between the left and right wheels. In the case where the distance DF between the inner surface of the left front wheel 3LF and the inner surface of the right front wheel 3RF is smaller than the distance DB between the inner surface of the left rear wheel 3LB and the inner surface of the right rear wheel 3RB (DB > DF), the second detector 75 detects the distance DF between the inner surface of the left front wheel 3LF and the inner surface of the right front wheel 3RF as the distance between the left and right wheels.

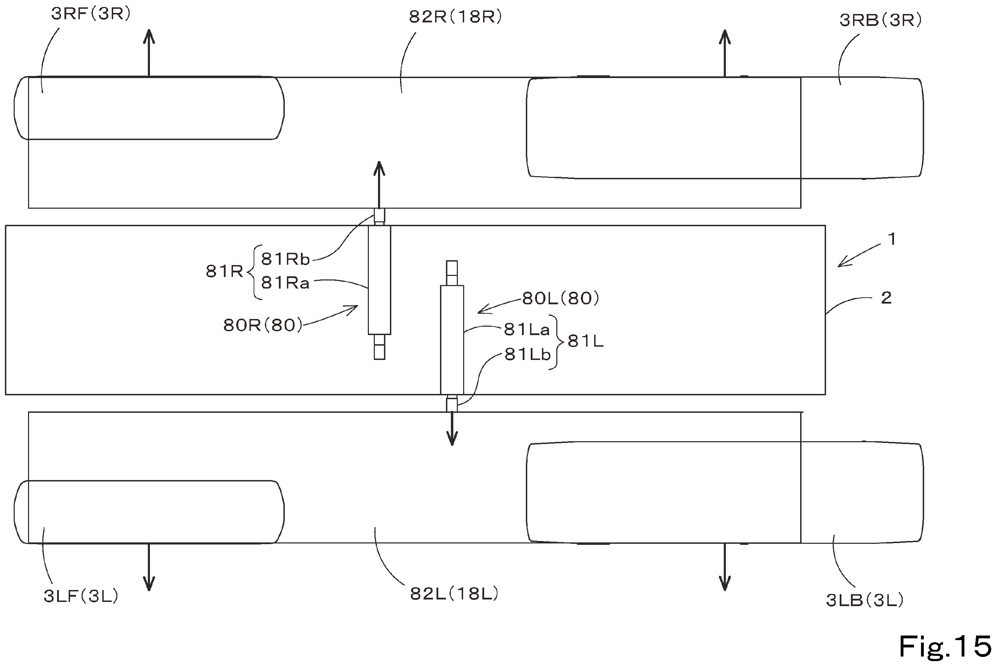

As illustrated in FIG. 7, the working vehicle 1 includes a distance changing system 80. The distance changing system 80 changes the distance between the left and right wheels. As illustrated in FIGS. 6 and 15, the distance changing system 80 includes a left changing mechanism 80L to change the left-right position of the left wheels and a right changing mechanism 80R to change the left-right position of the right wheels. It is noted that FIG. 15 is a simplified version of FIG. 6.

As illustrated in FIGS. 6 and 15, the left changing mechanism 80L includes a left cylinder 81L to move the left wheels leftward and rightward. The left cylinder 81L moves the left front wheel 3LF and the left rear wheel 3LB leftward or rightward. The left front wheel 3LF and the left rear wheel 3LB are coupled by a left coupler 82L. With this, the left cylinder 81L is configured to, by moving the left coupler 82L leftward or rightward, move the left front wheel 3LF and the left rear wheel 3LB together (as a unit) leftward or rightward.

As illustrated in FIGS. 6 and 15, the right changing mechanism 80R includes a right cylinder 81R to move the right wheels leftward and rightward. The right cylinder 81R moves the right front wheel 3RF and the right rear wheel 3RB leftward or rightward. The right front wheel 3RF and the right rear wheel 3RB are coupled by a right coupler 82R. With this, the right cylinder 81R is configured to, by moving the right coupler 82R leftward or rightward, move the right front wheel 3RF and the right rear wheel 3RB together (as a unit) leftward or rightward.

In the case of the present example embodiment, the left coupler 82L is the left frame 18L of the frame structural body 18. The right coupler 82R is the right frame 18R of the frame structural body 18. The left front wheel 3LF is rotatably attached to the first left frame 19L (see FIG. 9) of the left frame 18L via the above-described first drive assembly 41 and the like. The left rear wheel 3LB is attached to the first left frame 19L of the left frame 18L via the above-described third drive assembly 43 and the like such that the left rear wheel 3LB is rotatable during travel.

The right front wheel 3RF is rotatably attached to the first right frame 21R (see FIG. 9) of the right frame 18R via the above-described second drive assembly 42 and the like. The right rear wheel 3RB is attached to the first right frame 21R of the right frame 18R via the above-described fourth drive assembly 44 and the like such that the right rear wheel 3RB is rotatable during travel.

With this, the left front wheel 3LF and the left rear wheel 3LB (that is, left traveling device 3L) are allowed to move together with the left frame 18L in the left-right direction. The right front wheel 3RF and the right rear wheel 3RB (that is, right traveling device 3R) are allowed to move together with the right frame 18R in the left-right direction.

The right cylinder 81R and the left cylinder 81L each include a hydraulic cylinder. The hydraulic cylinders of the right cylinder 81R and the left cylinder 81L are actuated (extended and retracted) by hydraulic fluid supplied from the hydraulic pump driven by the above-described work motor 6.

As illustrated in FIGS. 6 and 15, the left cylinder 81L includes a cylinder tube 81La attached to the vehicle body 2, and a rod 81Lb projecting leftward from the cylinder tube 81La. The distal end of the rod 81Lb of the left cylinder 81L is connected to the left coupler 82L. When the rod 81Lb of the left cylinder 81L extends leftward, the left coupler 82L moves leftward, and the left front wheel 3LF and the left rear wheel 3LB move together leftward. When the rod 81Lb of the left cylinder 81L retracts rightward, the left coupler 82L moves rightward, and the left front wheel 3LF and the left rear wheel 3LB move together rightward.

As illustrated in FIG. 6 and 15, the right cylinder 81R includes a cylinder tube 81Ra attached to the vehicle body 2 and a rod 81Rb projecting rightward from the cylinder tube 81Ra. The distal end of the rod 81Rb of the right cylinder 81R is connected to the right coupler 82R. When the rod 81Rb of the right cylinder 81R extends rightward, the right coupler 82R moves rightward, and the right front wheel 3RF and the right rear wheel 3RB move together rightward. When the rod 81Rb of the right cylinder 81R retracts leftward, the right coupler 82R moves leftward, and the right front wheel 3RF and the right rear wheel 3RB move together leftward.

As described above, by actuating (by extending or retracting) the left cylinder 81L, it is possible to change the left-right position of the left front wheel 3LF and the left rear wheel 3LB (left wheels). By actuating (by extending or retracting) the right cylinder 81R, it is possible to change the left-right position of the right front wheel 3RF and the right rear wheel 3RB (right wheels). Therefore, by actuating one or both of the left cylinder 81L and the right cylinder 81R, it is possible to change the distance between left and right wheels.

In the case of changing the distance between left and right wheels, it is preferable to move (extend or retract) the rod of the left cylinder 81L and the rod of the right cylinder 81R by equal distances in opposite directions to each other. However, in the case of changing the distance between left and right wheels, the rod of the left cylinder 81L and the rod of the right cylinder 81R may be moved by different distances in opposite directions to each other, or the rod of the left cylinder 81L and the rod of the right cylinder 81R may be moved by different distances in the same direction.

In the following description, the rod 81Lb of the left cylinder 81L and the rod 81Rb of the right cylinder 81R may be referred to as "rod(s) 81b". The rod(s) 81b indicates the rod 81Lb of the left cylinder 81L and/or the rod 81Rb of the right cylinder 81R.

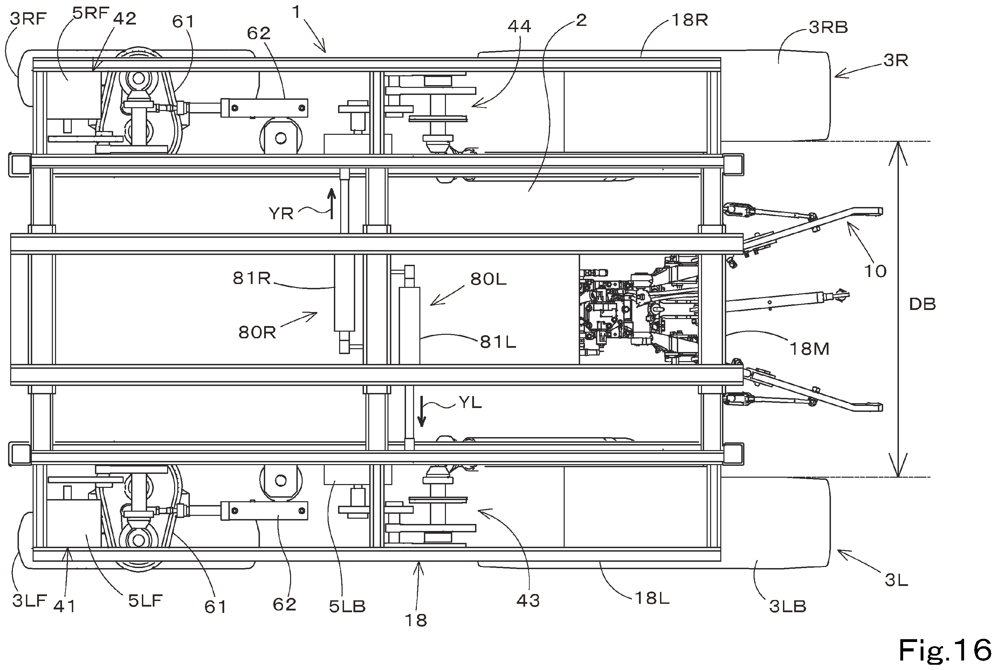

FIGS. 6 and 15 indicate that the rods of the left cylinder 81L and the right cylinder 81R are in their retracted states. In this state, the distance DB (see FIG. 6) between the left and right wheels is small. When the rods of the left cylinder 81L and the right cylinder 81R extend (see arrows YL, YR in FIG 16) from this state, the left wheels (left front wheel 3LF, left rear wheel 3LB) and the right wheels (right front wheel 3RF, right rear wheel 3RB) move in opposite directions to each other (see arrows in FIG. 15). With this, as illustrated in FIG. 16, it is possible to increase the distance DB (see FIG. 6) between the left and right wheels.

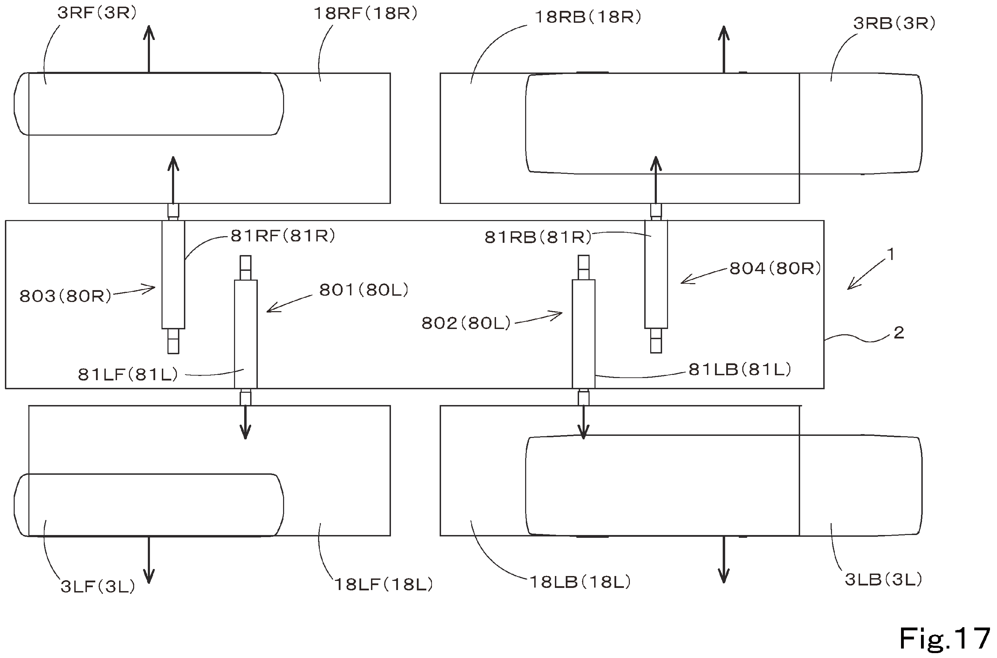

FIG. 17 illustrates a variation of the distance changing system 80. As illustrated in FIG. 17, the distance changing system 80 may include a first changing mechanism 801 to change the left-right position of the left front wheel 3LF, a second changing mechanism 802 to change the left-right position of the left rear wheel 3LB, a third changing mechanism 803 to change the left-right position of the right front wheel 3RF, and a fourth changing mechanism 804 to change the left-right position of the right rear wheel 3RB. In this case, the left changing mechanism 80L includes the first changing mechanism 801 and the second changing mechanism 802. The right changing mechanism 80R includes the third changing mechanism 803 and the fourth changing mechanism 804.

In this case, there are a plurality of the left cylinders 81L including a left front cylinder 81LF to cause the left front wheel 3LF to move leftward and rightward, and a left rear cylinder 81LB to cause the left rear wheel 3LB to move leftward and rightward. There are a plurality of the right cylinders 81R including a right front cylinder 81RF to cause the right front wheel 3RF to move leftward and rightward, and a right rear cylinder 81RB to cause the right rear wheel 3RB to move leftward and rightward.

In this case, the left coupler 82L to couple the left front wheel 3LF and the left rear wheel 3LB is not present, and the left front wheel 3LF and the left rear wheel 3LB are not coupled. The left frame 18L is divided in two front and rear portions, one of which is a forward left frame 18LF to which the left front wheel 3LF is to be attached, and the other of which is a rearward left frame 18LB to which the left rear wheel 3LB is to be attached. With this, the left front wheel 3LF and the left rear wheel 3LB are allowed to move in the left-right direction independently of each other.

Furthermore, the right coupler 82R to couple the right front wheel 3RF and the right rear wheel 3RB is not present, and the right front wheel 3RF and the right rear wheel 3RB are not coupled. The right frame 18R is divided in two front and rear portions, one of which is a forward right frame 18RF to which the right front wheel 3RF is to be attached, and the other of which is a rearward right frame 18RB to which the right rear wheel 3RB is to be attached. With this, the right front wheel 3RF and the right rear wheel 3RB are allowed to move in the left-right direction independently of each other.

The first changing mechanism 801, the second changing mechanism 802, the third changing mechanism 803, and the fourth changing mechanism 804 can be driven independently. Specifically, the left front cylinder 81LF, the left rear cylinder 81LB, the right front cylinder 81RF, and the right rear cylinder 81RB can be actuated independently. This makes it possible to independently change the left-right position of the left front wheel 3LF, the left-right position of the left rear wheel 3LB, the left-right position of the right front wheel 3RF, and the left-right position of the right rear wheel 3RB.

Arrows in FIG. 17 indicate a state in which the rods of the left front cylinder 81LF, the left rear cylinder 81LB, the right front cylinder 81RF, and the right rear cylinder 81RB are each extended to independently change the left-right position of the left front wheel 3LF, the left-right position of the left rear wheel 3LB, the left-right position of the right front wheel 3RF, and the left-right position of the right rear wheel 3RB.

The distance changing system 80 changes the distance between left and right wheels by actuating both or one of the left changing mechanism 80L and the right changing mechanism 80R of the distance changing system 80. When the left changing mechanism 80L is actuated, the rod(s) of the left cylinder(s) 81L extend(s) or retract(s), so that the left-right positions of the left wheels are changed. When the right changing mechanism 80R is actuated, the rod(s) of the right cylinder(s) 81R extend(s) or retract(s), so that the left-right positions of the right wheels are changed. When the left-right position(s) of both or one of the left wheels and the right wheels is/are changed, and the distance between the left and right wheels is changed. Preferably, the distance changing system 80 changes the left-right positions of the left wheels and right wheels by the same distance in opposite directions to each other.

The second detector(s) 75 is/are configured to detect the amount (degree) of extension or retraction of each of the left changing mechanism 80L and the right changing mechanism 80R to detect the distance between the left and right wheels. Specifically, the second detector 75 is configured to detect the amount of extension or retraction of the rod(s) of the left cylinder(s) 81L of the left changing mechanism 80L and the amount of extension or retraction of the rod(s) of the right cylinder(s) 81R of the right changing mechanism 80R, to detect the distance between the left and right wheels.

In this case, the storage unit of the controller 15 stores, in advance, information relating to a relationship between the amount of extension or retraction of the rod(s) of the left cylinder(s) 81L and the position of the left wheels, a relationship between the amount of extension or retraction of the rod(s) of the right cylinder(s) 81R and the position of the right wheels, a relationship between "the positions of the left wheels and the right wheels" and "the distance between left and right wheels", and/or the like. The second detector 75 detects the amount of extension or retraction of the rod of the left cylinder(s) 81L and the right cylinder(s) 81R, and detects the distance between left and right wheels based on the detection result and the information stored in the storage unit.

The distance changing system 80 increases the distance between left wheel(s) (left front wheel 3LF and/or left rear wheel 3LB) and right wheel(s) (right front wheel 3RF and/or right rear wheel 3RB) when steering is performed by the steering system 60. As used herein, the term "increasing the distance between left and right wheels when steering is performed" indicates "increasing the distance between left and right wheels in the case where steering is performed", and does not indicate "increasing the distance between left and each wheels simultaneously with steering".

The controller 15 is configured or programmed to, when controlling the steering system 60 to perform steering, also control the distance changing system 80 to increase the distance between left and right wheels. In this case, an operation performed by the distance changing system 80 to increase the distance between left and right wheels is performed before the operation of steering performed by the steering system 60.

Therefore, in other words, the distance changing system 80 increases the distance between left wheel(s) (left front wheel 3LF and/or left rear wheel 3LB) and right wheel(s) (right front wheel 3RF and/or right rear wheel 3RB) before the steering is performed (e.g., immediately before the steering is performed) by the steering system 60. In the following description, this operation of the distance changing system 80 is referred to as a "steering-time inter-wheel-distance-increasing operation". The steering-time inter-wheel-distance-increasing operation is performed during travel of the working vehicle 1, but may be performed before the travel.

The following describes the steering-time inter-wheel-distance-increasing operation with some examples. In the following description, "when performing steering (or when the [...] performs steering, when steering is performed, or when the [...] steers [...], etc.)" may be interpreted as "before performing steering (or before the [...] perform steering, before steering is performed, or before the [...] steers [...], etc.)" or "immediately before performing steering (or immediately before the [...] performs steering, immediately before steering is performed, or immediately before the [...] steers [...], etc.)".

As an example (first example) of the steering-time inter-wheel-distance-increasing operation, when the steering system 60 steers the left front wheel 3LF and the right front wheel 3RF, the distance changing system 80 increases the distance between the left front wheel 3LF and the right front wheel 3RF. That is, when the steering system 60 performs steering to change the orientations of the left front wheel 3LF and the right front wheel 3RF, the distance changing system 80 increases the distance between the left front wheel 3LF and the right front wheel 3RF.

As another example (second example) of the steering-time inter-wheel-distance-increasing operation, when the steering system 60 steers the left rear wheel 3LB and the right rear wheel 3RB, the distance changing system 80 increases the distance between the left rear wheel 3LB and the right rear wheel 3RB. That is, when the steering system 60 performs steering to change the orientations of the left rear wheel 3LB and the right rear wheel 3RB, the distance changing system 80 increases the distance between the left rear wheel 3LB and the right rear wheel 3RB.

As another example (third example) of the steering-time inter-wheel-distance-increasing operation, when the steering system 60 steers the left front wheel 3LF, the right front wheel 3RF, the left rear wheel 3LB, and the right rear wheel 3RB, the distance changing system 80 increases the distance between the left front wheel 3LF and the right front wheel 3RF and the distance between the left rear wheel 3LB and the right rear wheel 3RB. That is, when the steering system 60 performs steering to change the orientations of the left front wheel 3LF and the right front wheel 3RF and the orientations of the left rear wheel 3LB and the right rear wheel 3RB, the distance changing system 80 increases the distance between the left front wheel 3LF and the right front wheel 3RF and the distance between the left rear wheel 3LB and the right rear wheel 3RB.

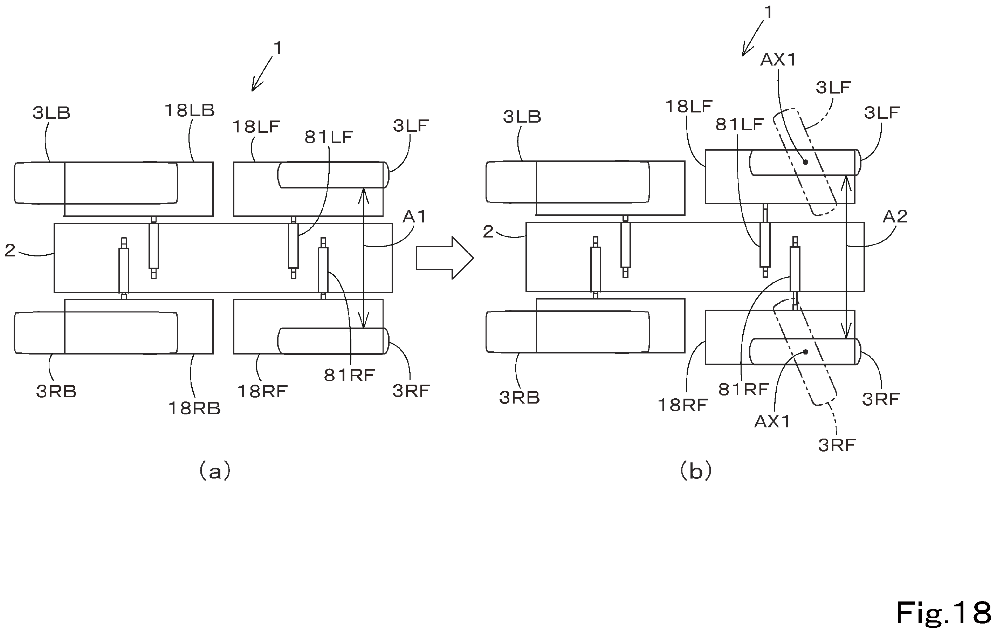

FIG. 18 illustrates the first example of the steering-time inter-wheel-distance-increasing operation. The steering-time inter-wheel-distance-increasing operation of the first example can be performed by the working vehicle 1 including the distance changing system 80 illustrated in FIG. 17. The distance changing system 80 illustrated in FIG. 17 includes the first changing mechanism 801 to change the left-right position of the left front wheel 3LF, the second changing mechanism 802 to change the left-right position of the left rear wheel 3LB, the third changing mechanism 803 to change the left-right position of the right front wheel 3RF, and the fourth changing mechanism 804 to change the left-right position of the right rear wheel 3RB. However, the distance changing system 80 to perform the steering-time inter-wheel-distance-increasing operation in the first example only needs to include at least the first changing mechanism 801 and the third changing mechanism 803, and does not need to include the second changing mechanism 802 and the fourth changing mechanism 804.

As illustrated in (a) in FIG. 18, when the working vehicle 1 travels straight, the distance between the left front wheel 3LF and the right front wheel 3RF is a first distance A1 which is a reference distance. When the distance between the left front wheel 3LF and the right front wheel 3RF is the first distance A1, the rod of the left front cylinder 81LF and the rod of the right front cylinder 81RF are in a not-extended state (retracted state).

As illustrated in (b) in FIG. 18, when the steering system 60 steers the left front wheel 3LF and the right front wheel 3RF (see the left front wheel 3LF and the right front wheel 3RF indicated by imaginary lines), the working vehicle 1 increases the distance between the left front wheel 3LF and the right front wheel 3RF to a second distance A2 which is larger than the first distance A1. The increase of the distance is achieved by extending the rod of the left front cylinder 81LF and the rod of the right front cylinder 81RF.

With this, when the left front wheel 3LF and the right front wheel 3RF are steered, the distance between the left front wheel 3LF and the vehicle body 2 and the distance between the right front wheel 3RF and the vehicle body 2 increase. Therefore, the angle through which each of the left front wheel 3LF and the right front wheel 3RF can be steered without interfering with the vehicle body 2 (angle through which the wheel can turn about the steering axis AX1) increases. Thus, it is possible to increase the steering angle of the left front wheel 3LF and the right front wheel 3RF (see imaginary lines in (b) in FIG. 18).

It is preferable that the second distance A2 be a distance which allows the steering angle of the left front wheel 3LF and the right front wheel 3RF to be 90 degrees. That is, it is preferable that the maximum steering angle of the left front wheel 3LF and the right front wheel 3RF when the distance between the left front wheel 3LF and the right front wheel 3RF is the second distance A2 be 90 degrees. However, the maximum steering angle of the left front wheel 3LF and the right front wheel 3RF when the distance between the left front wheel 3LF and the right front wheel 3RF is the second distance A2 may be smaller than 90 degrees.

As described above, by performing the steering-time inter-wheel-distance-increasing operation of the first example, it is possible to increase the steering angle of the left front wheel 3LF and the right front wheel 3RF. Therefore, it is possible to reduce the turning radius when steering the front wheels of the working vehicle 1 to cause the vehicle body 2 to turn.

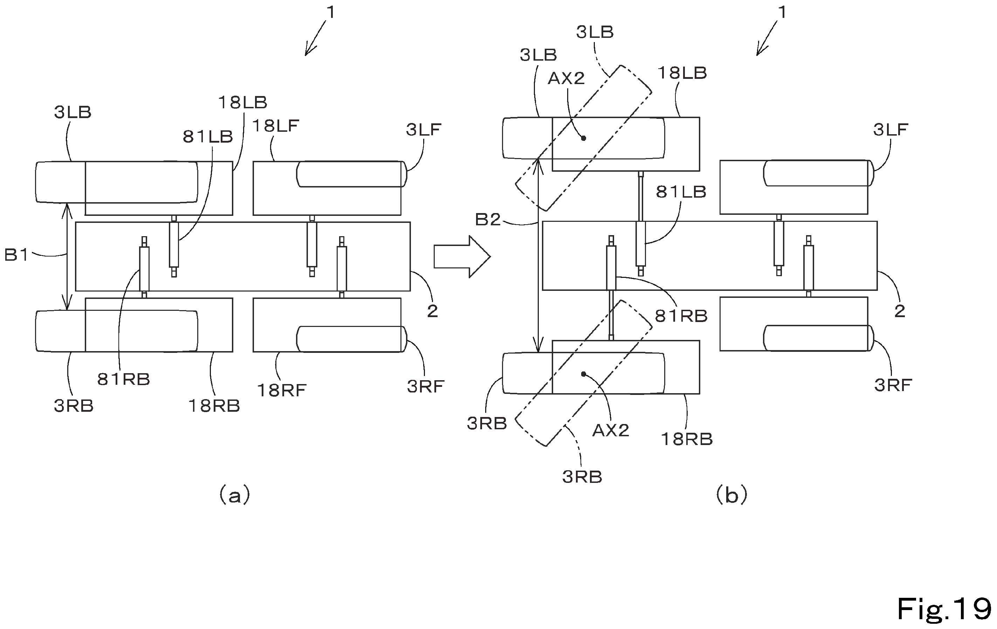

FIG. 19 illustrates the second example of the steering-time inter-wheel-distance-increasing operation. The steering-time inter-wheel-distance-increasing operation of the second example can be performed by the working vehicle 1 including the distance changing system 80 illustrated in FIG. 17. However, the distance changing system 80 to perform the steering-time inter-wheel-distance-increasing operation of the second example only needs to include at least the second changing mechanism 802 and the fourth changing mechanism 804, and does not need to include the first changing mechanism 801 and the third changing mechanism 803.

As illustrated in (a) in FIG. 19, when the working vehicle 1 travels straight, the distance between the left rear wheel 3LB and the right rear wheel 3RB is a first distance B1 which is a reference distance. When the distance between the left rear wheel 3LB and the right rear wheel 3RB is the first distance B1, the rod of the left rear cylinder 81LB and the rod of the right rear cylinder 81RB are in the not-extended state (retracted state).

As illustrated in (b) in FIG. 19, when the steering system 60 steers the left rear wheel 3LB and the right rear wheel 3RB, the working vehicle 1 increases the distance between the left rear wheel 3LB and the right rear wheel 3RB to a second distance B2 which is larger than the first distance B1. The increase of the distance is achieved by extending the rod of the left rear cylinder 81LB and the rod of the right rear cylinder 81RB.

With this, when the left rear wheel 3LB and the right rear wheel 3RB are steered, the distance between the left rear wheel 3LB and the vehicle body 2 and the distance between the right rear wheel 3RB and the vehicle body 2 increase. Therefore, the angle through which each of the left rear wheel 3LB and the right rear wheel 3RB can be steered without interfering with the vehicle body 2 (angle through which the wheel can turn about the steering axis AX2) increases. Thus, it is possible to increase the steering angle of the left rear wheel 3LB and the right rear wheel 3RB (see imaginary lines in (b) in FIG. 19).

It is preferable that the second distance B2 be a distance which allows the steering angle of the left rear wheel 3LB and the right rear wheel 3RB to be 90 degrees. That is, it is preferable that the maximum steering angle of the left rear wheel 3LB and the right rear wheel 3RB when the distance between the left rear wheel 3LB and the right rear wheel 3RB is the second distance B2 be 90 degrees. However, the maximum steering angle of the left rear wheel 3LB and the right rear wheel 3RB when the distance between the left rear wheel 3LB and the right rear wheel 3RB is the second distance B2 may be smaller than 90 degrees.

As described above, by performing the steering-time inter-wheel-distance-increasing operation of the second example, it is possible to increase the steering angle of the left rear wheel 3LB and the right rear wheel 3RB. Therefore, it is possible to reduce the turning radius when steering the rear wheels of the working vehicle 1 to cause the vehicle body 2 to turn.

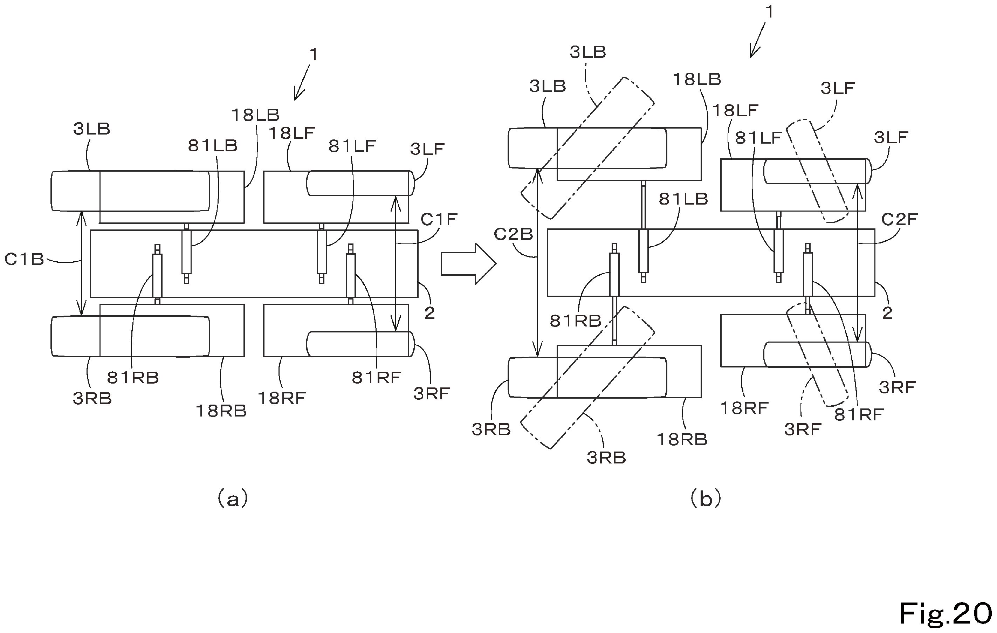

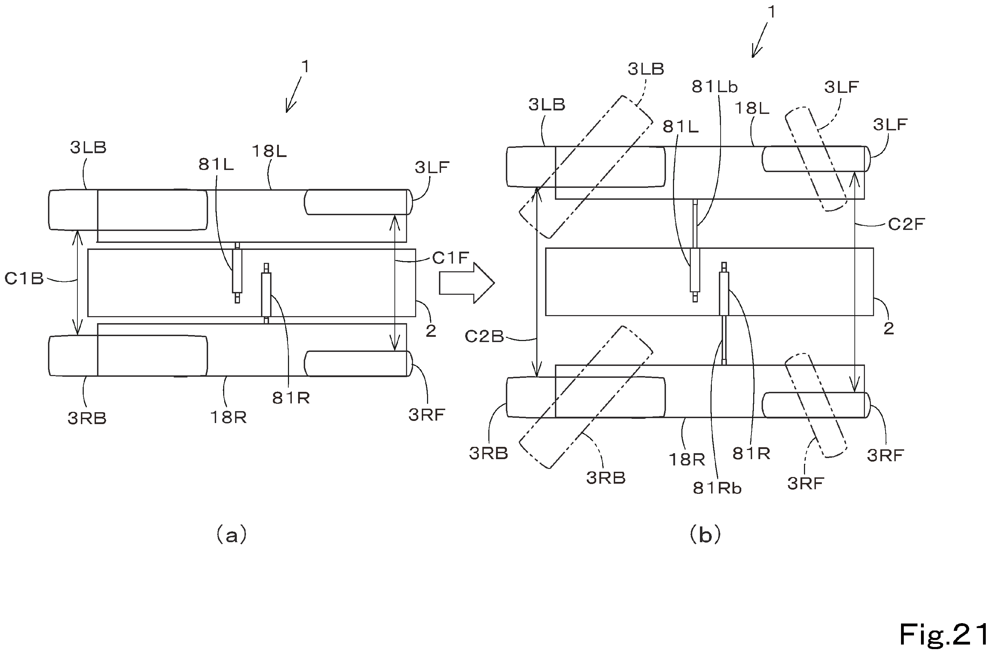

FIGS. 20 and 21 illustrate the third example of the steering-time inter-wheel-distance-increasing operation. The steering-time inter-wheel-distance-increasing operation of the third example can be performed by the working vehicle 1 including the distance changing system 80 illustrated in FIG. 15 or 17. FIG. 20 illustrates the working vehicle 1 including the distance changing system 80 illustrated in FIG. 17. FIG. 21 illustrates the working vehicle 1 including the distance changing system 80 illustrated in FIG. 15.

First, with reference to FIG. 20, the following describes the third example of the steering-time inter-wheel-distance-increasing operation of the working vehicle 1 including the distance changing system 80 illustrated in FIG. 17.

As illustrated in (a) in FIG. 20, when the working vehicle 1 travels straight, the distance between the left front wheel 3LF and the right front wheel 3RF is a first distance C1F which is a reference distance, and the distance between the left rear wheel 3LB and the right rear wheel 3RB is a first distance C1B which is a reference distance. When the distance between the left front wheel 3LF and the right front wheel 3RF is the first distance C1F, the rod of the left front cylinder 81LF and the rod of the right front cylinder 81RF are in the not-extended state (retracted state). When the distance between the left rear wheel 3LB and the right rear wheel 3RB is the first distance C1B, the rod of the left rear cylinder 81LB and the rod of the right rear cylinder 81RB are in the not-extended state (retracted state).

As illustrated in (a) in FIG. 20, when the steering system 60 steers the left front wheel 3LF and the right front wheel 3RF and steers the left rear wheel 3LB and the right rear wheel 3RB, the working vehicle 1 increases the distance between the left front wheel 3LF and the right front wheel 3RF to a second distance C2F which is larger than the first distance C1F, and increases the distance between the left rear wheel 3LB and the right rear wheel 3RB to a second distance C2B which is larger than the first distance C1B. The increases of the distances are achieved by extending the rod of the left front cylinder 81LF, the rod of the right front cylinder 81RF, the rod of the left rear cylinder 81LB, and the rod of the right rear cylinder 81RB.

With this, when the left front wheel 3LF and the right front wheel 3RF are steered and the left rear wheel 3LB and the right rear wheel 3RB are steered, the distance between the left front wheel 3LF and the vehicle body 2, the distance between the right front wheel 3RF and the vehicle body 2, the distance between the left rear wheel 3LB and the vehicle body 2, and the distance between the right rear wheel 3RB and the vehicle body 2 increase. Therefore, the angle through which each of the left front wheel 2LF, the right front wheel 3RF, the left rear wheel 3LB, and the right rear wheel 3RB can be steered without interfering with the vehicle body 2 increases. Therefore, it is possible to increase the steering angle of the left front wheel 3LF, the right front wheel 3RF, the left rear wheel 3LB, and the right rear wheel 3RB (see imaginary lines in (b) in FIG. 20).

Although it is preferable that the distance C2F be a distance which allows the steering angle of the left front wheel 3LF and the right front wheel 3RF to be 90 degrees, the steering angle may be smaller than 90 degrees. Although it is preferable that the distance C2B be a distance which allows the steering angle of the left rear wheel 3LB and the right rear wheel 3RB to be 90 degrees, the steering angle may be smaller than 90 degrees.

As described above, by performing the steering-time inter-wheel-distance-increasing operation of the third example, it is possible to increase the steering angle of the left front wheel 3LF, the right front wheel 3RF, the left rear wheel 3LB, and the right rear wheel 3RB. Therefore, it is possible to reduce the turning radius when steering the front wheels and the rear wheels of the working vehicle 1 to cause the vehicle body 2 to turn.

Next, with reference to FIG. 21, the following describes the third example of the steering-time inter-wheel-distance-increasing operation of the working vehicle 1 including the distance changing system 80 illustrated in FIG. 15. The description discusses only the differences from the description with reference to FIG. 20 (third example of the steering-time inter-wheel-distance-increasing operation of the working vehicle 1 including the distance changing system 80 illustrated in FIG. 17).

As illustrated in (a) in FIG. 21, when the distance between the left front wheel 3LF and the right front wheel 3RF is the first distance C1F and the distance between the left rear wheel 3LB and the right rear wheel 3RB is the first distance C1B, the rod of the left cylinder 81L and the rod of the right cylinder 81R are in the not-extended state (retracted state).

As illustrated in (b) in FIG. 21, when the steering system 60 steers the left front wheel 3LF and the right front wheel 3RF and steer the left rear wheel 3LB and the right rear wheel 3RB, the working vehicle 1 increases the distance between the left front wheel 3LF and the right front wheel 3RF to the second distance C2F which is larger than the first distance C1F, and increases the distance between the left rear wheel 3LB and the right rear wheel 3RB to the second distance C2B which is larger than the first distance C1B. The increases of the distances are achieved by extending the rod 81Lb of the left cylinder 81L and the rod 81Rb of the right cylinder 81R.

With this, when the left front wheel 3LF and the right front wheel 3RF are steered and the left rear wheel 3LB and the right rear wheel 3RB are steered, the distance between the left front wheel 3LF and the vehicle body 2, the distance between the right front wheel 3RF and the vehicle body 2, the distance between the left rear wheel 3LB and the vehicle body 2, and the distance between the right rear wheel 3RB and the vehicle body 2 increase. Therefore, the angle through which each of the left front wheel 2LF, the right front wheel 3RF, the left rear wheel 3LB, and the right rear wheel 3RB can be steered without interfering with the vehicle body 2 increases. Therefore, it is possible to increase the steering angle of the left front wheel 3LF, the right front wheel 3RF, the left rear wheel 3LB, and the right rear wheel 3RB (see imaginary lines in (b) in FIG. 21).

As described above, the working vehicle 1 is configured to, by the distance changing system 80 performing the steering-time inter-wheel-distance-increasing operation of one of the above-described first to third examples, increase the distance between a wheel and the vehicle body 2 and increase the steering angle of the wheels. Therefore, it is possible to reduce the turning radius of the vehicle body 2 and cause the vehicle body 2 to turn even in a small space.

Furthermore, since it is possible to increase the steering angle of wheels, the distance between the vehicle body 2 and each wheel (each steered wheel) before the steering-time inter-wheel-distance-increasing operation can be set to a small value. That is, without having to use a design which already has the space required for steering between the vehicle body 2 and each wheel (each steered wheel), it is possible to make space for steering by the distance changing system 80 performing the steering-time inter-wheel-distance-increasing operation. In other words, since the working vehicle 1 is configured to be able to perform steering by the distance changing system 80 performing the steering-time inter-wheel-distance-increasing operation, it is not necessary to have the space for steering between the vehicle body 2 and each wheel (each steered wheel) before the steering-time inter-wheel-distance-increasing operation is performed. With this, it is possible to increase the width of the vehicle body 2 such that the vehicle body 2 is near each wheel (each steered wheel) (reduce the distance between the vehicle body 2 and each wheel). As a result, it is possible to increase the width of the vehicle body 2 without increasing the width of the working vehicle 1, and thus possible to ensure a large internal space to store devices in the vehicle body 2.

As described above, the steering-time inter-wheel-distance-increasing operation of the distance changing system 80 can be performed by driving actuator(s) (left cylinder(s) 81L and right cylinder(s) 81R) when steering is performed by the steering system 60. However, the steering-time inter-wheel-distance-increasing operation can be performed by a method that does not use actuators (left cylinder(s) 81L and right cylinder(s) 81R) of the distance changing system 80. In the following description, the steering-time inter-wheel-distance-increasing operation using this method is referred to as a "first variation".

In the first variation, when the vehicle body 2 travels, the steering system 60 changes the orientations of left and right wheels such that the front portion of each wheel in the direction of travel moves away from the vehicle body 2. The distance changing system 80 increases the distance between left and right wheels using a reaction force form the ground that results from changes in the orientation of the left and right wheels changed by the steering system 60. The following provides more details.

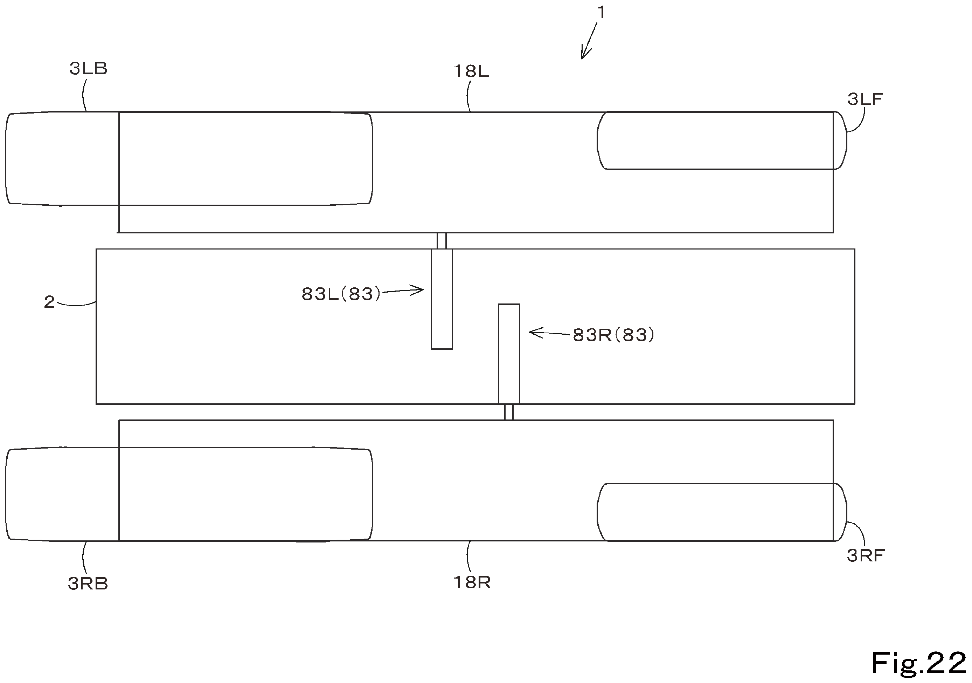

FIG. 22 is a plan view schematically illustrating the working vehicle 1 including the distance changing system 80 including a configuration (hereinafter "first configuration A") to perform the first variation. The distance changing system 80 including the first configuration A includes extension-retraction mechanism(s) 83. The extension-retraction mechanisms 83 include a left extension-retraction mechanism 83L and a right extension-retraction mechanism 83R. The working vehicle 1 illustrated in FIG. 22 includes the left extension-retraction mechanism 83L instead of the left cylinder 81L of the working vehicle 1 illustrated in FIG. 15, and includes the right extension-retraction mechanism 83R instead of the right cylinder 81R of the working vehicle 1 illustrated in FIG. 15.

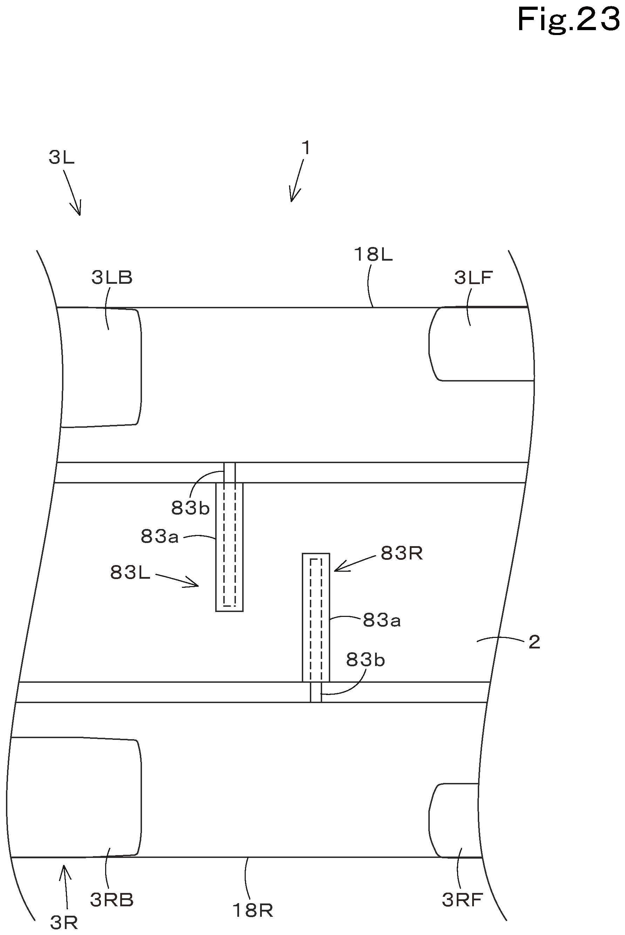

FIG. 23 illustrates an example of a configuration of each extension-retraction mechanism 83. Note, however, that the configuration of the extension-retraction mechanism 83 is not limited to the configuration illustrated in FIG. 23. Each extension-retraction mechanism 83 includes a tubular body 83a and a rod 83b. The rod 83b is housed in the tubular body 83a, and the distal end of the rod 83b projects from the tubular body 83a. The rod 83b is configured to move with respect to the tubular body 83a (along the tubular body 83a). When the rod 83b moves with respect to the tubular body 83a, the length of the projecting portion thereof that projects from the tubular body 83a changes.

A central axial direction of each of the tubular body 83a and the rod 83b extends in the left-right direction (vehicle body width direction). Thus, the rod 83b is allowed to move in the left-right direction with respect to the tubular body 83a. The tubular body 83a is fixed to the vehicle body 2. The distal end of the rod 83b is fixed to the left traveling device 3L or the right traveling device 3R. The distal end of the rod 83b of the left extension-retraction mechanism 83L is fixed to the left traveling device 3L. The distal end of the rod 83b of the right extension-retraction mechanism 83R is fixed to the right traveling device 3R. Specifically, the distal end of the rod 83b of the left extension-retraction mechanism 83L is fixed to the left frame 18L supporting the left traveling device 3L. The distal end of the rod 83b of the right extension-retraction mechanism 83R is fixed to the right frame 18R supporting the right traveling device 3R.

With this, the rod 83b of the left extension-retraction mechanism 83L extends (increases the amount (degree) of projection thereof from the tubular body 83a) when the left traveling device 3L moves leftward, and the rod 83b of the left extension-retraction mechanism 83L retracts (decreases the amount (degree) of projection thereof from the tubular body 83a) when the left traveling device 3L moves rightward. The rod 83b of the right extension-retraction mechanism 83R extends when the right traveling device 3R moves rightward, and the rod 83b of the right extension-retraction mechanism 83R retracts when the right traveling device 3R moves leftward.

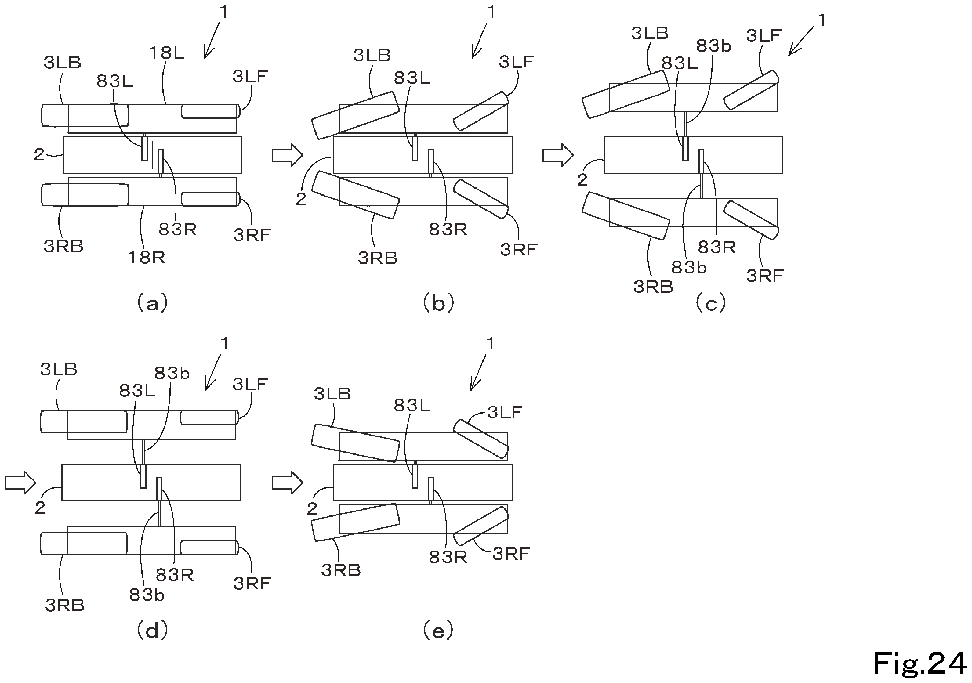

FIG. 24 illustrates the steering-time inter-wheel-distance-increasing operation of the working vehicle 1 including the configuration (first configuration A) illustrated in FIG. 22. As illustrated in (a) in FIG. 24, the working vehicle 1 is such that, when the vehicle body 2 travels before steering (when the vehicle body 2 travels straight), the rod of the left extension-retraction mechanism 83L and the rod of the right extension-retraction mechanism 83R are in the not-extended state (retracted state).

As illustrated in (b) in FIG. 24, when the vehicle body 2 travels, the steering system 60 changes the orientations of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel moves away from the vehicle body 2.

That is, in the case where the vehicle body 2 travels forward (in the case illustrated in FIG. 24), the steering system 60 changes the orientations of left wheels (left front wheel 3LF, left rear wheel 3LB) and right wheels (right front wheel 3LB, right rear wheel 3RB) such that the front portion of each wheel (left front wheel 3LF, right front wheel 3RF, left rear wheel 3LB, right rear wheel 3RB) moves away from the vehicle body 2. In the case where the vehicle body 2 travels rearward (not illustrated), the steering system 60 changes the orientations of left wheels (left front wheel 3LF, left rear wheel 3LB) and right wheels (right front wheel 3RF, right rear wheel 3RB) such that the rear portion of each wheel (left front wheel 3LF, right front wheel 3RF, left rear wheel 3LB, right rear wheel 3RB) moves away from the vehicle body 2.

When the orientations of left wheels and right wheels are changed as described above, the orientations of left wheels and right wheels do not match the direction of travel of the vehicle body 2 anymore, and therefore the left wheels and the right wheels receive a reaction force from the ground. A portion of the reaction force (a component of the force) acts on the left wheels in the leftward direction, and acts on the right wheels in the rightward direction. Thus, when the left wheels and the right wheels receive the reaction force from the ground, the rod 83b of the left extension-retraction mechanism 83L and the rod 83b of the right extension-retraction mechanism 83R extend. With this, the distance between the left frame 18L and the right frame 18R increases, and the distance between left and right wheels increases (see (c) in FIG. 24).

After the distance between left and each wheels increases, the steering system 60 restores the orientations of left wheels (left front wheel 3LF, left rear wheel 3LB) and right wheels (right front wheel 3RF, right rear wheel 3RB) to the original orientations (orientation before the distance between left and right wheels increases) while the distance remains increased (see (d) in FIG. 24).

In the case of reducing the distance between left and right wheels, the steering system 60 changes the orientations of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel approaches the vehicle body 2 (see (e) in FIG. 24). When the orientations of left wheels and right wheels are changed as described above, the left wheels and the right wheels receive a reaction force from the ground inward (toward the vehicle body 2). With this, the rod 83b of the left extension-retraction mechanism 83L and the rod 83b of the right extension-retraction mechanism 83R retract, and the distance between left and right wheels decreases.

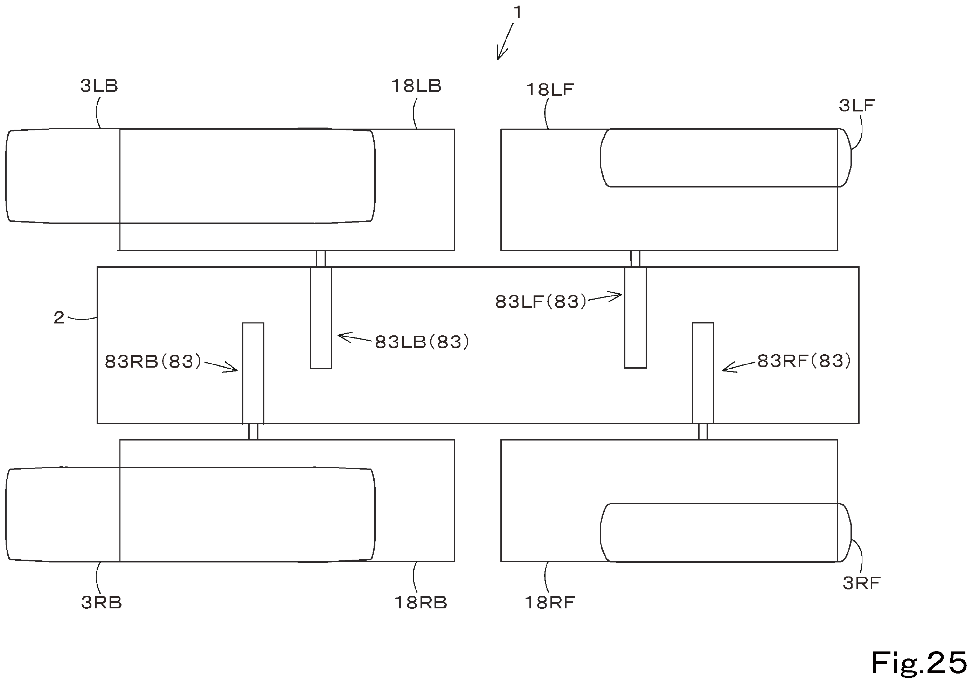

FIG. 25 is a plan view schematically illustrating the working vehicle 1 including the distance changing system 80 including another configuration (hereinafter "first configuration B") to perform the first variation. The distance changing system 80 including the first configuration B includes, as the extension-retraction mechanisms 83, a left front extension-retraction mechanism 83LF, a left rear extension-retraction mechanism 83LB, a right front extension-retraction mechanism 83RF, and a right rear extension-retraction mechanism 83RB. The working vehicle 1 illustrated in FIG. 25 includes the left front extension-retraction mechanism 83LF instead of the left front cylinder 81LF of the working vehicle 1 illustrated in FIG. 17, includes the left rear extension-retraction mechanism 83LB instead of the left rear cylinder 81LB of the working vehicle 1 illustrated in FIG. 17, includes the right front extension-retraction mechanism 83RF instead of the right front cylinder 81RF of the working vehicle 1 illustrated in FIG. 17, and includes the right rear extension-retraction mechanism 83RB instead of the right rear cylinder 81RB of the working vehicle 1 illustrated in FIG. 17.

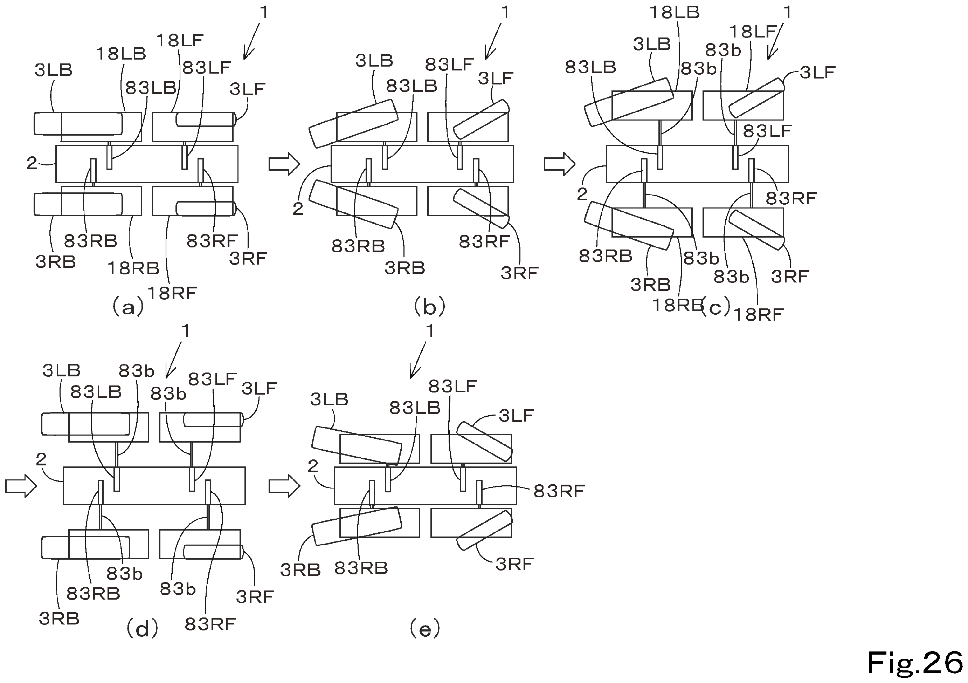

FIG. 26 illustrates the steering-time inter-wheel-distance-increasing operation of the working vehicle 1 including the configuration (first configuration B) illustrated in FIG. 25. As illustrated in (a) in FIG. 26, the working vehicle 1 is such that, when the vehicle body 2 travels before steering (when the vehicle body 2 travels straight), the rod of the left front extension-retraction mechanism 83LF, the rod of the left rear extension-retraction mechanism 83LB, the rod of the right front extension-retraction mechanism 83RF, and the rod of the right rear extension-retraction mechanism 83RB are in the not-extended state (retracted state).

As illustrated in (b) in FIG. 26, when the vehicle body 2 travels, the steering system 60 changes the orientations of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel moves away from the vehicle body 2.

When the orientations of left wheels and right wheels are changed as described above, the left wheels and the right wheels receive a reaction force from the ground, and therefore the rod 83b of the left front extension-retraction mechanism 83LF, the rod 83b of the left rear extension-retraction mechanism 83LB, the rod 83b of the right front extension-retraction mechanism 83RF, and the rod 83b of the right rear extension-retraction mechanism 83RB extend. With this, the distance between the left frame 18LF and the right frame 18RF and the distance between the left frame 18LB and the right frame 18RB increase, and the distance between left and right wheels increases (see (c) in FIG. 26).

After the distance between left and right wheels increases, the steering system 60 restores the orientations of left wheels (left front wheel 3LF, left rear wheel 3LB) and right wheels (right front wheel 3RF, right rear wheel 3RB) to the original orientations (orientation before the distance between left and right wheels increases) while the distance remains increased (see (d) in FIG. 26).

In the case of reducing the distance between left and right wheels, the steering system 60 changes the orientations of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel approaches the vehicle body 2 (see (e) in FIG. 26). When the orientations of left wheels and right wheels are changed as described above, the left wheels and the right wheels receive a reaction force from the ground inward (toward the vehicle body 2). With this, the rods 83b of the left front extension-retraction mechanism 83LF, the left rear extension-retraction mechanism 83LB, the right front extension-retraction mechanism 83RF, and the right rear extension-retraction mechanism 83RB retract, and the distance between left and right wheels decreases.

As described above with reference to FIGS. 24 and 26, the distance changing system 80 including the first configuration A or the first configuration B increases the distance between left and right wheels using a reaction force from the ground that results from changes in the orientations of left and right wheels changed by the steering system 60, without using actuators (left front cylinder 81LF, left rear cylinder 81LB, right front cylinder 81RF, right rear cylinder 81RB). Therefore, it is not necessary to provide actuators to increase the distance between left and right wheels.

In the case of the distance changing system 80 including the first configuration B, it is possible to increase and reduce the distance between left and right wheels with regard to only either the front wheels or the rear wheels.

In the case of increasing the distance between left and right wheels with regard to only the front wheels, when the vehicle body 2 travels, the steering system 60 changes the orientations of the left front wheel 3LF and the right front wheel 3RF such that the front portion of each of the left front wheel 3LF and the right front wheel 3RF in the direction of travel moves away from the vehicle body 2. In the case of reducing the distance between left and right wheels with regard to only the front wheels, when the vehicle body 2 travels, the steering system 60 changes the orientations of the left front wheel 3LF and the right front wheel 3RF such that the front portion of each of the left front wheel 3LF and the right front wheel 3RF in the direction of travel approaches the vehicle body 2.

In the case of increasing the distance between left and right wheels with regard to only the rear wheels, when the vehicle body 2 travels, the steering system 60 changes the orientations of the left rear wheel 3LB and the right rear wheel 3RB such that the front portion of each of the left rear wheel 3LB and the right rear wheel 3RB in the direction of travel moves away from the vehicle body 2. In the case of reducing the distance between left and right wheels with regard to only the rear wheels, when the vehicle body 2 travels, the steering system 60 changes the orientations of the left rear wheel 3LB and the right rear wheel 3RB such that the front portion of each of the left rear wheel 3LB and the right rear wheel 3RB in the direction of travel approaches the vehicle body 2.

The steering-time inter-wheel-distance-increasing operation can be also performed by a method using a combination of actuators (left cylinder(s) 81L and right cylinder(s) 81R) and the extension-retraction mechanism(s) 83 of the distance changing system 80. In the following description, the steering-time inter-wheel-distance-increasing operation using this method is referred to as a "second variation". Also in the second variation, similar to the first variation, when the vehicle body 2 travels, the steering system 60 changes the orientations of left and right wheels such that the front portion of each wheel in the direction of travel moves away from the vehicle body 2.

In the second variation, the distance changing system 80 increases the distance between left and right wheels using (i) a reaction force from the ground that results from changes in the orientations of left and right wheels changed by the steering system 60 and (ii) the left cylinder(s) 81L and the right cylinder(s) 81R (actuators to move left and right wheels in the vehicle body width direction). The following provides more details.

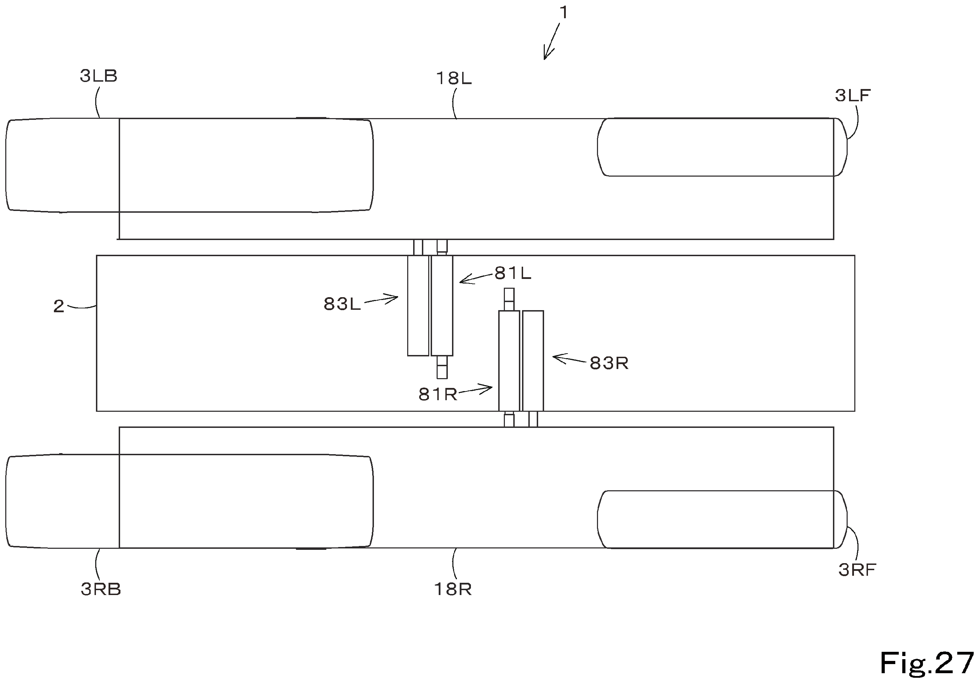

FIG. 27 is a plan view schematically illustrating the working vehicle 1 including the distance changing system 80 including a configuration (hereinafter "second configuration A") to perform the second variation. The distance changing system 80 includes the second configuration A includes the extension-retraction mechanism(s) 83 in addition to the left cylinder 81L and the right cylinder 81R. The extension-retraction mechanisms 83 include the left extension-retraction mechanism 83L and the right extension-retraction mechanism 83R. The working vehicle 1 illustrated in FIG. 27 includes the left extension-retraction mechanism 83L in addition to the left cylinder 81L of the working vehicle 1 illustrated in FIG. 15, and includes the right extension-retraction mechanism 83R in addition to the right cylinder 81R of the working vehicle 1 illustrated in FIG. 15.

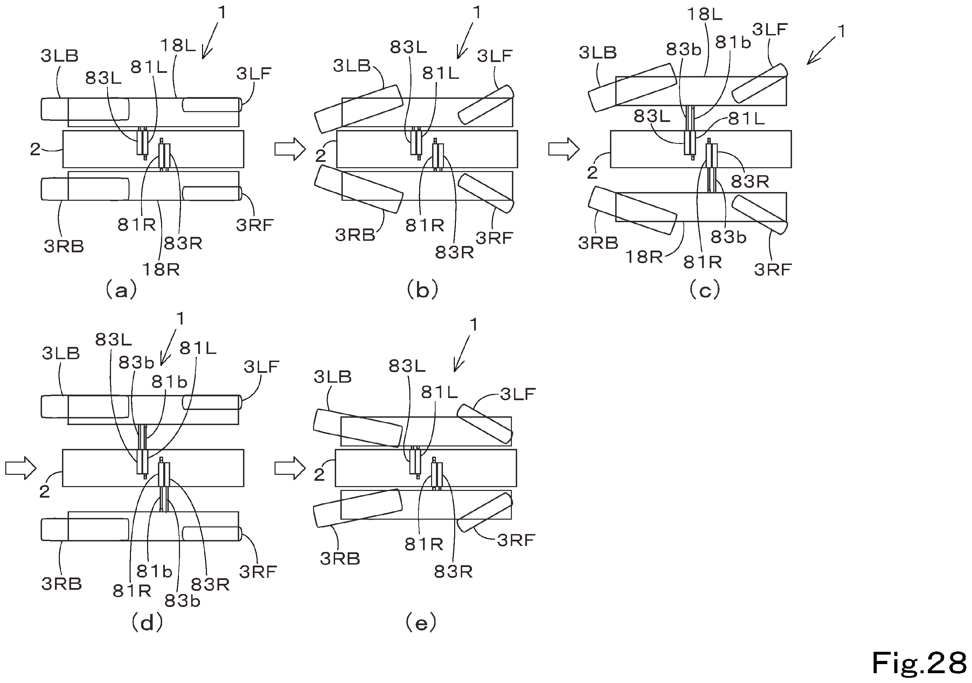

FIG. 28 illustrates the steering-time inter-wheel-distance-increasing operation of the working vehicle 1 including the configuration (second configuration A) illustrated in FIG. 27. As illustrated in (a) in FIG. 28, the working vehicle 1 is such that, when the vehicle body 2 travels before steering (when the vehicle body 2 travels straight), the rod of the left extension-retraction mechanism 83L and the rod of the right extension-retraction mechanism 83R are in the not-extended state (retracted state). The rod of the left cylinder 81L and the rod of the right cylinder 81R are also in the not-extended state (retracted state).

As illustrated in (b) in FIG. 28, when the vehicle body 2 travels, the steering system 60 changes the orientations of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel moves away from the vehicle body 2.

When the orientations of left wheels and right wheels are changed as described above, the left wheels and the right wheels receive a reaction force from the ground, and therefore a force acts in a direction that causes the rod of the left extension-retraction mechanism 83L to extend and a force acts in a direction that causes the rod of the right extension-retraction mechanism 83R to extend. In so doing (when the orientations of left wheels and right wheels are changed), the left cylinder 81L and the right cylinder 81R are driven to extend the rods 81b of the left cylinder 81L and the right cylinder 81R. With this, the rods 81b of the left cylinder 81L and the right cylinder 81R extend, and the rods 83b of the left extension-retraction mechanism 83L and the right extension-retraction mechanism 83R also extend. It follows that the distance between the left frame 18L and the right frame 18R increases, and the distance between left and right wheels increases (see (c) in FIG. 28).

After the distance between left and right wheels increases, the steering system 60 restores the orientations of left wheels (left front wheel 3LF, left rear wheel 3LB) and right wheels (right front wheel 3RF, right rear wheel 3RB) to the original orientations (orientation before the distance between left and right wheels increases) while the distance remains increased (see (d) in FIG. 28).

In the case of reducing the distance between left and right wheels, the orientations of left wheels (left front wheel 3LF, left rear wheel 3LF) and right wheels (right front wheel 3RF, right rear wheel 3RB) are changed such that the front portion of each wheel (left front wheel 3LF, right front wheel 3RF, left rear wheel 3LB, right rear wheel 3RB) in the direction of travel approaches the vehicle body 2, and the left cylinder 81L and the right cylinder 81R are driven to retract the rods 81b of the left cylinder 81L and the right cylinder 81R. With this, the left wheels and the right wheels each receive a reaction force inward (toward the vehicle body 2) from the ground, and also each receive a force inward (toward the vehicle body 2) from the left cylinder 81L or the right cylinder 81R. It follows that the rods 83b of the left extension-retraction mechanism 83L and the extension-retraction mechanism 83R retract, and the distance between left and right wheels decreases (see (e) in FIG. 28).

As described above, the distance changing system 80 including the second configuration A increases the distance between left and right wheels using a combination of (i) a reaction force from the ground that results from changes in the orientations of left and right wheels changed by the steering system 60 and (ii) actuators (left cylinder 81L and right cylinder 81R) to move the left wheels and the right wheels in the vehicle body width direction. Therefore, compared to the case of using only actuators (left cylinder 81L and right cylinder 81R), it is possible to increase the distance between left and right wheels with a smaller force. Furthermore, with the use of the actuators (left cylinder 81L and right cylinder 81R), it is possible to increase the distance between left and right wheels reliably compared to the case of using only a reaction force from the ground.

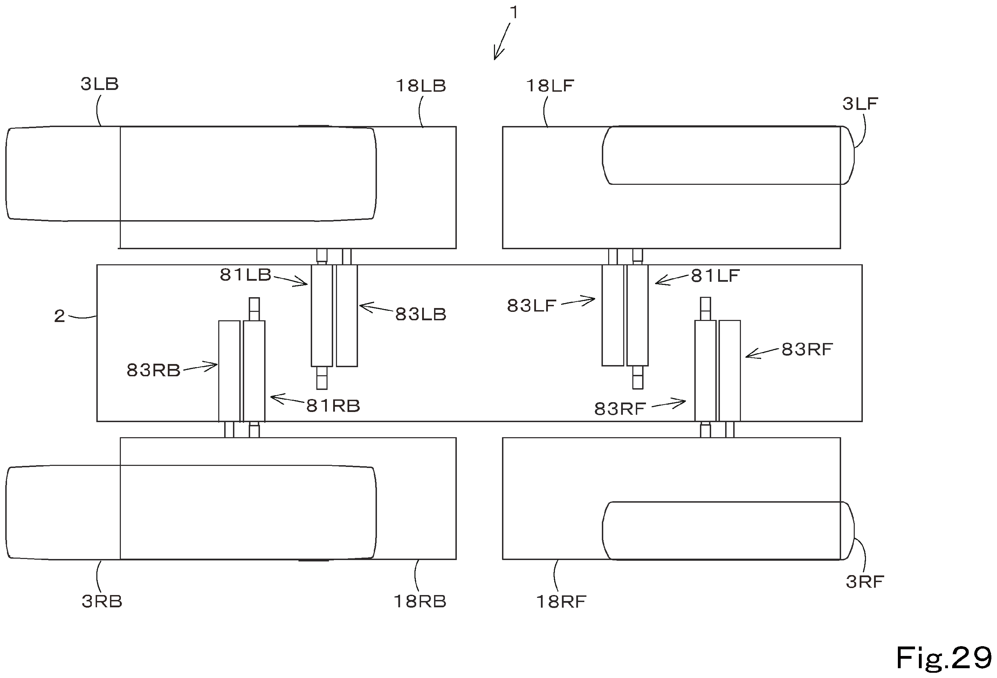

FIG. 29 is a plan view schematically illustrating the working vehicle 1 including the distance changing system 80 having another configuration (hereinafter "second configuration B") to perform the second variation. The distance changing system 80 including the second configuration B includes, as the extension-retraction mechanisms 83, the left front extension-retraction mechanism 83LF, the left rear extension-retraction mechanism 83LB, the right front extension-retraction mechanism 83RF, and the right rear extension-retraction mechanism 83RB. The working vehicle 1 illustrated in FIG. 29 includes the left front extension-retraction mechanism 83LF in addition to the left front cylinder 81LF of the working vehicle 1 illustrated in FIG. 17, includes the left rear extension-retraction mechanism 83LB in addition to the left rear cylinder 81LB of the working vehicle 1 illustrated in FIG. 17, includes the right front extension-retraction mechanism 83RF in addition to the right front cylinder 81RF of the working vehicle 1 illustrated in FIG. 17, and includes the right rear extension-retraction mechanism 83RB in addition to the right rear cylinder 81RB of the working vehicle 1 illustrated in FIG. 17.

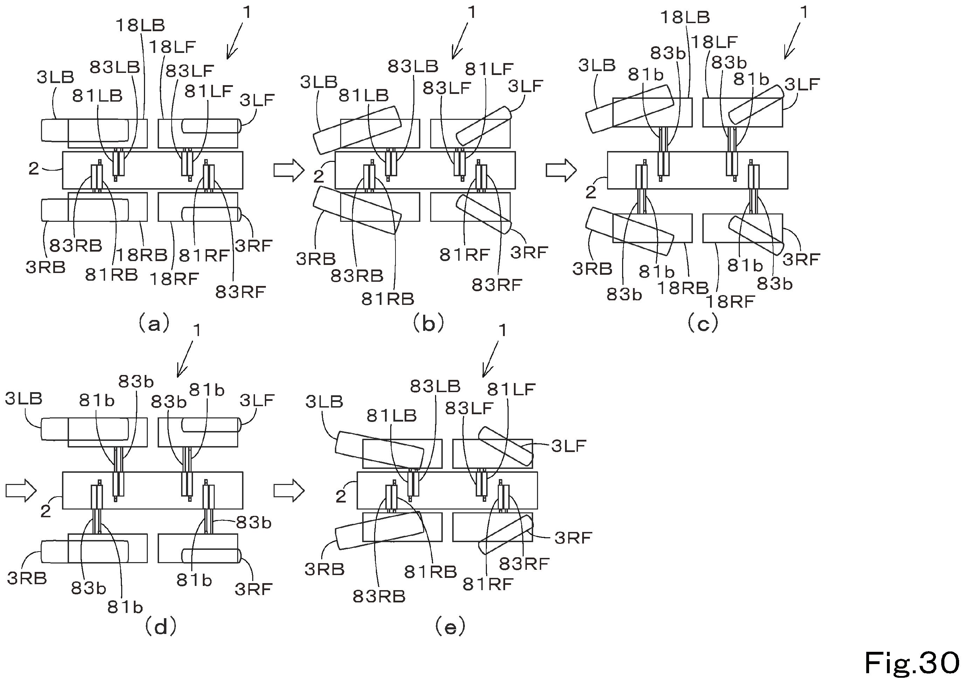

FIG. 30 illustrates the steering-time inter-wheel-distance-increasing operation of the working vehicle 1 including the configuration (second configuration B) illustrated in FIG. 29. As illustrated in (a) in FIG. 30, the working vehicle 1 is such that, when the vehicle body 2 travels before steering (when the vehicle body 2 travels straight), the rod of the left front extension-retraction mechanism 83LF, the rod of the left rear extension-retraction mechanism 83LB, the rod of the right front extension-retraction mechanism 83RF, and the rod of the right rear extension-retraction mechanism 83RB are in the not-extended state (retracted state). The rod of the left front cylinder 81LF, the rod of the left rear cylinder 81LB, the rod of the right front cylinder 81RF, and the rod of the right rear cylinder 81RB are also in the not-extended state (retracted state).

As illustrated in (b) in FIG. 30, when the vehicle body 2 travels, the steering system 60 changes the orientation of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel moves away from the vehicle body 2.

When the orientations of left wheels and right wheels are changed as described above, the left wheels and the right wheels receive a reaction force from the ground, and therefore a force acts in a direction that causes the rod of each of the left front extension-retraction mechanism 83LF, the left rear extension-retraction mechanism 83LB, the right front extension-retraction mechanism 83RF, and the right rear extension-retraction mechanism 83RB to extend. In so doing (when the orientations of left wheels and right wheels are changed), the left front cylinder 81LF, the left rear cylinder 81LB, the right front cylinder 81RF, and the right rear cylinder 81RB are driven to extend their corresponding rods 81b. With this, the rods 81b of the left front cylinder 81LF, the left rear cylinder 81LB, the right front cylinder 81RF, and the right rear cylinder 81RB extend, and the rods of the left front extension-retraction mechanism 83LF, the left rear extension-retraction mechanism 83LB, the right front extension-retraction mechanism 83RF, and the right rear extension-retraction mechanism 83RB also extend. It follows that the distance between the left frame 18LF and the right frame 18RF, and the distance between the left frame 18LB and the right frame 18RB increase, and the distance between left and right wheels increases (see (c) in FIG. 30).

After the distance between left and right wheels increases, the steering system 60 restores the orientations of left wheels (left front wheel 3LF, left rear wheel 3LB) and right wheels (right front wheel 3RF, right rear wheel 3RB) to the original orientations (orientation before the distance between left and right wheels increases) while the distance remains increased (see (d) in FIG. 30).

In the case of reducing the distance between left and right wheels, the steering system 60 changes the orientation of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel approaches the vehicle body 2, and the left front cylinder 81LF, the left rear cylinder 81LB, the right front cylinder 81RF, and the right rear cylinder 81RB are driven to retract their corresponding rods 81b. With this, the left wheels and the right wheels each receive a reaction force inward (toward the vehicle body 2) from the ground, and also each receive a force inward (toward the vehicle body 2) from the left front cylinder 81LF, the left rear cylinder 81LB, the right front cylinder 81RF, or the right rear cylinder 81RB. It follows that the rods 83b of the left front extension-retraction mechanism 83LF, the left rear extension-retraction mechanism 83LB, the right front extension-retraction mechanism 83RF, and the right rear extension-retraction mechanism 83RB retract, and the distance between left and right wheels decreases (see (e) in FIG. 30).

As described above, the distance changing system 80 including the second configuration B increases the distance between left and right wheels using (i) a reaction force from the ground that results from changes in the orientations of left and right wheels changed by the steering system 60 and (ii) actuators (the left front cylinder 81LF, the left rear cylinder 81LB, the right front cylinder 81RF, the right rear cylinder 81RB) to move the left wheels and the right wheels in the vehicle body width direction. Therefore, compared to the case of using only actuators (the left front cylinder 81LF, the left rear cylinder 81LB, the right front cylinder 81RF, the right rear cylinder 81RB), it is possible to increase the distance between left and right wheels with a smaller force. Furthermore, with the use of the actuators (the left front cylinder 81LF, the left rear cylinder 81LB, the right front cylinder 81RF, the right rear cylinder 81RB), it is possible to increase the distance between left and right wheels reliably compared to the case of using only a reaction force from the ground.

In the case of the distance changing system 80 including the second configuration B, it is possible to increase and reduce the distance between left and right wheels with regard to only either the front wheels or the rear wheels.

In the case of increasing the distance between left and right wheels only with regard to the front wheels, when the vehicle body 2 travels, the orientations of the left front wheel 3LF and the right front wheel 3RF are changed such that the front portion of each of the left front wheel 3LF and the right front wheel 3RF in the direction of travel moves away from the vehicle body 2, and the left front cylinder 81LF and the right front cylinder 81RF are driven to extend their corresponding rods 81b. In the case of reducing the distance between left and right wheels only with regard to the front wheels, when the vehicle body 2 travels, the orientations of the left front wheel 3LF and the right front wheel 3RF are changed such that the front portion of each of the left front wheel 3LF and the right front wheel 3RF in the direction of travel approaches the vehicle body 2, and the left front cylinder 81LF and the right front cylinder 81RF are driven to retract their corresponding rods 81b.

In the case of increasing the distance between left and right wheels only with regard to the rear wheels, when the vehicle body 2 travels, the orientations of the left rear wheel 3LB and the right rear wheel 3RB are changed such that the front portion of each of the left rear wheel 3LB and the right rear wheel 3RB in the direction of travel moves away from the vehicle body 2, and the left rear cylinder 81LB and the right rear cylinder 81RB are driven to extend their corresponding rods 81b. In the case of reducing the distance between left and right wheels only with regard to the rear wheels, when the vehicle body 2 travels, the orientations of the left rear wheel 3LB and the right rear wheel 3RB are changed such that the front portion of each of the left rear wheel 3LB and the right rear wheel 3RB in the direction of travel approaches the vehicle body 2, and the left rear cylinder 81LF and the right rear cylinder 81RF are driven to retract their corresponding rods 81b.

The above-described steering-time inter-wheel-distance-increasing operations and later-described steering-time inter-wheel-distance-increasing operations are performed under control of a distance changing controller 15B (see FIG. 7) of the controller 15. Specifically, the steering-time inter-wheel-distance-increasing operation can be performed by the distance changing controller 15B of the controller 15 controlling the operation of the distance changing system 80 or controlling the operations of the steering system 60 and the distance changing system 80.

More specifically, in the case where the steering-time inter-wheel-distance-increasing operation does not use a reaction force from the ground (see FIGS. 18 to 21), it is possible to perform the steering-time inter-wheel-distance-increasing operation by the distance changing controller 15B controlling the operation of the distance changing system 80. In the case where the steering-time inter-wheel-distance-increasing operation uses a reaction force from the ground (see FIGS. 24, 26, 28, and 30), it is possible to perform the steering-time inter-wheel-distance-increasing operation by the distance changing controller 15B controlling the operations of the steering system 60 and the distance changing system 80.

In the case where the distance changing controller 15B controls the operation of the steering system 60, the distance changing controller 15B controls the operation of the cylinder(s) 62 (operation of extension and retraction of the rod(s) 62a) of the steering system (mechanism(s)) 60. In the case where the distance changing controller 15B controls the operation of the distance changing system 80, the distance changing controller 15B controls the operation of the left cylinder(s) 81L and the right cylinder(s) 81R (operation of extension and retraction of the rod(s) 81b) of the distance changing system 80.

The following describes specific examples (application examples) of the steering-time inter-wheel-distance-increasing operation. The specific examples described below are examples of the steering-time inter-wheel-distance-increasing operation in the case where the working vehicle 1 performs work while traveling along a ridge (astride a ridge) of an agricultural field. In the following description of the specific examples, the "distance between left and right wheels" indicates a smaller one of the distance between the inner surface of the left front wheel 3LF and the inner surface of the right front wheel 3RF and the distance between the inner surface of the left rear wheel 3LB and the inner surface of the right rear wheel 3RB.

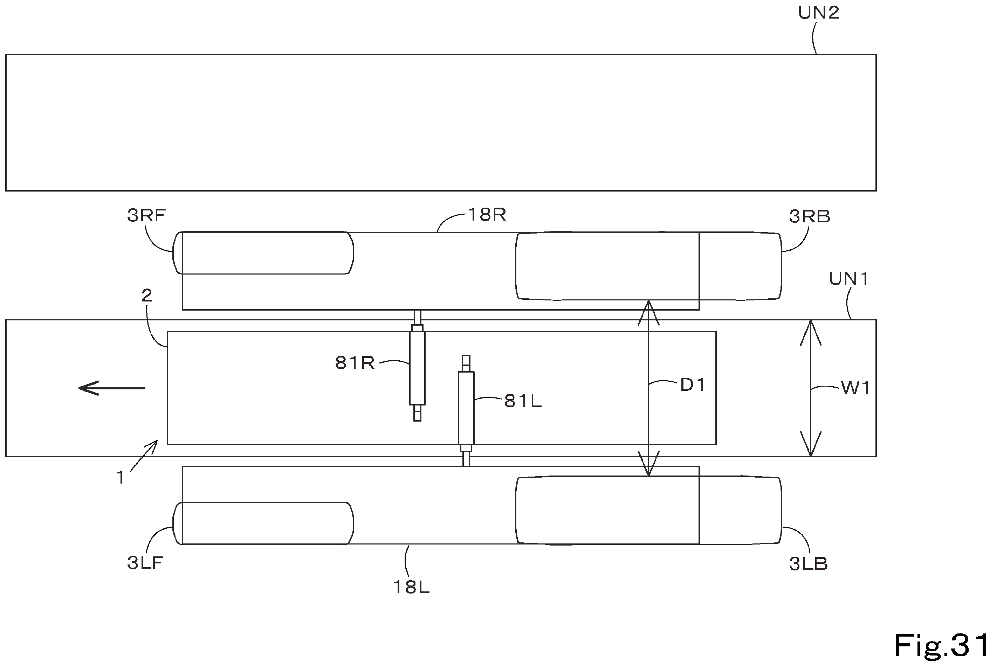

FIGS. 31 to 34 illustrate a first specific example. The first specific example is a specific example of the above-described steering-time inter-wheel-distance-increasing operation of the third example (see FIGS. 20 and 21). Specifically, the first specific example is a specific example of the third example of the steering-time inter-wheel-distance-increasing operation of the working vehicle 1 including the distance changing system 80 illustrated in FIG. 15. Note, however, that the first specific example can be applied to the steering-time inter-wheel-distance-increasing operation of the working vehicle 1 including the distance changing system 80 illustrated in FIG. 17.

FIG. 31 illustrates a state in which the working vehicle 1 travels along a first ridge UN1 (travels astride a first ridge UN1). In this state, a distance D1 between left and right wheels is set to a distance corresponding to a width W1 of the first ridge UN1 (D1 ≥ W1).

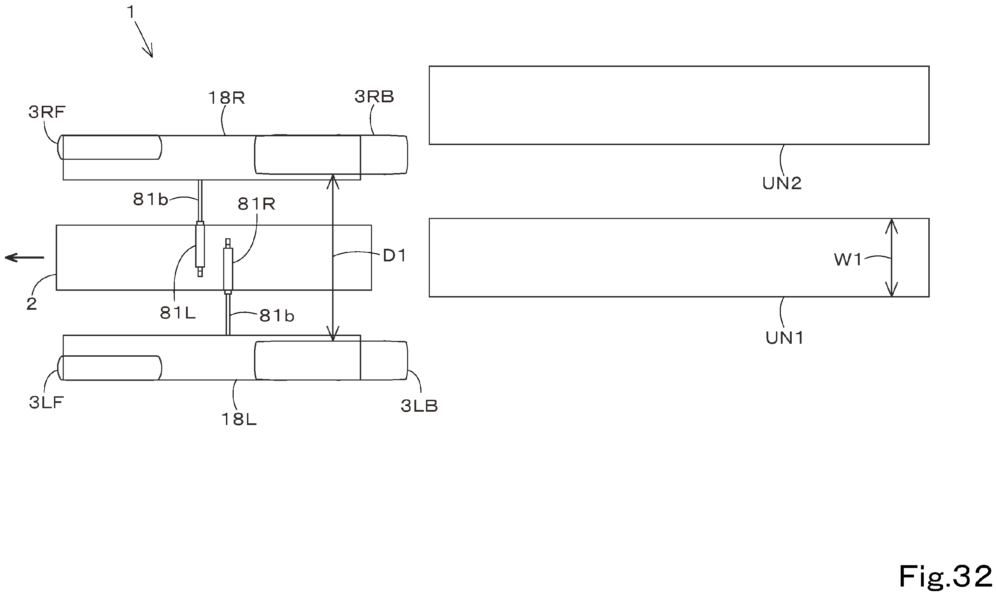

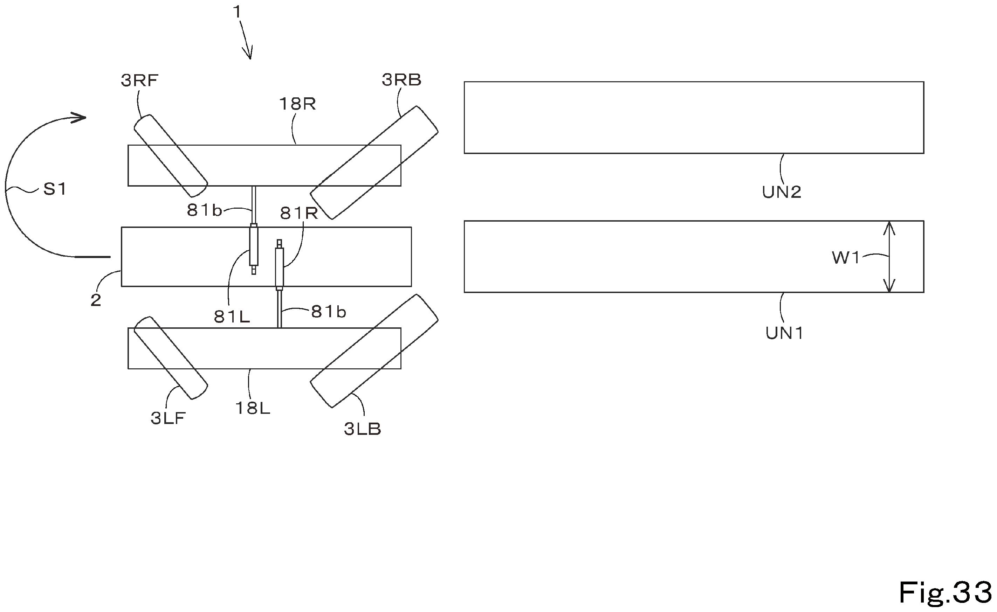

As illustrated in FIG. 32, after the working vehicle 1 passes through the first ridge UN1, the distance changing system 80 extends the rods 81b of the left cylinder 81L and the right cylinder 81R to increase the distance D1 between left and right wheels. Then, the steering system 60 steers the left wheels (left front wheel 3LF, left rear wheel 3LB) and the right wheels (right front wheel 3RF, right rear wheel 3RB) to turn toward a second ridge UN2 next to the first ridge UN1 (see arrow S1 in FIG. 33). Thus, a change (increase) in the distance D1 between left and right wheels is performed after the working vehicle 1 passes through the first ridge UN1 and before the working vehicle 1 turns toward the second ridge UN2.

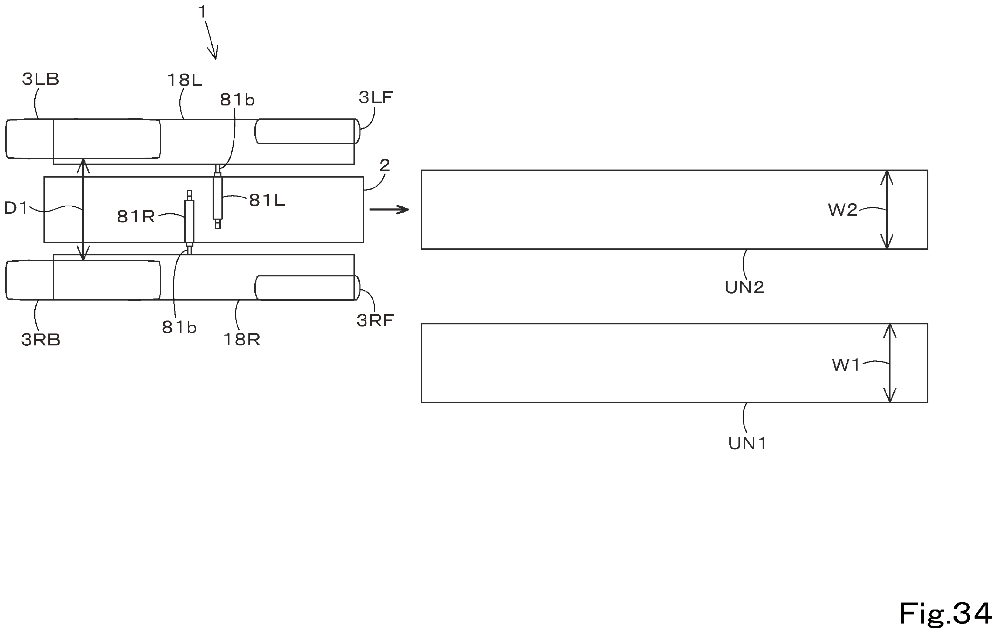

After the turning is performed by steering the left wheels and the right wheels while the distance D1 between left and right wheels is kept increased, the rods 81b of the left cylinder 81L and the right cylinder 81R are retracted (see FIG. 34). With this, the distance D1 between left and right wheels of the working vehicle 1 returns to the original distance (distance when the working vehicle 1 was traveling along the first ridge UN1), and the working vehicle 1 travels toward the second ridge UN2. It is noted that, in the case where a width W2 of the second width UN2 is different from the width W1 of the first ridge UN1, when the rods 81b of the left cylinder 81L and the right cylinder 81R are retracted, the distance D1 between left and right wheels is set to a distance corresponding to the width W2 of the second ridge UN2 (D1 ≥ W2).

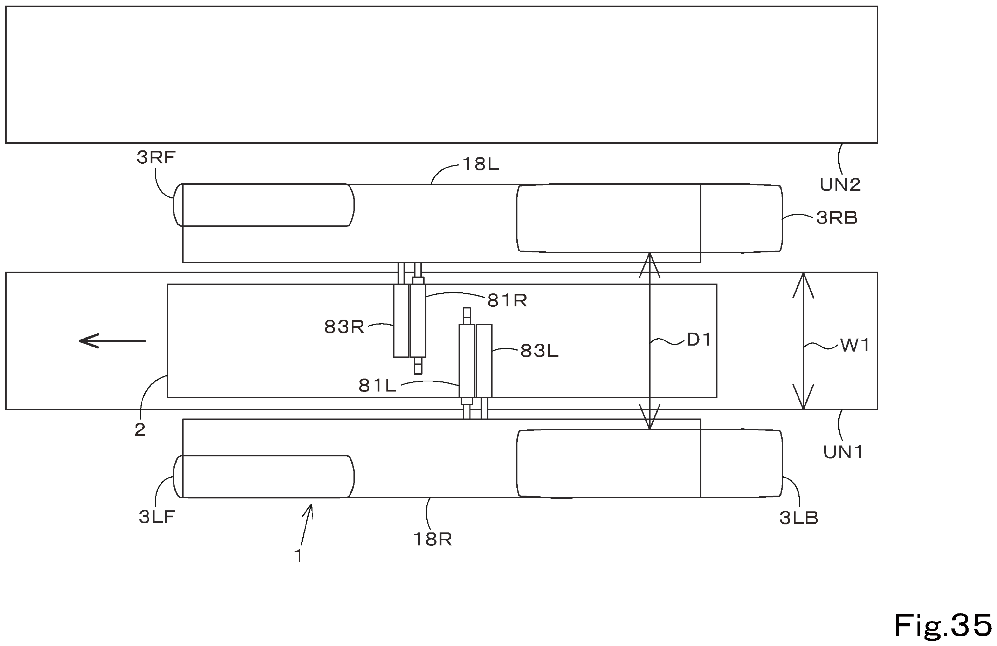

FIGS. 35 to 38 illustrate a second specific example. The second specific example is a specific example of the steering-time inter-wheel-distance-increasing operation according to the above-described second variation. Although the following describes the case where the distance changing system 80 includes the second configuration A (see FIG. 27), the distance changing system 80 may include the second configuration B (see FIG. 29).

FIG. 35 illustrates a state in which the working vehicle 1 travels along the first ridge UN1 (astride the first ridge UN1). In this state, the distance D1 between left and right wheels is set to a distance corresponding to the width W1 of the first ridge UN1 (D1 ≥ W1).

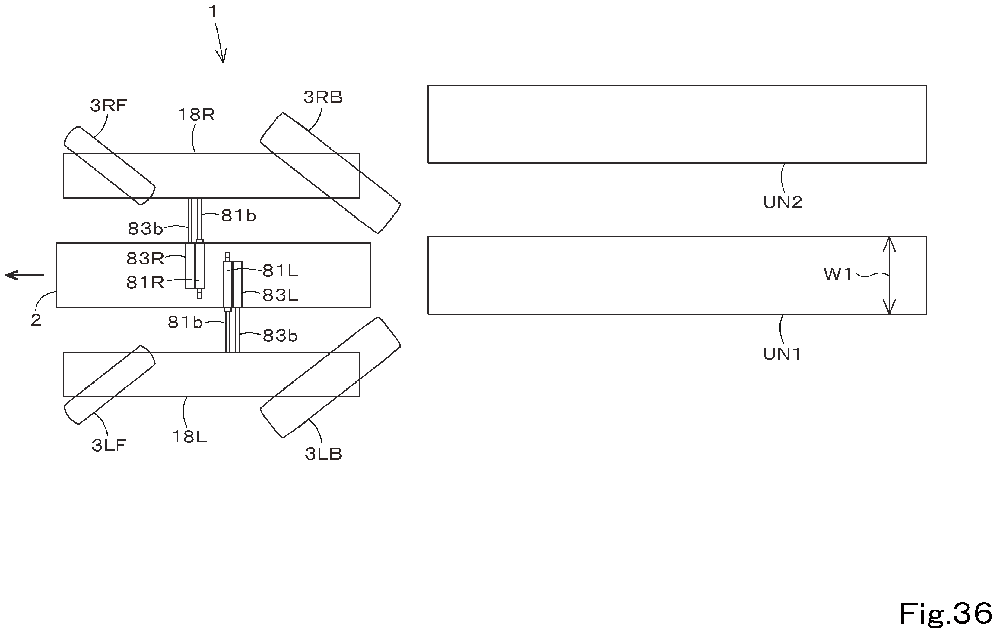

As illustrated in FIG. 36, after the working vehicle 1 passes through the first ridge UN1, while the vehicle body 2 travels, the steering system 60 changes the orientation of left wheels (left front wheel 3LF, left rear wheel 3LB) and right wheels (right front wheel 3RF, right rear wheel 3RB) such that the front portion of each wheel (left front wheel 3LF, right front wheel 3RF, left rear wheel 3LB, right rear wheel 3RB) in the direction of travel moves away from the vehicle body 2. With this, the left wheels and the right wheels receive a reaction force from the ground, and the rods 83b of the left extension-retraction mechanism 83L and the right extension-retraction mechanism 83R extend. After the orientations of left wheels and right wheels are changed, the rods 81b of the left cylinder 81L and the right cylinder 81R are extended. With this, the distance between left and right wheels is increased by a reaction force from the ground and a driving force of the left cylinder 81L and the right cylinder 81R (force extending the rods 81b).

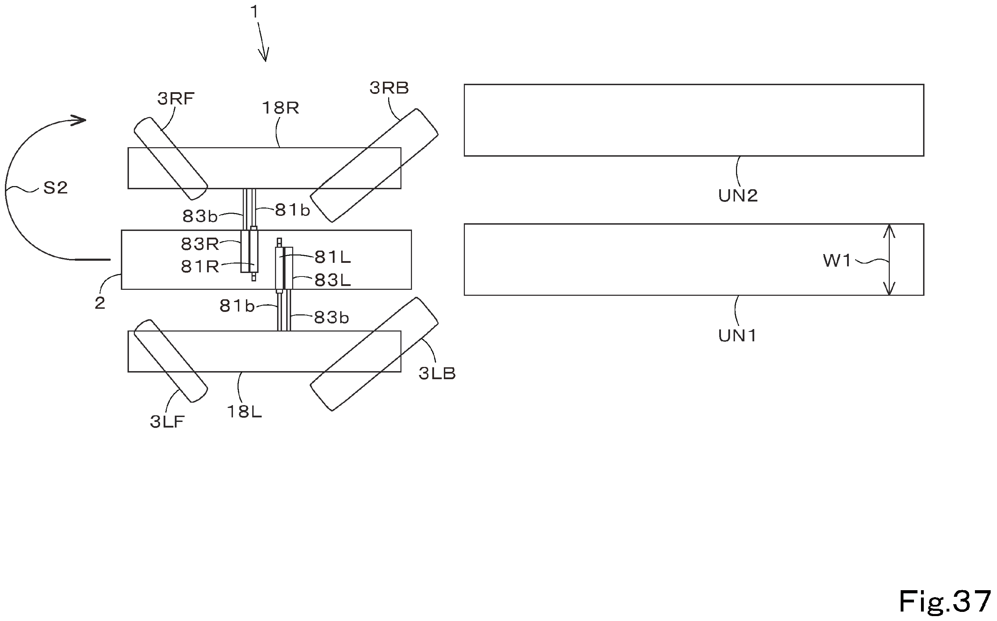

After that, the left wheels (left front wheel 3LF, left rear wheel 3LB) and the right wheels (right front wheel 3RF, right rear wheel 3RB) are steered to make a turn toward the second ridge UN2 next to the first ridge UN1 (see arrow S2 in FIG. 37). Thus, a change (increase) in the distance between left and right wheels is performed after the working vehicle 1 passes through the first ridge UN1 and before the working vehicle 1 turns toward the second ridge UN2.

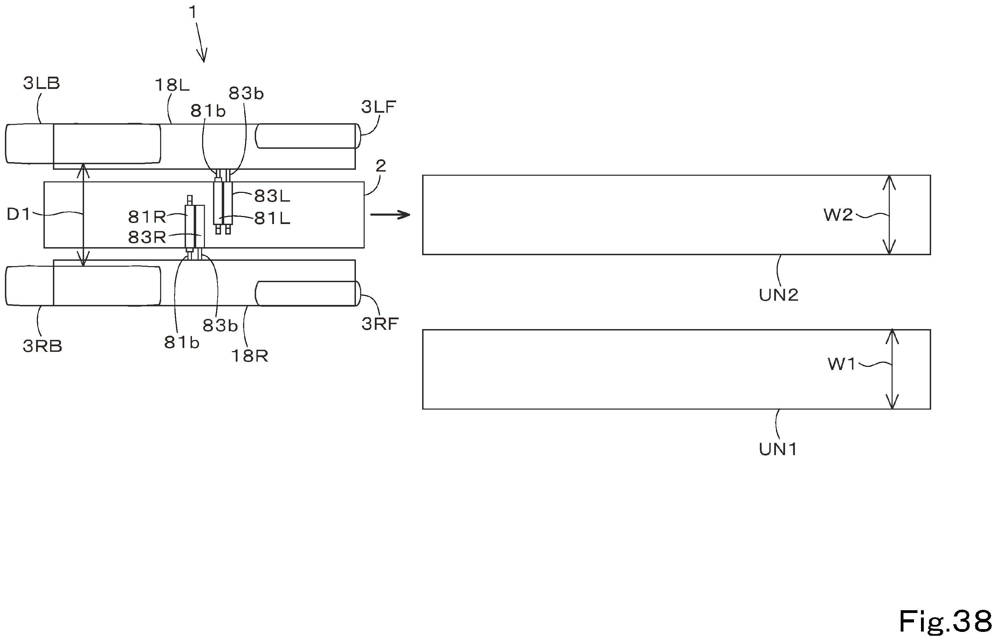

After the turning is performed by steering the left wheels and the right wheels while the distance between left and right wheels is kept increased, the rods 81b of the left cylinder 81L and the right cylinder 81R are retracted. With this, the rods 83b of the left extension-retraction mechanism 83L and the right extension-retraction mechanism 83R also retract (see FIG. 38).

It is noted that, as a method of retracting the rods 83b of the left extension-retraction mechanism 83L and the right extension-retraction mechanism 83R, the distance between left and right wheels may be reduced using a reaction force from the ground that results from changes in the orientations of left wheels and right wheels changed by the steering system 60. The following describes a method using a reaction force from the ground in the second specific example.

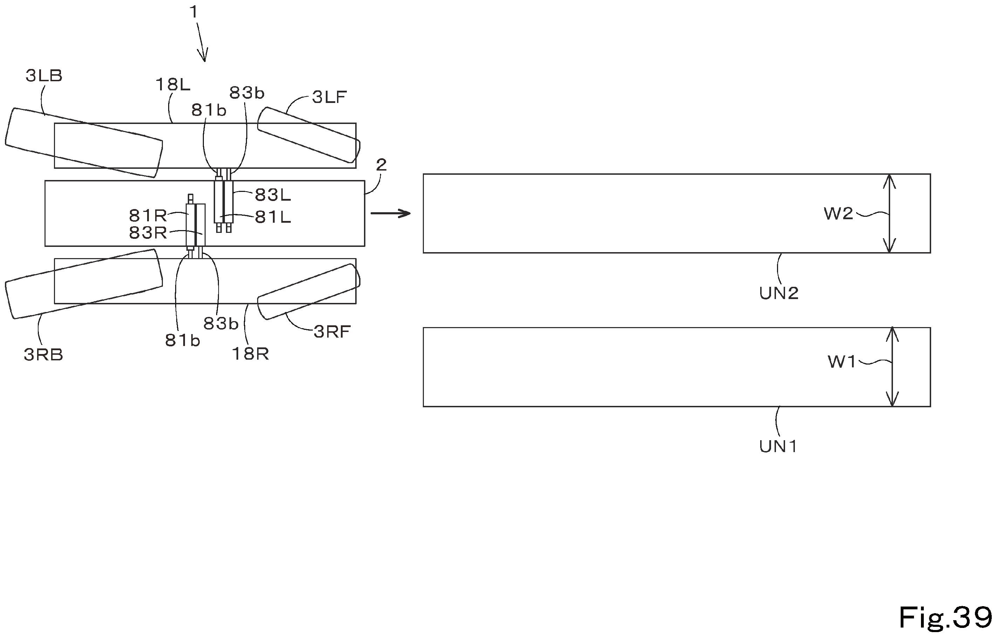

In the case of using a reaction force from the ground, while the working vehicle 1 travels, the orientations of left wheels (left front wheel 3LF, left rear wheel 3LB) and right wheels (right front wheel 3RF, right rear wheel 3RB) are changed such that the front portion of each wheel (left front wheel 3LF, right front wheel 3RF, left rear wheel 3LB, right rear wheel 3RB) in the direction of travel approaches the vehicle body 2, and the rods 81b of the left cylinder 81L and the right cylinder 81R are retracted. This makes it possible to retract the rods 83b of the left extension-retraction mechanism 83L and the right extension-retraction mechanism 83R using a reaction force from the ground acting on the wheels, and reduce the distance between left and right wheels (see FIG. 39). After the distance between left and right wheels decreases, the steering system 60 restores the orientations of left wheels (left front wheel 3LF, left rear wheel 3LB) and right wheels (right front wheel 3RF, right rear wheel 3RB) to the original orientations.

With this, the distance between left and right wheels returns to the original distance (distance when the first working vehicle 1 was traveling along the first ridge UN1), and the working vehicle 1 travels toward the second ridge UN2. It is noted that, in the case where the width W2 of the second ridge UN2 is different from the width W1 of the first ridge UN1, when the rods 81b of the left cylinder 81L and the right cylinder 81R are retracted, the distance D1 between left and right wheels is set to a distance corresponding to the width W2 of the second ridge UN2 (D1 ≥ W2).

In the above-described first specific example and second specific example, in the case where the width W1 of the first ridge UN1 is different from the width W2 of the second ridge UN2 and the distance D1 between left and right wheels is to be set to a distance corresponding to the width W2 of the second ridge UN2, the width W2 of the second ridge UN2 can be detected while the working vehicle 1 travels along the first ridge UN1.

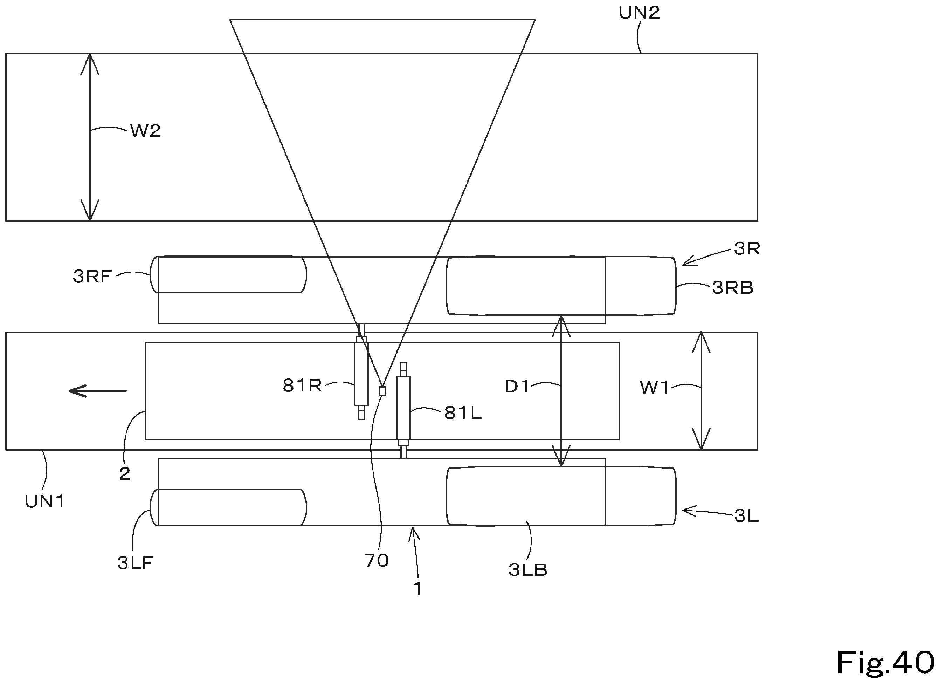

In this case, as illustrated in FIG. 40, the first detector 70 detects the width W2 of the second ridge UN2 next to the first ridge UN1 while the vehicle body 2 travels along the first ridge UN1. It is possible to detect the width W2 of the second ridge UN2 by providing the first detector 70 at a position higher than the second ridge UN2. In the case where the first detector 70 is a camera, the camera 71 captures an image of the second ridge UN2 present at a side of the vehicle body 2 and generates an image signal.

On the other hand, the second detector 75 detects the distance D1 between left and right wheels. The detection of the width W2 and the distance D1 is performed before the vehicle body 2 reaches the second ridge UN2. The detection of the width W2 and the detection of the distance D1 may be performed in any order and may be performed concurrently.

The distance changing controller 15B compares the width W2 of the ridge detected by the first detector 70 and the distance D1 detected by the second detector 75. The distance changing controller 15B, based on the comparison result, drives the left cylinder(s) 81L and the right cylinder(s) 81R to set the distance D1 between left and right wheels to a distance corresponding to (suitable for) the width W2 of the second ridge UN2.

As described in the foregoing first specific example and second specific example, since the distance between left and right wheels is increased, it is possible to increase the steering angle (angular range within which the wheel is allowed be steered) of the left and right wheels. Therefore, the working vehicle 1 is able to turn with a small turning radius. This makes it possible to travel toward the second ridge UN2 easily and quickly even if the interval between the first ridge UN1 and the second ridge UN2 is small.

Furthermore, while the working vehicle 1 travels along a ridge, the distance between left and right wheels is restricted by the presence of an adjacent ridge, but is not restricted anymore after the working vehicle 1 passes through the ridge. Therefore, the distance between left and right wheels is increased after the working vehicle 1 passes through the ridge (see FIGS. 32 and 36). With this, the working vehicle 1 is able to, with a small radius, turn to travel toward the second ridge UN2 (see FIGS. 33 and 37).

It is noted that the distance changing controller 15B may be configured or programmed to detect, by the first detector 70, the width of a ridge located forward of the vehicle body 2 in the direction of travel. In this case, the distance changing controller 15B compares the width of the ridge forward of the vehicle body 2 in the direction of travel detected by the first detector 70 and the distance D1 between left and right wheels, and sets the distance D1 to a distance corresponding to the width of the ridge forward in the direction of travel.

In the description of the foregoing steering-time inter-wheel-distance-increasing operation, the working vehicle 1 in which the left wheels are attached to the left frame 18L and the right wheels are attached to the right frame 18R is discussed as an example. However, the working vehicle 1 to perform the foregoing steering-time inter-wheel-distance-increasing operation (including the first variation and the second variation) may be a working vehicle in which the left wheel(s) and the right wheel(s) are attached to the vehicle body 2 without the frame structural body 18. In the following description, such a working vehicle is referred to as a variation working vehicle 1.

The variation working vehicle 1, in order to perform the steering-time inter-wheel-distance-increasing operation, includes a structure in which an axle of each wheel to be steered by the steering system (mechanism) 60 is configured to extend and retract. The axle configured to extend and retract may, for example, include a tubular body and a rod movable with respect to the tubular body (along the tubular body). In this case, the tubular body is attached to the vehicle body 2, and the wheel is attached to the rod. The wheel is attached to a distal portion of the rod, and a proximal portion of the rod is housed in the tubular body. The extension operation and retraction operation of the axle may be performed by, for example, by a hydraulic cylinder or a cylinder apparatus such as an electric cylinder. The axle configured to extend and retract itself may be an extendable and retractable rod of a hydraulic cylinder or a cylinder apparatus such as an electric cylinder.

In the case of the variation working vehicle 1, each left wheel is attached to an axle extending leftward from the vehicle body 2, and each right wheel is attached to an axle extending rightward from the vehicle body 2. Specifically, the left front wheel 3LF is attached to a left front axle extending leftward from a left front portion of the vehicle body 2. The right front wheel 3RF is attached to a right front axle extending rightward from a right front portion of the vehicle body 2. The left rear wheel 3LB is attached to a left rear axle extending leftward from a left rear portion of the vehicle body 2. The right rear wheel 3RB is attached to a right rear axle extending rightward from a right rear portion of the vehicle body 2.

The specific example of the variation working vehicle 1 includes the axles of a tractor with a structure configured to perform extension and retraction. In this case, the variation working vehicle 1 may include the left front axle and the right front axle of the tractor with the structure configured to perform extension and retraction, may include the left rear axle and the right rear axle of the tractor with the structure configured to perform extension and retraction, or may include the left front axle, the right front axle, the left rear axle, and the right rear axle of the tractor with the structure configured to perform extension and retraction.

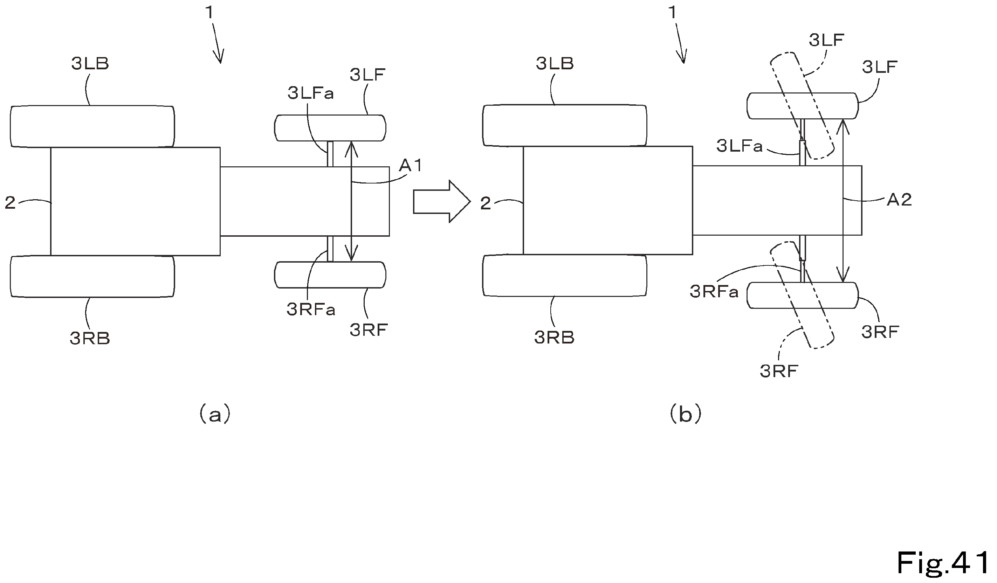

FIG. 41 illustrates a variation of the first example of the steering-time inter-wheel-distance-increasing operation. This variation differs from the first example of the above-described steering-time inter-wheel-distance-increasing operation in that the variation working vehicle 1 is used. In this case, among the axles projecting from the vehicle body 2, axles (left front axle 3LFa, right front axle 3RFa) of front wheels to be steered (left front wheel 3LF, right front wheel 3RF) are structured to be extendable and retractable.

As illustrated in (a) in FIG. 41, when the working vehicle 1 travels straight, the distance between the left front wheel 3LF and the right front wheel 3RF is a first distance A1 which is a reference distance. When the distance between the left front wheel 3LF and the right front wheel 3RF is the first distance A1, the left front axle 3LFa and the right front axle 3RFa are in the not-extended state (retracted state).

As illustrated in (b) in FIG. 41, when the steering system 60 steers the left front wheel 3LF and the right front wheel 3RF (see the left front wheel 3LF and the right front wheel 3RF indicated by imaginary lines), the working vehicle 1 increases the distance between the left front wheel 3LF and the right front wheel 3RF to a second distance A2 which is larger than the first distance A1. The increase of the distance is performed by extending the left front axle 3LFa and the right front axle 3RFa.

With this, when the left front wheel 3LF and the right front wheel 3RF are steered, the distance between the left front wheel 3LF and the vehicle body 2 and the distance between the right front wheel 3RF and the vehicle body 2 increase. Therefore, the angle through which each of the left front wheel 3LF and the right front wheel 3RF can be steered without interfering with the vehicle body 2 increases. This makes it possible to increase the steering angle of the left front wheel 3LF and the right front wheel 3RF.

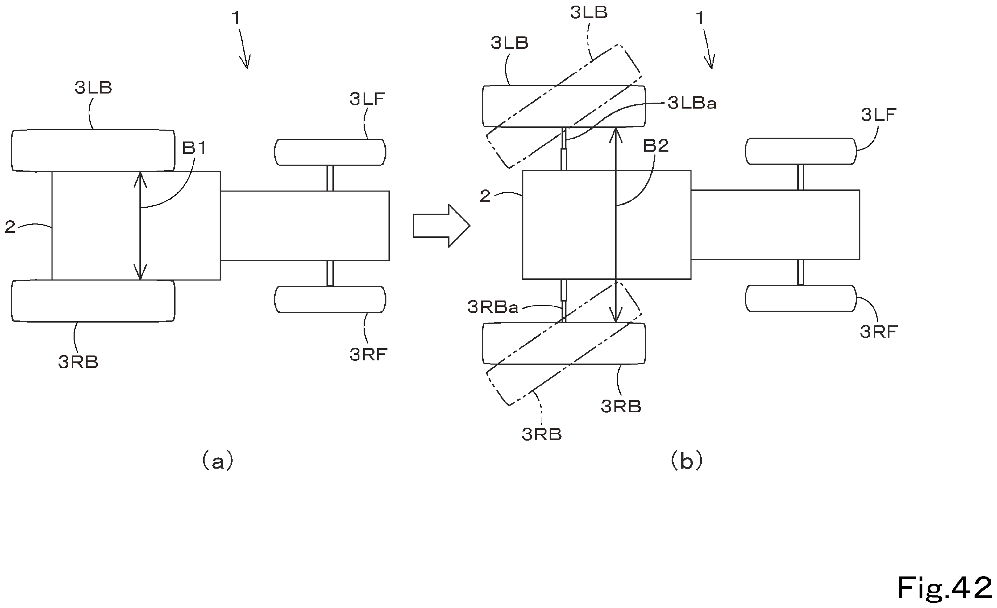

FIG. 42 illustrates a variation of the second example of the steering-time inter-wheel-distance-increasing operation. This variation differs from the second example of the steering-time inter-wheel-distance-increasing operation in that the variation working vehicle is used. In this case, among the axles projecting the vehicle body 2, axles (left rear axle 3LBa, right rear axle 3RBa) of rear wheels to be steered (left rear wheel 3LB, right rear wheel 3RB) are structured to be extendable and retractable.

As illustrated in (a) in FIG. 42, when the working vehicle 1 travels straight, the distance between the left rear wheel 3LB and the right rear wheel 3RB is a first distance B1 which is a reference distance. When the distance between the left rear wheel 3LB and the right rear wheel 3RB is the first distance B1, the left rear axle 3LBa and the right rear axle 3RBa are in the not-extended state (retracted state).

As illustrated in (b) in FIG. 42, when the steering system 60 steers the left rear wheel 3LB and the right rear wheel 3RB (see the left rear wheel 3LB and the right rear wheel 3RB indicated by imaginary lines), the working vehicle 1 increases the distance between the left rear wheel 3LB and the right rear wheel 3RB to a second distance B2 which is larger than the first distance B1. The increase in the distance is performed by extending the left rear axle 3LBa and the right rear axle 3RBa.

With this, when the left rear wheel 3LB and the right rear wheel 3RB are steered, the distance between the left rear wheel 3LB and the vehicle body 2 and the distance between the right rear wheel 3RB and the vehicle body 2 increase. Therefore, the angle through which each of the left rear wheel 3LB and the right rear wheel 3RB can be steered without interfering with the vehicle body 2 increases. This makes it possible to increase the steering angle of the left rear wheel 3LB and the right rear wheel 3RB.

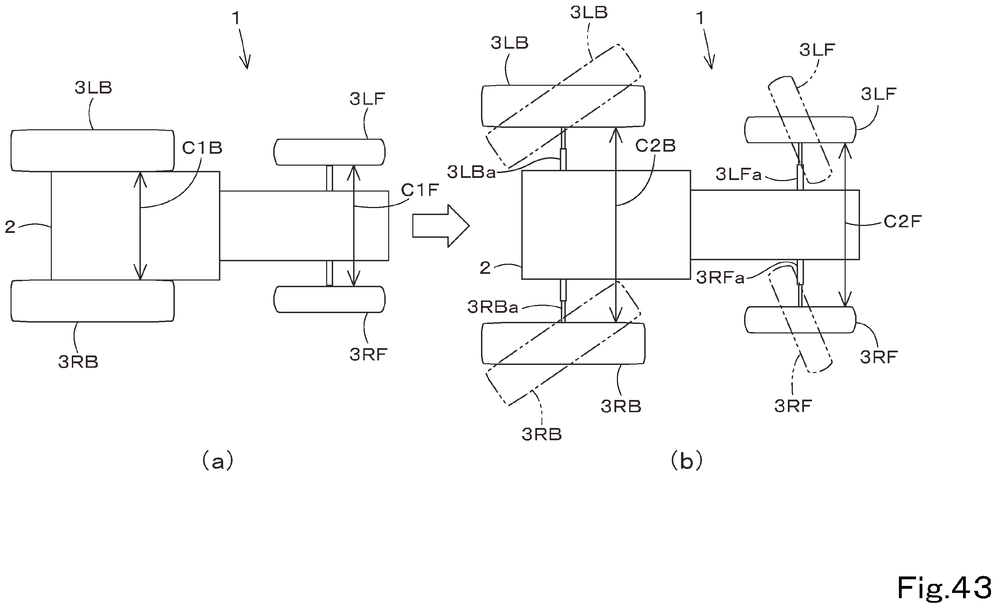

FIG. 43 illustrates a variation of the third example of the steering-time inter-wheel-distance-increasing operation. This variation differs from the third example of the steering-time inter-wheel-distance-increasing operation in that the variation working vehicle is used. In this case, among the axles projecting the vehicle body 2, axles (left front axle 3LFa, right front axle 3RFa) of front wheels to be steered (left front wheel 3LF, right front wheel 3RF) and axles (left rear axle 3LBa, right rear axle 3RBa) of rear wheels to be steered (left rear wheel 3LB, right rear wheel 3RB) are structured to be extendable and retractable.

As illustrated in (a) in FIG. 43, when the working vehicle 1 travels straight, the distance between the left front wheel 3LF and the right front wheel 3RF is a first distance C1F which is a reference distance, and the distance between the left rear wheel 3LB and the right rear wheel 3RB is a first distance C1B which is a reference distance. When the distance between the left front wheel 3LF and the right front wheel 3RF is the first distance C1F, the left front axle 3LFa and the right front axle 3RFa are in the not-extended state (retracted state). When the distance between the left rear wheel 3LB and the right rear wheel 3RB is the first distance C1B, the left rear axle 3LBa and the right rear axle 3RBa are in the not-extended state (retracted state).

As illustrated in (b) in FIG. 43, when the steering system 60 steers the left front wheel 3LF and the right front wheel 3RF and steers the left rear wheel 3LB and the right rear wheel 3RB, the working vehicle 1 increases the distance between the left front wheel 3LF and the right front wheel 3RF to a second distance C2F which is larger than the first distance C1F and increases distance between the left rear wheel 3LB and the right rear wheel 3RB to a second distance C2B which is larger than the first distance C1B. The increases of the distance are performed by extending the left front axle 3LFa, the right front axle 3RFa, the left rear axle 3LBa, and the right rear axle 3RBa.

With this, when the left front wheel 3LF and the right front wheel 3RF are steered and the left rear wheel 3LB and the right rear wheel 3RB are steered (see the left front wheel 3LF, the right front wheel 3RF, the left rear wheel 3LB, and the right rear wheel 3RB indicated by imaginary lines), the distance between the left front wheel 3LF and the vehicle body 2, the distance between the right front wheel 3RF and the vehicle body 2, the distance between the left rear wheel 3LB and the vehicle body 2, and the distance between the right rear wheel 3RB and the vehicle body 2 increase. Therefore, the angle through which each of the left front wheel 3LF, the right front wheel 3RF, the left rear wheel 3LB, and the right rear wheel 3RB can be steered without interfering with the vehicle body 2 increases. This makes it possible to increase the steering angle of the left front wheel 3LF, the right front wheel 3RF, the left rear wheel 3LB, and the right rear wheel 3RB.

The steering-time inter-wheel-distance-increasing operation of the variation working vehicle 1 can be performed by the foregoing method of increasing the distance between left and right wheels using a reaction force from the ground that results from changes in the orientations of the left wheel(s) and the right wheel(s) changed by the steering system 60 (see FIGS. 24 and 26). The steering-time inter-wheel-distance-increasing operation of the variation working vehicle 1 can be also performed by the foregoing method of increasing the distance between left and right wheels using a combination of (i) a reaction force from the ground that results from changes in the orientations of left and right wheels changed by the steering system 60 and (ii) actuators to move the left wheel(s) and the right wheel(s) in the vehicle body width direction (see FIGS. 28 and 30).

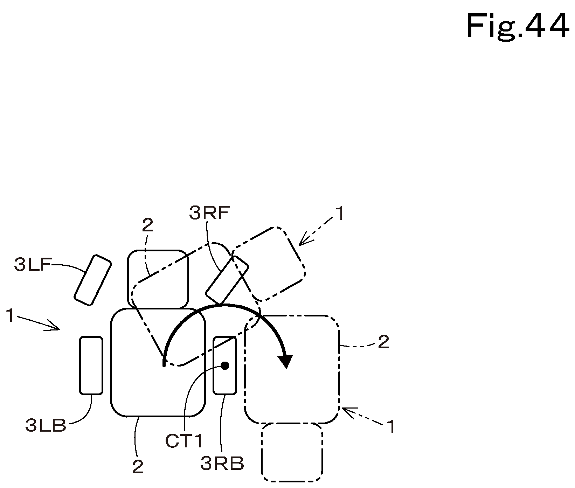

The following describes, with reference to FIGS. 44 to 46, a turning operation to cause the vehicle body 2 of the working vehicle 1 to turn. In FIGS. 44 to 46, solid lines indicate the position of the working vehicle 1 before the turn, and imaginary lines indicate position of the working vehicle 1 during or after the turn.

Although it is preferable that the working vehicle performing a turning operation described below be a working vehicle including the foregoing configuration to perform the steering-time inter-wheel-distance-increasing operation, the working vehicle may be a working vehicle not including the configuration to perform the steering-time inter-wheel-distance-increasing operation.

First, the following describes a known turning operation of a working vehicle 1. FIG. 44 is a plan view schematically illustrating the known turning operation of the working vehicle 1.

The wheels of the working vehicle 1 include steered wheels to be changed in orientation by the steering system 60 and non-steered wheels not to be changed in orientation by the steering system 60. In the case of the example in FIG. 44, the steered wheels are front wheels (left front wheel 3LF, right front wheel 3RF), and the non-steered wheels are rear wheels (left rear wheel 3LB, right rear wheel 3RB).

In the case of the known turning operation, the orientation of each steered wheel (left front wheel 3LF, right front wheel 3RF) is changed to the direction of the turn (rightward in the case of FIG. 44), and, with the non-steered wheel (right rear wheel 3RB) that is located in the direction of the turn (right side) locked by a brake (not allowed to rotate), the other wheels (left front wheel 3LF, right front wheel 3RF, left rear wheel 3LB) are rotated. With this, the vehicle body 2 turns about the locked non-steered wheel (right rear wheel 3RB).

In the case of the known turning operation, the center of the locked non-steered wheel (right rear wheel 3RB) is a turning center CT1. That is, the locked non-steered wheel does not travel, and turns in place about an axis extending in the up-down direction. Therefore, the ground contacted by the locked non-steered wheel is significantly scraped away, leaving the surface rough. This also makes the turning radius relatively large as illustrated by arrow R1.

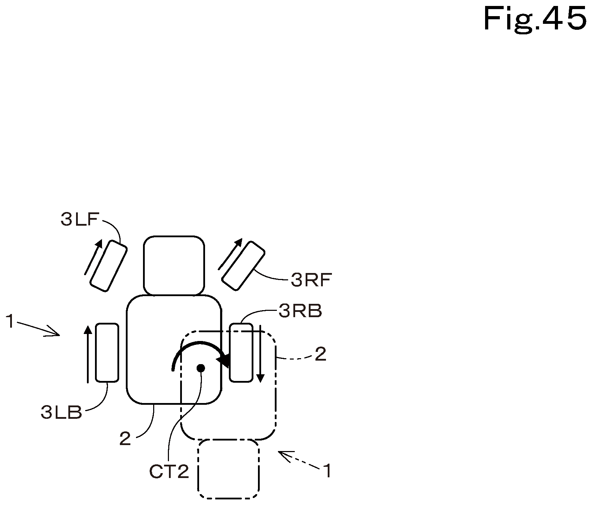

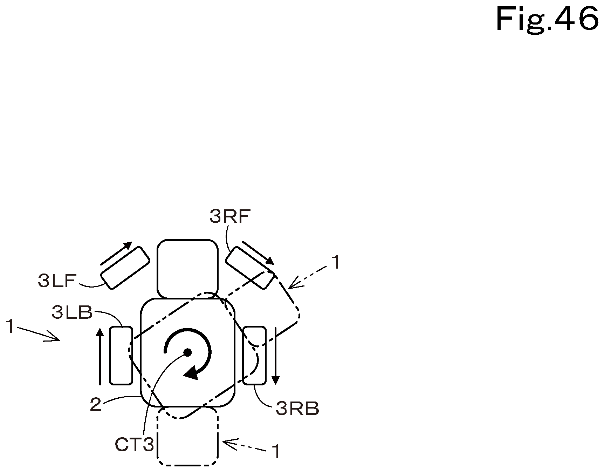

Next, the following describes examples (first example, second example) of the turning operation of the working vehicle 1 to solve the above-described issues. FIG. 45 is a plan view schematically illustrating the first example of the turning operation. FIG. 46 is a plan view schematically illustrating the second example of the turning operation. In the turning operations of the first example and the second example, when the vehicle body 2 turns, the orientations of the steered wheels are changed by the steering system 60, and one of the left and right wheels of the non-steered wheels that is located in the direction of the turn and the other of the non-steered wheel that is located not in the direction of the turn are caused to rotate in opposite directions to each other by the power supply apparatus 4.

First, the following describes the first example of the turning operation with reference to FIG. 45. The wheels of the working vehicle 1 include the steered wheels to be changed in orientation by the steering system 60 when the vehicle body 2 turns and the non-steered wheels not to be changed in orientation by the steering system 60 when the vehicle body 2 turns. In the case of the example illustrated in FIG. 45, the steered wheels are front wheels (left front wheel 3LF, right front wheel 3RF), and the non-steered wheels are rear wheels (left rear wheel 3LB, right rear wheel 3RB).

In the case of the turning operation of the first example, the orientations of the steered wheels (left front wheel 3LF, right front wheel 3RF) are changed by the steering system 60 toward the direction of the turn (rightward in the case of FIG. 45), and one (right rear wheel 3RB) of the left rear wheel 3LB and the right rear wheel 3RB of the non-steered wheels that is located in the direction of the turn (right side in the case of FIG. 45) and the other (left rear wheel 3LB) of the non-steered wheels that is located not in the direction of the turn (left side in the case of FIG. 45) are caused to rotate in opposite directions to each other by the power supply apparatus 4 (motor 5).

Specifically, when the vehicle body 2 turns, (i) the non-steered wheel (right rear wheel 3RB) that is located in the direction of the turn and (ii) the non-steered wheel (left rear wheel 3LB) that is located not in the direction of the turn and the steered wheels (left front wheel 3LF, right front wheel 3RF), are caused to rotate in opposite directions to each other by the power supply apparatus 4 (motor 5). That is, the direction of rotation of the non-steered wheel (right rear wheel 3RB) that is located in the direction of the turn is the opposite direction to the direction of rotation of the other three wheels. In the case of the example illustrated in FIG. 45, the non-steered wheel (right rear wheel 3RB) that is located in the direction of the turn rotates in the rearward direction (direction for rearward travel), and the other three wheels rotate in the forward direction (direction for forward travel).

With this, the vehicle body 2 turns about a turning center CT2 which is a position between the non-steered wheel (right rear wheel 3RB) that is located in the direction of the turn and the non-steered wheel (left rear wheel 3LB) that is located not in the direction of the turn and which is closer to the non-steered wheel (right rear wheel 3RB) located in the direction of the turn than to the non-steered wheel (left rear wheel 3LB).

In the case of the turning operation of the first example, since the non-steered wheel (right rear wheel 3RB) that is located in the direction of the turn and the turning center CT2 do not coincide in position (do not overlap each other in plan view), the ground contacted by the non-steered wheel is not scraped away significantly during the turn, making it possible to prevent or reduce the roughening of the ground surface. Furthermore, since the turning center CT2 is at a position between the non-steered wheel that is located in the direction of the turn and the non-steered wheel that is located not in the direction of the turn, it is possible to reduce the turning radius.

The above-described turning operation of the first example can be used, for example, in the case where the vehicle performs work on a plurality of ridges arranged in an agricultural field, when the vehicle performs work while traveling along a first ridge, passes through the first ridge, and then travels toward a second ridge next to the first ridge. In this case, with the turning operation of the first example, it is possible to reduce the turning radius, and therefore it is possible for the vehicle to travel toward the second ridge easily and quickly after passing the first ridge even if the distance between the first ridge and the second ridge is small.

In the above-described turning operation of the first example, the steered wheels may be rear wheels (left rear wheel 3LB, right rear wheel 3RB), and the non-steered wheels may be front wheels (left front wheel 3LF, right front wheel 3RF). In this case, the orientations of the steered wheels (left rear wheel 3LB, right rear wheel 3RB) are changed by the steering system 60 toward the direction of the turn, and one (e.g., right front wheel 3RF) of the left front wheel 3LF and the right front wheel 3RF of the non-steered wheels that is located in the direction of the turn and the other (e.g., left front wheel 3LF) of the non-steered wheels that is located not in the direction of the turn are caused to rotate in opposite directions to each other. In so doing, the direction of rotation of the non-steered wheel that is located in the direction of the turn (e.g., right front wheel 3RF) is opposite to the direction of rotation of the steered wheels (left rear wheel 3LB, right rear wheel 3RB).

Specifically, when the vehicle body 2 turns, (i) the non-steered wheel (e.g., right front wheel 3RF) that is located in the direction of the turn and (ii) the non-steered wheel (left front wheel 3LF) that is located not in the direction of the turn and the steered wheels (left rear wheel 3LB, right rear wheel 3RB), are caused to rotate in opposite directions to each other by the power supply apparatus 4 (motor 5). That is, the direction of rotation of the non-steered wheel (e.g., right front wheel 3RF) that is located in the direction of the turn is opposite to the direction of rotation of the other three wheels.

With this, the vehicle body 2 turns about the turning center which is a position between the non-steered wheel (e.g., right front wheel 3RF) that is located in the direction of the turn and the non-steered wheel (e.g., left front wheel 3LF) that is located not in the direction of the turn and which is closer to the non-steered wheel (e.g., right front wheel 3RF) that is located in the direction of the turn than to the non-steered wheel (e.g., left front wheel 3LF).

Next, the following describes the second example of the turning operation with reference to FIG. 46. The wheels of the working vehicle 1 include steered wheels to be changed in orientation by the steering system 60 when the vehicle body 2 turns and non-steered wheels not to be changed in orientation by the steering system 60 when the vehicle body 2 turns. In the case of the example illustrated in FIG. 46, the steered wheels are the front wheels (left front wheel 3LF, right front wheel 3RF), and the non-steered wheels are the rear wheels (left rear wheel 3LB, right rear wheel 3RB).

In the case of the turning operation of the first example, the orientations of the steered wheels (left front wheel 3LF, right front wheel 3RF) are changed by the steering system 60 toward the direction of the turn (rightward in the case of FIG. 45), and one (right rear wheel 3RB) of the left rear wheel 3LB and the right rear wheel 3RB of the non-steered wheels that is located in the direction of the turn and the other (left rear wheel 3LB) of the non-steered wheels that is located not in the direction of the turn (left side in the case of FIG. 45) are caused to rotate in opposite directions to each other by the power supply apparatus 4 (motor 5).

In the case of the turning operation of the second example, when the vehicle body 2 turns, the left front wheel 3LF and the right front wheel 3RF which are the steered wheels are steered in opposite directions to each other by the steering system 60, and the non-steered wheel (right rear wheel 3RB) that is located in the direction of the turn (right side in the case of FIG. 46) and the non-steered wheel (left rear wheel 3LB) that is located not in the direction of the turn (left side in the case of FIG. 46) are caused to rotate in opposite directions to each other by the power supply apparatus 4 (motor 5). Furthermore, the left wheels (left front wheel 3LF, left rear wheel 3LB) and the right wheels (right front wheel 3RF, right rear wheel 3RB) are caused to rotate in opposite directions to each other by the power supply apparatus 4 (motor 5).

With this, (i) the non-steered wheel (right rear wheel 3RB) and the steered wheel (right front wheel 3RF) that are located in the direction of the turn and (ii) the non-steered wheel (left rear wheel 3LB) and the steered wheel (left front wheel 3LF) that are located not in the direction of the turn rotate in opposite directions to each other. In the case of the example illustrated in FIG. 46, the non-steered wheel (right rear wheel 3RB) and the steered wheel (right front wheel 3RF) that are located in the direction of the turn rotate in the rearward direction (direction for rearward travel), and the non-steered wheel (left rear wheel 3LB) and the steered wheel (left front wheel 3LF) that are located not in the direction of the turn rotate in the forward direction (direction for forward travel).

In the above-described turning operation, the left front wheel 3LF and the right front wheel 3RF, which are the steered wheels, are steered in opposite directions to each other by the steering system 60 such that the side surface of each wheel faces toward a turning center CT3 of the vehicle body 2. Specifically, the steered wheel (right front wheel 3RF) that is located in the direction of the turn (right side in the case of FIG. 46) is steered toward the opposite direction (left) to the direction of the turn, and the steered wheel (left front wheel 3LF) that is located not in the direction of the turn (left side in the case of FIG. 46) is steered toward direction of the turn (right). In the case of the example illustrated in FIG. 46, since the vehicle is to turn right, the left front wheel 3LF is steered right and the right front wheel 3RF is steered left.

With this, the vehicle body 2 turns about the turning center CT3 which is a midpoint between the non-steered wheel (right rear wheel 3RB) that is located in the direction of the turn and the non-steered wheel (left rear wheel 3LB) that is located not in the direction of the turn. The turning center CT3 is positioned at the center of the vehicle body 2 in the width direction.

In the case of the turning operation of the second example, since the non-steered wheel (right rear wheel 3RB) that is located in the direction of the turn and the turning center CT3 do not coincide in position (do not overlap each other in plan view), the ground contacted by the non-steered wheel is not scraped away significantly during the turn, making it possible to prevent or reduce the roughening of the ground surface. It is also possible for the vehicle to turn in place about the turning center CT3 that is the center of the vehicle body 2 in the width direction. This makes it possible for the vehicle to turn with a smaller radius than the turning operation of the first example.

The above-described turning operation of the second example can be used, for example, in the case where the vehicle performs work on a plurality of ridges arranged in an agricultural field, when the vehicle performs work while traveling along a first ridge, passes the first ridge, and then returns to the first ridge and performs work again. In this case, with the turning operation of the second example, it is possible to cause the vehicle body 2 to turn in place toward the opposite direction, making it easy to travel toward the first ridge again after passing through the first ridge.

In the above-described turning operation of the second example, the steered wheels may be rear wheels (left rear wheel 3LB, right rear wheel 3RB), and the non-steered wheels may be front wheels (left front wheel 3LF, right front wheel 3RF). In this case, when the vehicle body 2 turns, the left rear wheel 3LB and the right rear wheel 3RB which are the steered wheels are steered in opposite directions to each other by the steering system 60, and the non-steered wheel (right front wheel 3RF) that is located in the direction of the turn (e.g., right side) and the non-steered wheel (left front wheel 3LF) that is located not in the direction of the turn (e.g., left side) are caused to rotate in opposite directions to each other by the power supply apparatus 4 (motor 5). Furthermore, the left wheels (left front wheel 3LF, left rear wheel 3LB) and the right wheels (right front wheel 3RF, right rear wheel 3RB) are caused to rotate in opposite directions to each other by the power supply apparatus 4 (motor 5). With this, (i) the non-steered wheel (right front wheel 3RF) and the steered wheel (right rear wheel 3RB) that are located in the direction of the turn and (ii) the non-steered wheel (left front wheel 3LF) and the steered wheel (left rear wheel 3LB) that are located not in the direction of the turn rotate in opposite directions to each other.

In the above-described turning operation, the left rear wheel 3LB and the right rear wheel 3RB, which are the steered wheels, are steered in opposite directions to each other by the steering system 60 such that the side surface of each wheel faces toward the turning center of the vehicle body 2. Specifically, the steered wheel (right rear wheel 3RB) that is located in the direction of the turn (located on the right side) is steered toward the opposite direction (left) to the direction of the turn, and the steered wheel (left rear wheel 3LB) that is located not in the direction of the turn (located on the left side) is steered toward the direction of the turn (right). With this, the vehicle body 2 turns about the turning center at a midpoint between the non-steered wheel (right front wheel 3RF) that is located in the direction of the turn and the non-steered wheel (left front wheel 3LF) that is located not in the direction of the turn.

The turning operations of the first example and the second example may be performed with an increase in the distance between left and right steered wheels using the above-described steering-time inter-wheel-distance-increasing operation, or may be performed without the steering-time inter-wheel-distance-increasing operation (without increasing the distance between left and right wheels). In the case where the turning operations of the first example and the second example are performed with an increase in the distance between left and right wheels using the steering-time inter-wheel-distance-increasing operation, it is possible to increase the steering angle of the steered wheels, making it possible to reliably reduce the turning radius.

The turning operations of the first example and the second example can be performed by the controller 15 controlling the operations of the steering system 60 and the travel motor(s) 5. The controller 15 includes a turning operation controller 15C (see FIG. 7) to perform the turning operations of the first example and the second example by controlling the operations of the steering system 60 and the travel motor(s) 5. When the user performs a predetermined operation (e.g., an operation using the manual operator 101), control is performed by the turning operation controller 15C, and the turning operation of the first example or the second example is performed.

In the case where the working vehicle 1 moves (travels) based on a predetermined travel route based on control performed by the automatic-operation controller 15A, turning area(s) and required turning radius are determined in advance. Thus, the controller 15 (automatic-operation controller 15A) is configured or programmed to perform the above-described turning operation by controlling the operations of the steering system 60 and the travel motor(s) 5 based on information relating to the turning area(s) and the turning radius included in the information relating to the travel route predetermined and stored in the storage unit. The controller 15 (automatic-operation controller 15A) automatic-operation controller 15A is also configured or programmed to perform the foregoing steering-time inter-wheel-distance-increasing operation by controlling the operations of the steering system 60 and the distance changing system 80 based on the information relating to the turning area(s) and the turning radius included in the information relating to the travel route predetermined and stored in the storage unit.

Preferred example embodiments of the present invention provide working vehicles 1 described in the following items.

(Item 1) A working vehicle 1 including a vehicle body 2, wheels 30 including a left wheel provided leftward of the vehicle body 2 and a right wheel provided rightward of the vehicle body 2, a steering system 60 to change orientations of the wheels 30, and a distance changing system 80 to increase a distance between the left wheel and the right wheel when steering is performed by the steering system 60.

With the working vehicle 1 according to item 1, since the distance between left and right wheels is increased when steering is performed, it is possible to increase the steering angle. This makes it possible to reduce the turning radius of the vehicle body 2.

(Item 2) The working vehicle 1 according to item 1, wherein the left wheel includes a left front wheel 3LF and a left rear wheel 3LB, the right wheel includes a right front wheel 3RF and a right rear wheel 3RB, the steering system 60 is configured to change orientations of the left front wheel 3LF and the right front wheel 3RF when performing the steering, and the distance changing system 80 is configured to increase a distance between the left front wheel 3LF and the right front wheel 3RF when the steering is performed by the steering system 60.

With the working vehicle 1 according to item 2, it is possible to increase the steering angle of the left front wheel 3LF and the right front wheel 3RF. This makes it possible to reduce the turning radius of the vehicle body 2 when steering the left front wheel 3LF and the right front wheel 3RF to cause the working vehicle 1 to turn.

(Item 3) The working vehicle 1 according to item 1, wherein the left wheel includes a left front wheel 3LF and a left rear wheel 3LB, the right wheel includes a right front wheel 3RF and a right rear wheel 3RB, the steering system 60 is configured to change orientations of the left rear wheel 3LB and the right rear wheel 3RB when performing the steering, and the distance changing system 80 is configured to increase a distance between the left rear wheel 3LB and the right rear wheel 3RB when the steering is performed by the steering system 60.

With the working vehicle 1 according to item 3, it is possible to increase the steering angle of the left rear wheel 3LB and the right rear wheel 3RB. This makes it possible to reduce the turning radius of the vehicle body 2 when steering the left rear wheel 3LB and the right rear wheel 3RB to cause the vehicle body 2 to turn.

(Item 4) The working vehicle 1 according to any one of items 1 to 3, wherein the steering system 60 is configured to change the orientations of the left front wheel 3LF and the right front wheel 3RF and the orientations of the left rear wheel 3LB and the right rear wheel 3RB when performing the steering, and the distance changing system 80 is configured to, when the steering is performed by the steering system 60, increase the distance between the left front wheel 3LF and the right front wheel 3RF and the distance between the left rear wheel 3LB and the right rear wheel 3RB.

With the working vehicle 1 according to item 4, it is possible to increase the steering angle of the left front wheel 3LF, the right front wheel 3RF, the left rear wheel 3LB, and the right rear wheel 3RB. This makes it possible to reduce the turning radius of the vehicle body 2 when steering the left front wheel 3LF, the right front wheel 3RF, the left rear wheel 3LB, and the right rear wheel 3RB to cause the vehicle body 2 to turn.

(Item 5) The working vehicle 1 according to any one of items 1 to 4, wherein the steering system 60 is configured to, when the vehicle body 2 travels, change orientations of the left wheel and the right wheel such that a front portion of each of the left and right wheels in a direction of travel moves away from the vehicle body 2, and the distance changing system 80 is configured to increase the distance using a reaction force from a ground that results from changes in the orientations of the left wheel and the right wheel changed by the steering system 60.

With the working vehicle 1 according to item 5, it is possible to increase the distance between left and right wheels using a reaction force from the ground, making it possible to eliminate the need for actuator(s) to increase the distance between left and right wheels or possible to reduce the size of the actuator(s).

(Item 6) The working vehicle 1 according to item 5, wherein the distance changing system 80 includes at least one actuator (left cylinder 81L, right cylinder 81R) to move the left wheel and the right wheel in a vehicle body width direction, and is configured to increase the distance using the reaction force and a force of the at least one actuator.

With the working vehicle 1 according to item 6, it is possible to increase the distance between left and right wheels using a combination of a reaction force from the ground and the actuator(s). This makes it possible to increase the distance between left and right wheels with a smaller force than the case using only the actuator(s). It is also possible to increase the distance between left and right wheels reliably compared to the case using only a reaction force from the ground.

(Item 7) The working vehicle 1 according to any one of items 1 to 6, further including a power supply apparatus 4 to generate power to rotate the wheels, wherein the wheels include steered wheels to be changed in orientation by the steering system 60 when the vehicle body 2 turns and non-steered wheels not to be changed in orientation by the steering system 60 when the vehicle body 2 turns, and the steering system 60 and the power supply apparatus 4 are configured such that, when the vehicle body 2 turns, the orientations of the steered wheels are changed by the steering system 60 and one of left and right wheels of the non-steered wheels that is located in a direction of a turn and the other of the non-steered wheels that is located not in the direction of the turn are caused to rotate in opposite directions to each other by the power supply apparatus 4.

With the working vehicle 1 according to item 7, since the non-steered wheel that is located in the direction of the turn and the turning center do not coincide in position (do not overlap each other in plan view), the ground contacted by the non-steered wheel is not scraped away significantly during the turn, making it possible to prevent or reduce the roughening of the ground surface. Furthermore, since the turning center is at a position between the non-steered wheel that is located in the direction of the turn and the non-steered wheel that is located not in the direction of the turn, it is possible to reduce the turning radius.

(Item 8) The working vehicle 1 according to item 7, wherein the power supply apparatus 4 is configured such that, when the vehicle body 2 turns, (i) the one of the non-steered wheels that is located in the direction of the turn and (ii) the other of the non-steered wheels that is located not in the direction of the turn and the steered wheels, are caused to rotate in opposite directions to each other by the power supply apparatus 4.

With the working vehicle 1 according to item 8, since (i) the one of the non-steered wheels that is located in the direction of the turn and (ii) the other of the non-steered wheels that is located not in the direction of the turn and the steered wheels are rotated in opposite directions to each other, it is possible to reduce the turning radius more reliably.

(Item 9) The working vehicle 1 according to item 7, wherein the steering system 60 and the power supply apparatus 4 are configured such that, when the vehicle body 2 turns, the left and right wheels which are the steered wheels are steered in opposite directions to each other by the steering system 60, and the one of the non-steered wheels that is located in the direction of the turn and the other of the non-steered wheels that is located not in the direction of the turn are caused to rotate in opposite directions to each other by the power supply apparatus 4.

With the working vehicle 1 according to item 9, since the non-steered wheel that is located in the direction of the turn and the turning center CT3 do not coincide in position (do not overlap each other in plan view), the ground contacted by the non-steered wheel is not scraped away significantly during the turn, making it possible to prevent or reduce the roughening of the ground surface. It is also possible for the vehicle to turn in place about the turning center CT3 that is the center of the vehicle body 2 in the width direction, and thus possible to further reduce the turning radius.

(Item 10) The working vehicle 1 according to item 9, wherein the steering system 60 is configured such that, when the vehicle body 2 turns, the left and right wheels which are the steered wheels are steered in opposite directions to each other by the steering system 60 such that a side surface of each of the left and right wheels faces toward a turning center of the vehicle body 2.

With the working vehicle 1 according to item 10, when the vehicle body 2 turns, the left and right wheels which are the steered wheels are steered in opposite directions to each other such that a side surface of each of the left and right wheels faces toward the turning center of the vehicle body 2. This makes it possible to reduce the turning radius more reliably.

(Item 11) The working vehicle 1 according to item 9 or 10, wherein the power supply apparatus 4 is configured such that, when the vehicle body 2 turns, the left wheel and the right wheel are caused to rotate in opposite directions to each other by the power supply apparatus 4.

With the working vehicle 1 according to item 11, when the vehicle body 2 turns, the left wheel and the right wheel are caused to rotate in opposite directions to each other by the power supply apparatus 4. This makes it possible to reduce the turning radius more reliably.

While embodiments of the present invention have been described above, it is to be understood that the embodiments disclosed herein are considered as examples in all aspects and is not considered as limitations. The scope of the present invention is to be determined not by the foregoing description but by the claims, and is intended to include all variations and modifications within the scope of the claims and their equivalents.

### Reference Signs List

- 1: Working vehicle
- 2: Vehicle body
- 3LF: Left front wheel
- 3LB: Left rear wheel
- 3RF: Right front wheel
- 3RB: Right rear wheel
- 4: Power supply apparatus
- 30: Wheel(s)
- 60: Steering system (mechanism)
- 80: Distance changing mechanism
- 81L: Left cylinder (actuator)
- 81R: Right cylinder (actuator)

## Claims

1. A working vehicle comprising:
a vehicle body;
wheels including a left wheel provided leftward of the vehicle body and a right wheel provided rightward of the vehicle body;
a steering system to change orientations of the wheels; and
a distance changing system to increase a distance between the left wheel and the right wheel when steering is performed by the steering system.

2. The working vehicle according to claim 1, wherein
the left wheel includes a left front wheel and a left rear wheel;
the right wheel includes a right front wheel and a right rear wheel;
the steering system is configured to change orientations of the left front wheel and the right front wheel when performing the steering; and
the distance changing system is configured to increase a distance between the left front wheel and the right front wheel when the steering is performed by the steering system.

3. The working vehicle according to claim 1, wherein
the left wheel includes a left front wheel and a left rear wheel;
the right wheel includes a right front wheel and a right rear wheel;
the steering system is configured to change orientations of the left rear wheel and the right rear wheel when performing the steering; and
the distance changing system is configured to increase a distance between the left rear wheel and the right rear wheel when the steering is performed by the steering system.

4. The working vehicle according to claim 2 or 3, wherein
the steering system is configured to change the orientations of the left front wheel and the right front wheel and the orientations of the left rear wheel and the right rear wheel when performing the steering; and
the distance changing system is configured to, when the steering is performed by the steering system, increase the distance between the left front wheel and the right front wheel and the distance between the left rear wheel and the right rear wheel.

5. The working vehicle according to claim 1, wherein
the steering system is configured to, when the vehicle body travels, change orientations of the left wheel and the right wheel such that a front portion of each of the left and right wheels in a direction of travel moves away from the vehicle body; and
the distance changing system is configured to increase the distance using a reaction force from a ground that results from changes in the orientations of the left wheel and the right wheel changed by the steering system.

6. The working vehicle according to claim 5, wherein
the distance changing system includes at least one actuator to move the left wheel and the right wheel in a vehicle body width direction, and is configured to increase the distance using the reaction force and a force of the at least one actuator.

7. The working vehicle according to claim 1, further comprising a power supply apparatus to generate power to rotate the wheels; wherein
the wheels include steered wheels to be changed in orientation by the steering system when the vehicle body turns and non-steered wheels not to be changed in orientation by the steering system when the vehicle body turns; and
the steering system and the power supply apparatus are configured such that, when the vehicle body turns, the orientations of the steered wheels are changed by the steering system and one of left and right wheels of the non-steered wheels that is located in a direction of a turn and the other of the non-steered wheels that is located not in the direction of the turn are caused to rotate in opposite directions to each other by the power supply apparatus.

8. The working vehicle according to claim 7, wherein the power supply apparatus is configured such that, when the vehicle body turns, (i) the one of the non-steered wheels that is located in the direction of the turn and (ii) the other of the non-steered wheels that is located not in the direction of the turn and the steered wheels, are caused to rotate in opposite directions to each other by the power supply apparatus.

9. The working vehicle according to claim 7, wherein
the steering system and the power supply apparatus are configured such that, when the vehicle body turns, the left and right wheels which are the steered wheels are steered in opposite directions to each other by the steering system, and the one of the non-steered wheels that is located in the direction of the turn and the other of the non-steered wheels that is located not in the direction of the turn are caused to rotate in opposite directions to each other by the power supply apparatus.

10. The working vehicle according to claim 9, wherein the steering system is configured such that, when the vehicle body turns, the left and right wheels which are the steered wheels are steered in opposite directions to each other by the steering system such that a side surface of each of the left and right wheels faces toward a turning center of the vehicle body.

11. The working vehicle according to claim 9 or 10, wherein the power supply apparatus is configured such that, when the vehicle body turns, the left wheel and the right wheel are caused to rotate in opposite directions to each other by the power supply apparatus.
